(19) **Europäisches Patentamt / European Patent Office / Office européen des brevets**

(11) **EP 2 754 566 B1**

(12) **EUROPEAN PATENT SPECIFICATION**

(45) Date of publication and mention of the grant of the patent:
**01.02.2017 Bulletin 2017/05**

(21) Application number: **12832333.4**

(22) Date of filing: **09.07.2012**

(51) Int Cl.:
*B60C 1/00* (2006.01)  *B60C 5/14* (2006.01)
*B29C 47/00* (2006.01)  *B29C 47/06* (2006.01)
*B29C 47/38* (2006.01)  *B29C 47/46* (2006.01)
*B29D 30/30* (2006.01)  *C08L 53/00* (2006.01)
*B29L 30/00* (2006.01)  *B32B 25/04* (2006.01)
*B32B 3/06* (2006.01)

(86) International application number:
**PCT/JP2012/067450**

(87) International publication number:
**WO 2013/038787 (21.03.2013 Gazette 2013/12)**

(54) **STRIP, PRODUCTION METHOD FOR SAME AND PRODUCTION METHOD FOR PNEUMATIC TIRE**

STREIFEN, HERSTELLUNGSVERFAHREN DAFÜR UND HERSTELLUNGSVERFAHREN FÜR LUFTREIFEN

BANDE, SON PROCÉDÉ DE FABRICATION ET SON PROCÉDÉ DE FABRICATION POUR UN PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 16.09.2011 JP 2011203217
27.09.2011 JP 2011210970
14.10.2011 JP 2011226749
21.10.2011 JP 2011231675

(43) Date of publication of application:
**16.07.2014 Bulletin 2014/29**

(73) Proprietor: **Sumitomo Rubber Industries, Ltd.**
**Kobe-shi, Hyogo 651-0072 (JP)**

(72) Inventors:
• **IMOTO, Yoji**
  **Kobe-shi**
  **Hyogo 651-0072 (JP)**
• **SUGIMOTO, Mutsuki**
  **Kobe-shi**
  **Hyogo 651-0072 (JP)**

(74) Representative: **Manitz, Finsterwald & Partner GbR**
**Martin-Greif-Strasse 1**
**80336 München (DE)**

(56) References cited:
JP-A- 2000 254 980  JP-A- 2008 127 443
JP-A- 2010 195 969  JP-A- 2011 051 320
JP-A- 2011 057 788  JP-A- 2011 074 309

**Description**

TECHNICAL FIELD

The present invention relates to a strip for an inner liner used for a pneumatic tire, a method for manufacturing the strip, and a method for manufacturing a pneumatic tire including the strip.

BACKGROUND ART

In recent years, in response to strong social demands for low fuel consumption of vehicles, weight reduction of tires has been sought. Among tire members, weight reduction and the like of an inner liner also have begun. The inner liner is disposed inwardly in a tire, and has a function of reducing an amount of leakage of air from inside to outside of the pneumatic tire.

PTD 1 (Japanese Patent Laying-Open No. 2007-291256) proposes, as a pneumatic tire that can simultaneously realize suppression of air pressure drop, improvement in durability and improvement in fuel efficiency, a pneumatic tire using a rubber composition for an inner liner, containing at least an ethylene-vinyl alcohol copolymer within the range of 15 parts by mass to 30 parts by mass relative to 100 parts by mass of a rubber component composed of a natural rubber and/or a synthetic rubber in an inner liner layer. However, the technique of PTD 1 leaves room for improvement in respect of weight saving of tires since a rubber sheet using the rubber composition has a thickness of 1 mm.

PTD 2 (Japanese Patent Laying-Open No. 9-165469) proposes forming an inner liner layer by using nylon of low air permeability to improve adhesive property with the tire inside or a carcass layer which is a rubber composition. However, the technique of PTD 2 has a problem that a rubber cement composed of a rubber composition must be bonded after subjecting a nylon film to an RFL treatment so as to form a nylon film layer, resulting in complicated steps. Furthermore, a bladder is expanded from the inside of an unvulcanized tire in a vulcanization step, and nylon of the inner liner layer will come into contact with the bladder in a heated state. Thus, the inner liner will be stuck and adhered to the bladder to cause damage thereon.

The thermoplastic elastomer has a smaller thickness than that of a butyl-based rubber and shows high air permeation resistance, but is inferior to the butyl-based rubber in vulcanization adhesion strength with an insulation or a carcass rubber adjacent to the inner liner. When an inner liner has low vulcanization adhesion strength, a so-called "air-in phenomenon" in which air enters between the inner liner and the insulation or the carcass to cause multiple small air bubbles. This phenomenon gives a user an impression of bad appearance because of such small spots in the tire. Further, air bubbles may cause the inner liner to be detached from the insulation or carcass during running, resulting in cracks in the inner liner to decrease a tire internal pressure.

PTD 3 (Japanese Patent Laying-Open No. 2010-13646) proposes using, as a tackifier, a petroleum resin or a terpene resin for a SIB, which is a thermoplastic elastomer, to improve adhesion strength. However, flection cracking resistance is decreased disadvantageously since a polyamide-based polymer is blended in addition to the SIBS.

PTD 4 (Japanese Patent Laying-Open No. 2010-100675) proposes using, as a tackifier, a natural rosin, terpene, a coumarone-indene resin, a petroleum resin, an alkylphenol resin, or the like in a blend of a polymer capable of cross-linking with the SIBS by means of sulfur, to improve adhesive property of a carcass ply rubber.

However, with the technique of blending 10 parts by weight to 300 parts by weight of the polymer that can be vulcanized with sulfur relative to 100 parts by weight of the SIBS, if the polymer that can be vulcanized with sulfur is less than or equal to 100 parts by weight, the SIBS serves as a matrix (sea portion) and the polymer that can be vulcanized with sulfur serves as a domain structure (island portion). Accordingly, adhesion strength is not improved at a contact interface with the carcass rubber. Further, if the polymer capable of cross-linking with sulfur is more than or equal to 100 parts by weight, gas barrier property is decreased as to rubbers except the butyl rubber and adhesion strength is decreased as to the butyl rubber. Moreover, depending on a polymer to be blended, viscosity becomes high, with the result that a film having a thickness of less than or equal to 600 $\mu$m cannot be fabricated, disadvantageously.

In order to achieve weight reduction of a tire, it has been proposed to use a film made of a material including thermoplastic resin. However, when a tire is manufactured using an inner liner of thin thermoplastic resin, the inner liner partially becomes too thin due to pressure in a vulcanization step, with the result that the finishing gauge of the inner liner in the resulting tire product becomes thinner than the designed gauge. In the thin portion of the inner liner thus finished, a phenomenon (open thread) in which a carcass cord looks to stand out takes place, thus giving a user an impression of bad inner appearance. In addition, when the inner liner is thin, gas barrier property becomes partially bad to decrease tire internal pressure, with the result that the tire may burst in the worst case.

Meanwhile, during traveling with the tire, large shear strain acts on a vicinity of a shoulder portion in the inner liner. When the material including the thermoplastic resin is used as the inner liner, this shear strain is likely to cause detachment at an adhesion interface between the inner liner and the carcass ply, with the result that air leakage takes place from the tire, disadvantageously.

In PTD 5 (International Publication No. WO2008/029781), a tire is manufactured using a strip of a film layer stack in which a thermoplastic resin and a thermoplastic elastomer have been blended. With the layer stack, gas barrier property and adhesive property can be improved, whereby bonding can be achieved between portions of the ribbon-shaped strip. However, in this technique, gauge is constant in a non-vulcanized raw cover of film layer stack. Hence, when the gauge is thinned, a buttress portion or the like in the finished tire after vulcanization may become thin.

PTD 6 (Japanese Patent Laying-Open No. 2009-220460) discloses a method for manufacturing an inner liner material by extrusion molding a thermoplastic elastomer composition in which a thermoplastic resin constitutes a sea component and a rubber constitutes an island component into a sheet shape through an extrusion mouthpiece, wherein the extrusion mouthpiece has a mouthpiece slit having a thick extrusion portion in cross section between the central part of the slit and opposite ends of the slit and has a ratio (%) of thickness increment $\Delta t$ with respect to length $\Delta l$ of a thickness changing portion in the slit longitudinal direction is set at 0.01 to 10%. With this structure, it is intended to obtain characteristics of enhanced effect of preventing air leakage and of unlikeliness to be detached.

However, the size of the extrusion die is difficult to change, which imposes limits on the size of tires to be manufactured. Even if several types of extrusion dies are prepared, it will take time for stage changing at the time of size changing, which decreases productivity.

PTD 7 (Japanese Patent Laying-Open No. 2000-254980) discloses sequentially winding a ribbon-shaped unvulcanized rubber strip on a cylindrical drum, thereby forming a rubber component into a contour close to a desired finished sectional shape.

Conventionally, an inner liner used for a pneumatic tire is obtained in general by continuously extrusion molding into a predetermined finished sectional shape from a rubber extruder or the like. The finished sectional shape is determined by a mouthpiece provided at a head part of the rubber extruder. In the conventional method for extrusion molding into a finished sectional shape, the sectional size of a rubber component is large, so that a large size rubber extruder needs to be used. As a result, a production line cannot be reduced in size. Moreover, to solve problems of deteriorated productivity in small quantity, large variety production and the like, various types of mouthpieces should be prepared depending on the types of tire and the like, and besides, exchanging and adjusting operations of the mouthpieces and the like are required every time the type of tire to be manufactured is changed.

However, when forming a tire component by a ribbon-shaped rubber strip, workability is disadvantageous due to tackiness between rubber compositions and the rubber component formed of the rubber strip deforms disadvantageously during storage.

PTD 8 (Japanese Patent Laying-Open No. 2010-058437) discloses a method for molding a sheet by extruding melted resin into a sheet shape from a die, holding the extruded resin sheet between a die roller and a nip roller, at least one of which has a projecting shape formed thereon, to transfer the projecting shape to the sheet, forming a cut groove therein, and cooling and hardening.

PTD 9 (Japanese Patent Laying-Open No. 9-19987) discloses a layer stack for improving adhesive property between an inner liner layer and a rubber layer. By providing adhesion layers on the opposite sides of the inner liner layer, the adhesion layers come into contact with each other at an overlapping portion of the inner liner layer and are bonded firmly by heating. Air pressure retainability is thus improved. However, these adhesion layers for overlapping in the inner liner layer will come into contact with a bladder in a heated state in a vulcanization step and will be stuck to the bladder disadvantageously.

JP 2011 051320 A describes that when a pneumatic tire is produced by using a polymer film made of an styrene-isobutylene-styrene copolymer (SIBS) as an inner liner, a halogenated rubber having high specific gravity, which has hitherto been used so as to impart air permeation resistance, such as a halogenated butyl rubber, shall not be used in order to ensure air permeation resistance by the addition of the SIBS.

JP 2011 057788 A discloses a polymer composition for an inner liner which contains styrene-isobutylene-styrene copolymer (SIBS), a polyamide based polymer and an organic derivative of clay.

JP 2008 127443 A discloses a rubber composition which includes at least 40 percent by mass of a butyl rubber /a halogenated butyl rubber and a styrene-block polymer.

CITATION LIST

PATENT DOCUMENT

PTD 1: Japanese Patent Laying-Open No. 2007-291256
PTD 2: Japanese Patent Laying-Open No. 9-165469
PTD 3: Japanese Patent Laying-Open No. 2010-13646
PTD 4: Japanese Patent Laying-Open No. 2010-100675

PTD 5: International Publication No. WO2008/029781
PTD 6: Japanese Patent Laying-Open No. 2009-220460
PTD 7: Japanese Patent Laying-Open No. 2000-254980
PTD 8: Japanese Patent Laying-Open No. 2010-058437
PTD 9: Japanese Patent Laying-Open No. 9-19987

## SUMMARY OF INVENTION

### TECHNICAL PROBLEM

The present invention provides a ribbon-shaped strip used for an inner liner, a method for manufacturing the strip, and a method for manufacturing a pneumatic tire including the strip. In general, a strip has a flat rectangular cross sectional shape. Therefore, when overlapping a ribbon-shaped strip of predetermined width to make a wider sheet, overlapping portions on the opposite ends of the strip becomes thick, so that the surface of a finished sheet has unevenness.

Therefore, a first object of the present invention is to equalize the thickness of an inner liner by providing ear portions for the ribbon-shaped strip.

A second object of the present invention is to reduce rolling resistance by weight reduction through the use of a strip obtained by blending an organic derivative of clay mineral into a thermoplastic elastomer and further to prevent the inner liner from breaking or deforming by heat and pressure of a bladder in a vulcanization step, thereby avoiding cracks in the surface and/or air remaining inside.

A third object of the present invention is to improve adhesive property between the inner liner and a carcass ply through the use of the strip obtained by blending an organic derivative of clay mineral into the thermoplastic elastomer and to reduce crack growth in connection with repeated flection deformation during traveling with the tire.

A fourth object of the present invention is to reduce rolling resistance by weight reduction through the use of a strip of a thermoplastic elastomer composition containing a thermoplastic elastomer and a styrene-maleic acid copolymer and further to prevent the inner liner from breaking or deforming by heat and pressure of a bladder in a vulcanization step, thereby avoiding cracks in the surface and/or air remaining inside.

A fifth object of the present invention is to improve adhesive property between the inner liner and the carcass ply through the use of the strip of a thermoplastic elastomer composition containing a thermoplastic elastomer and a styrene-maleic acid copolymer and to reduce crack growth in connection with repeated flection deformation during traveling with the tire.

A sixth object of the present invention is to reduce rolling resistance by reducing weight of the inner liner through the use of a mixture of a thermoplastic elastomer and at least one of a natural rubber, an isoprene rubber and a butyl rubber, as a polymer component and by vulcanizing the mixture with sulfur, and further to prevent the inner liner from breaking or deforming by heat and pressure of the bladder in the vulcanization step, thereby avoiding cracks in the surface and/or air remaining inside. A further object is to improve adhesive property between the inner liner and the carcass ply, thereby reducing crack growth due to repeated flection deformation during traveling with the tire.

A seventh object of the present invention is to reduce rolling resistance by weight reduction by adopting a strip in which an isoprene-based modified copolymer containing β-pinene in copolymer is used for a first or second layer, and further to prevent the inner liner from breaking or deforming by heat and pressure of the bladder in the vulcanization step, thereby avoiding cracks in the surface and/or air remaining inside.

An eighth object of the present invention is to improve adhesive property between the inner liner and the carcass ply by using the strip in which an isoprene-based modified copolymer containing β-pinene in copolymer is used for the first or second layer, thereby reducing crack growth due to repeated flection deformation during traveling with the tire.

### SOLUTION TO PROBLEM

The present invention is a strip of a thermoplastic elastomer composition to be wound spirally on a cylindrical drum to form an inner liner for a tire having a shape close to a finished sectional shape. The strip is composed of a layer stack of (A) a first layer made of a thermoplastic elastomer composition containing 0.1 part by mass to 50 parts by mass of an organic derivative of clay mineral relative to 100 parts by mass of an elastomer component made of a styrene-isobutylene-styrene triblock copolymer, and (B) a second layer made of a thermoplastic elastomer composition containing at least one of a styrene-isoprene-styrene triblock copolymer and a styrene-isobutylene diblock copolymer. The strip has a strip main body and ear portions disposed on opposite sides thereof. The strip main body has a thickness (T1) of 0.05 mm to 1.0 mm. The ear portions have a thickness (T2) thinner than the thickness (T1) of the strip main body and a width (W2) of 0.5 mm to 5.0 mm.

In the present invention, desirably, the styrene-isoprene-styrene triblock copolymer has a weight average molecular weight of 50,000 to 400,000 and contains a styrene component at a content of 10 percent by mass to 30 percent by mass. Desirably, the styrene-isoprene-styrene triblock copolymer has a weight average molecular weight of 100,000 to 290,000 and contains a styrene component at a content of 10 percent by mass to 30 percent by mass. Further desirably, the styrene-isobutylene diblock copolymer has a weight average molecular weight of 40,000 to 120,000 and contains a styrene component at a content of 10 percent by mass to 35 percent by mass.

In the present invention, desirably, the strip has a width (W0) of 5 mm to 40 mm, and the thickness of the ear portions of the strip is 0.02 mm to 0.5 mm. Further desirably, the first layer has a thickness of 0.05 mm to 0.6 mm, and the second layer has a thickness of 0.01 mm to 0.3 mm.

The present invention relates to a strip of a thermoplastic elastomer composition to be wound spirally on a cylindrical drum to form an inner liner for a tire having a shape close to a finished sectional shape. The strip is composed of a layer stack of a first layer made of a thermoplastic elastomer composition containing 60 percent by mass to 99.9 percent by mass of a styrene-isobutylene-styrene triblock copolymer (hereinafter, also referred to as "SIBS") and 0.5 percent by mass to 40 percent by mass of a styrene-maleic anhydride copolymer, and a second layer made of a thermoplastic elastomer composition containing at least one of a styrene-isoprene-styrene triblock copolymer (hereinafter, also referred to as "SIS") and a styrene-isobutylene-styrene triblock copolymer (hereinafter, also referred to as "SIB"). The strip has a strip main body and ear portions disposed on both sides thereof. The strip main body has a thickness (T1) of 0.05 mm to 1.0 mm. The ear portions have a thickness (T2) thinner than the thickness (T1) of the strip main body and a width (W2) of 0.5 mm to 5.0 mm.

Desirably, the styrene-isobutylene-styrene triblock copolymer has a weight average molecular weight of 50,000 to 400,000 and contains a styrene component at a content of 10 percent by mass to 30 percent by mass. Desirably, the styrene-maleic anhydride copolymer contains a styrene component and a maleic anhydride component at a molar ratio of 50/50 to 90/10, has a weight average molecular weight of 4,000 to 20,000, and further contains a styrene-maleic anhydride copolymer base resin in which the maleic anhydride component has an acid value of 50 to 600.

Moreover, the styrene-maleic anhydride copolymer can contain an ester resin of a styrene-maleic anhydride copolymer having a monoester group and a monocarboxylic acid group, the ester resin being obtained by esterification of the styrene-maleic anhydride copolymer base resin.

Furthermore, the styrene-maleic anhydride copolymer contains a styrene-maleic anhydride copolymer ammonium salt aqueous solution, which is a solution of an ammonium salt of the styrene-maleic anhydride copolymer base resin.

Desirably, the strip has a width (W0) of 5 mm to 40 mm, and the thickness (T2) of the ear portions of the strip is 0.02 mm to 0.5 mm. Desirably, the first layer has a thickness of 0.05 mm to 0.6 mm, and the second layer has a thickness of 0.01 mm to 0.3 mm.

The present invention relates to a method for manufacturing the above-described strip made of a thermoplastic elastomer composition, including the steps of (a) extruding a thermoplastic elastomer composition by an extruder having an extruder main body and an extrusion head to form a sheet having a horizontally long rectangular cross sectional shape, (b) passing the sheet between a pair of die rollers and transferring a shape of the die rollers on the sheet to form the strip having the ear portions on ends thereof, and (c) detaching the strip from the die rollers.

Further, the present invention relates to a method for manufacturing a pneumatic tire, characterized in that the strip is wound spirally on the cylindrical drum to form the inner liner, and the inner liner is disposed on an inner surface of a raw tire, and then vulcanization is performed.

The present invention relates to a strip of a polymer composition to be wound spirally on a cylindrical drum to form an inner liner for a tire having a shape close to a finished sectional shape. The strip is made of a polymer sheet of a polymer composition containing more than or equal to 0.1 part by mass and less than or equal to 5 parts by mass of sulfur relative to 100 parts by mass of a polymer component containing more than or equal to 5 percent by mass and less than or equal to 40 percent by mass of a styrene-isobutylene-styrene triblock copolymer and more than or equal to 60 percent by mass and less than or equal to 95 percent by mass of at least one kind of rubber component selected from the group consisting of a natural rubber, an isoprene rubber and a butyl rubber. The strip has a strip main body and ear portions disposed on both sides thereof. The strip main body has a thickness (T1) of 0.05 mm to 1.0 mm. The ear portions have a thickness (T2) thinner than the thickness (T1) of the strip main body and a width (W2) of 0.5 mm to 5.0 mm.

Preferably, the polymer sheet further contains more than or equal to 1 part by mass and less than or equal to 5 parts by mass of stearic acid, more than or equal to 0.1 part by mass and less than or equal to 8 parts by mass of a zinc oxide, more than or equal to 0.1 part by mass and less than or equal to 5 parts by mass of an antioxidant, and more than or equal to 0.1 part by mass and less than or equal to 5 parts by mass of a vulcanization accelerator relative to 100 parts by mass of the polymer component.

More preferably, the styrene-isobutylene-styrene triblock copolymer has a weight average molecular weight of 50,000 to 400,000 and contains a styrene unit at a content of 10 percent by mass to 30 percent by mass.

Another embodiment of the present invention relates to a strip of a polymer composition to be wound spirally on a cylindrical drum to form an inner liner for a tire having a shape close to a finished sectional shape. The strip is composed of a layer stack of a first layer of a polymer sheet of a polymer composition containing more than or equal to 0.1 part by mass and less than or equal to 5 parts by mass of sulfur relative to 100 parts by mass of a polymer component containing more than or equal to 5 percent by mass and less than or equal to 40 percent by mass of a styrene-isobutylene-styrene triblock copolymer and more than or equal to 60 percent by mass and less than or equal to 95 percent by mass of at least one kind of rubber component selected from the group consisting of a natural rubber, an isoprene rubber and a butyl rubber, and a second layer made of a thermoplastic elastomer composition. The strip has a strip main body and ear portions disposed on both sides thereof. The strip main body has a thickness (T1) of 0.05 mm to 1.0 mm. The ear portions have a thickness (T2) thinner than the thickness (T1) of the strip main body and a width (W2) of 0.5 mm to 5.0 mm.

Preferably, the second layer contains a thermoplastic elastomer containing at least one kind selected from the group consisting of a styrene-isoprene-styrene triblock copolymer, a styrene-isobutylene diblock copolymer and an epoxidized styrene-butadiene-triblock copolymer, and at least one kind of rubber component selected from the group consisting of a natural rubber, an isoprene rubber and a butyl rubber, and more than or equal to 20 percent by mass and less than or equal to 90 percent by mass of the rubber component is contained relative to the total of the thermoplastic elastomer and the rubber component.

Preferably, the strip has a width (W0) of 5 mm to 40 mm, and the thickness (T2) of the ear portions of the strip is 0.02 mm to 0.5 mm.

The present invention relates to a strip of a thermoplastic elastomer composition to be wound spirally on a cylindrical drum to form an inner liner for a tire having a shape close to a finished sectional shape. The strip is composed of a first layer disposed on the tire inside and a second layer disposed adjacent to a carcass. At least one of the first layer and the second layer is made of an elastomer composition containing, in an elastomer component, more than or equal to 10 percent by mass and less than or equal to 100 percent by mass of an isobutylene-based modified copolymer which is an isobutylene-based block copolymer formed of a polymeric block (A) mainly containing isobutylene and a polymeric block (B) mainly containing an aromatic vinyl-based compound and which contains β-pinene copolymerized in at least one block. The second layer is made of an elastomer composition containing more than or equal to 5 percent by mass and less than or equal to 80 percent by mass of said isobutylene-based modified copolymer and at least one of a styrene-isoprene-styrene block copolymer and a styrene-isobutylene block copolymer. The strip has a strip main body and ear portions disposed on both sides thereof. The strip main body has a thickness (T1) of 0.05 mm to 1.0 mm. The ear portions have a thickness (T2) thinner than the thickness (T1) of the strip main body and a width (W2) of 0.5 mm to 5.0 mm.

Preferably, the elastomer composition of the first layer contains more than or equal to 10 percent by mass and less than or equal to 100 percent by mass of the isobutylene-based modified copolymer in the elastomer component.

Preferably, the elastomer composition of the second layer contains more than or equal to 5 percent by mass and less than or equal to 80 percent by mass of the isobutylene-based modified copolymer in the elastomer component. Still preferably, the isobutylene-based modified copolymer contains β-pinene at a content of 0.5 percent by weight to 25 percent by weight.

Further preferably, the isobutylene-based modified copolymer has a weight average molecular weight Mw of 30,000 to 300,000, and a value of a molecular weight distribution (weight average molecular weight Mw/number average molecular weight Mn) is less than or equal to 1.3.

Preferably, the isobutylene-based modified copolymer contains β-pinene in a styrene block of one of a styrene-isobutylene-styrene block copolymer, a styrene-isoprene-styrene block copolymer and a styrene-isobutylene block copolymer.

Preferably, the strip has a width (W0) of 5 mm to 40 mm, and the thickness (T2) of the ear portions of the strip is 0.02 mm to 0.5 mm.

Another embodiment of the present invention relates to a method for manufacturing a pneumatic tire, characterized in that the above-described strip is wound spirally on a cylindrical drum to mold an inner liner for a tire having a shape close to a finished sectional shape to be disposed on an inner surface of a raw tire, and the raw tire is vulcanized.

Still another embodiment of the present invention relates to the above-described method for manufacturing a pneumatic tire, wherein the strip is manufactured by the steps including (a) extruding a thermoplastic elastomer composition by an extruder having an extruder main body and an extrusion head to form a sheet having a horizontally long rectangular cross sectional shape, (b) passing the sheet between a pair of die rollers and transferring a shape of the die rollers on the sheet to form the strip having the ear portions on ends thereof, and (c) detaching the strip from the die rollers.

ADVANTAGEOUS EFFECTS OF INVENTION

According to the present invention, a strip of a thermoplastic elastomer composition in which an organification clay mineral having ear portions on the opposite ends is used for an inner liner. Thus, it is possible to design an unvulcanized raw cover adjusted in thickness depending on the arrangement position in a tire. For example, since merely a buttress portion can be designed to be thick, gas barrier property and tire durability can be improved. Moreover, because the strip is of ribbon shape, it is applicable to tires of any size. Particularly, through use of a layer stack obtained by blending an organic derivative of clay mineral into a thermoplastic elastomer composition of the first layer and bonding the blend to the second layer made of a SIS and/or a SIB, the overall thickness can be made thin to achieve weight reduction while maintaining air shutoff property, so that rolling resistance can be reduced. Furthermore, adhesive property with an adjacent carcass ply can be improved, so that flection crack growth can be reduced.

In addition, by manufacturing a tire in which the inner liner of the present invention is used, the thickness of the inner liner in the tire circumferential direction and between the beads of the tire can be made uniform. Therefore, the tire uniformity (RFV) can be improved.

According to the present invention, since a strip of a thermoplastic elastomer material having ear portions on the opposite ends is used for an inner liner, it is possible to design an unvulcanized raw cover adjusted in thickness depending on the arrangement position in a tire. For example, since merely a buttress portion can be designed to be thick, gas barrier property and tire durability can be improved. Moreover, because the strip is of ribbon shape, it is applicable to tires of any tire size. The manufacturing method is to particularly adopt, as the strip having ear portion, a layer stack obtained by bonding a first layer made of a thermoplastic elastomer composition containing a SIBS and a styrene-maleic anhydride copolymer and a second layer containing at least one of a SIS and a SIB, thereby making the thickness on the tire circumference uniform. Therefore, the radial force variation (RFV) can be improved advantageously.

In a pneumatic tire obtained by using this strip for an inner liner, the overall thickness can be made thin to achieve weight reduction while maintaining air shutoff property, so that rolling resistance can be reduced. Furthermore, adhesive property with an adjacent carcass ply can be improved, so that flection crack growth can be reduced.

According to the present invention, since a strip of a thermoplastic elastomer composition having ear portions on the opposite ends is used for the inner liner. Thus, it is possible to design an unvulcanized raw cover adjusted in thickness depending on the arrangement position in a tire. For example, since merely a buttress portion can be designed to be thick, gas barrier property and tire durability can be improved. Moreover, because the strip is of ribbon shape, it is applicable to tires of any tire size.

Particularly, by using, as the strip having ear portions formed thereon, a polymer sheet made of a polymer composition obtained by using a mixture of a thermoplastic elastomer and at least one kind of a natural rubber, an isoprene rubber and a butyl rubber as a polymer component and vulcanizing the mixture with sulfur, the inner liner can be reduced in weight to reduce rolling resistance. Moreover, the inner liner can be prevented from breaking or deforming by heat and pressure of a bladder in a vulcanization step, thereby avoiding cracks in the surface and/or air remaining inside. Furthermore, the adhesive property between the inner liner and the carcass ply is improved to reduce crack growth in connection with repeated flection deformation during traveling with the tire.

According to the present invention, since the strip of a thermoplastic elastomer material composition having ear portions on the opposite ends is used for the inner liner, it is possible to design an unvulcanized raw cover adjusted in thickness depending on the arrangement position in a tire. For example, since merely a buttress portion can be designed to be thick, gas barrier property and tire durability can be improved. Moreover, because the strip is of ribbon shape, it is applicable to tires of any tire size.

Particularly since a layer stack of a first layer and a second layer is used as the strip having ear portions thereon, an elastomer composition containing an isobutylene-based modified copolymer containing β-pinene in one of the first layer and the second layer, and the above-described inner liner molding method is adopted, vulcanization adhesion between the first layer and the second layer can be improved. As a result, adhesion strength is improved between the first layer and the carcass ply, between the first layer and the second layer, and between the carcass ply and the second layer. In a pneumatic tire in which this strip is used for the inner liner, the overall thickness can be made thin to achieve weight reduction while maintaining air shutoff property, so that rolling resistance can be reduced. Furthermore, adhesive property with an adjacent carcass ply can be improved, so that flection crack growth can be reduced.

BRIEF DESCRIPTION OF DRAWINGS

Fig. 1 is a schematic cross sectional view of the right half of a pneumatic tire of the present invention.
Fig. 2 is a schematic view of a device manufacturing a strip of the present invention.
Fig. 3 is a cross sectional view showing the distance between a die roll and a nip roll in the manufacturing device shown in Fig. 2.

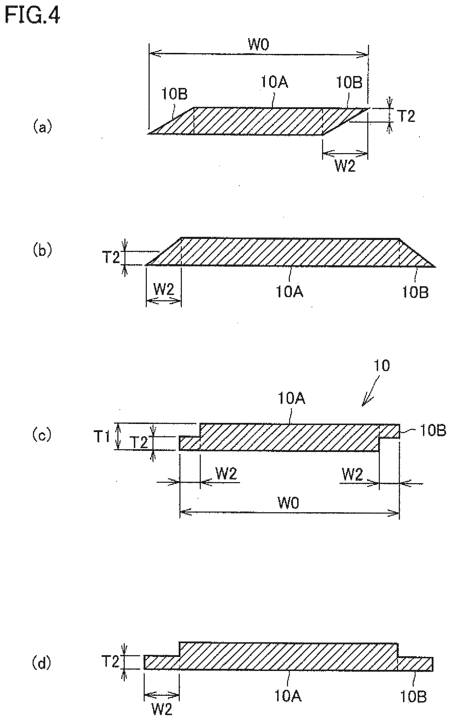

Each of Fig. 4(a) to Fig. 4(d) is a schematic cross sectional view of a strip of the present invention.

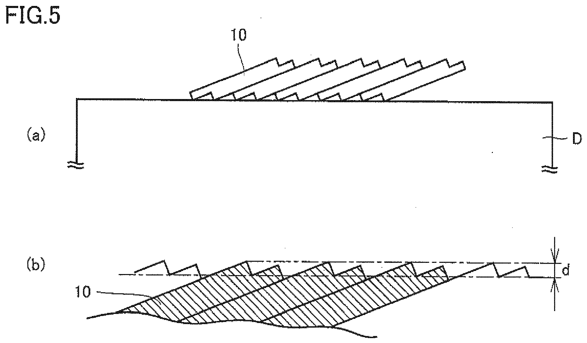

Fig. 5 is a schematic view showing a method for manufacturing an inner liner using the strip of the present invention.

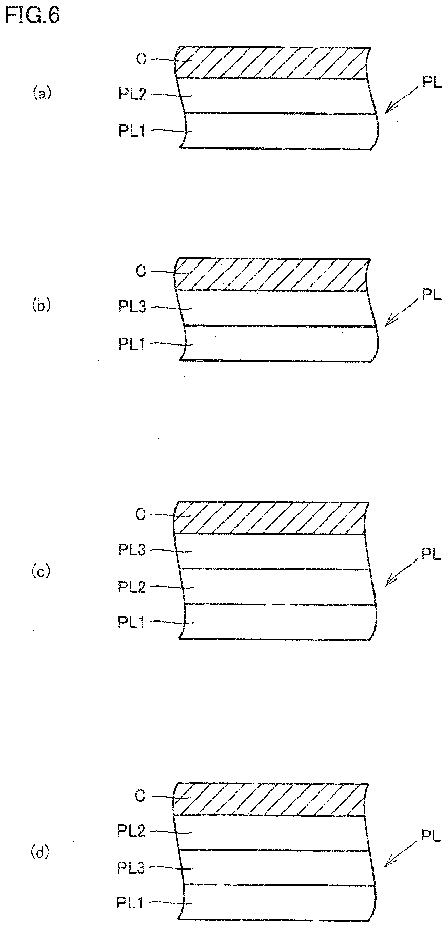

Each of Fig. 6(a) to Fig. 6(d) is a schematic cross sectional view showing arrangement states of an inner liner.

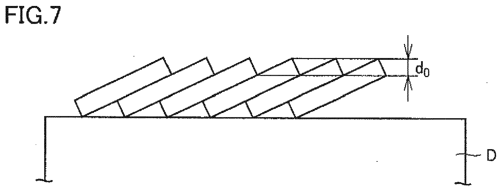

Fig. 7 is a schematic view showing a method for manufacturing an inner liner using a conventional strip.

DESCRIPTION OF EMBODIMENTS

[First Embodiment]

In an embodiment of the present invention, a strip for forming an inner liner is a strip of a thermoplastic elastomer composition to be wound spirally on a cylindrical drum to form an inner liner for a tire having a shape close to a finished sectional shape. The strip is composed of a layer stack of a first layer made of a thermoplastic elastomer composition containing 0.1 part by mass to 50 parts by mass of an organic derivative of clay mineral relative to 100 parts by mass of a styrene-isobutylene-styrene triblock copolymer, and a second layer made of a thermoplastic elastomer composition containing at least one of a styrene-isoprene-styrene triblock copolymer and a styrene-isobutylene diblock copolymer. The strip has a strip main body and ear portions disposed on opposite sides thereof. The strip main body has a thickness (T1) of 0.05 mm to 1.0 mm. The ear portions have a thickness (T2) thinner than the thickness (T1) of the strip main body and a width (W2) of 0.5 mm to 5.0 mm. The strip, a method for manufacturing the strip, a pneumatic tire including the strip, and a method for manufacturing the pneumatic tire will now be described.

The present invention relates to a strip for an inner liner disposed inside a pneumatic tire, a method for manufacturing the strip, and a method for manufacturing a pneumatic tire including the strip. The inner liner is manufactured by spirally winding a ribbon-shaped strip having ear portions on the opposite ends thereof on a cylindrical drum. Here, the ribbon-shaped strip is manufactured by extrusion molding into a state close to a finished sectional shape.

The strip is formed of a layer stack of at least two layers. The first layer contains a styrene-isobutylene-styrene triblock copolymer (SIBS), and the second layer contains at least one of a styrene-isoprene-styrene triblock copolymer (SIS) and a styrene-isobutylene diblock copolymer (SIB). Preferably, the first layer has a thickness ranging from 0.05 mm to 0.6 mm, and the second layer has a thickness ranging from 0.01 mm to 0.3 mm. The second layer is arranged to be in contact with a rubber layer of a carcass ply.

<Structure of Tire>

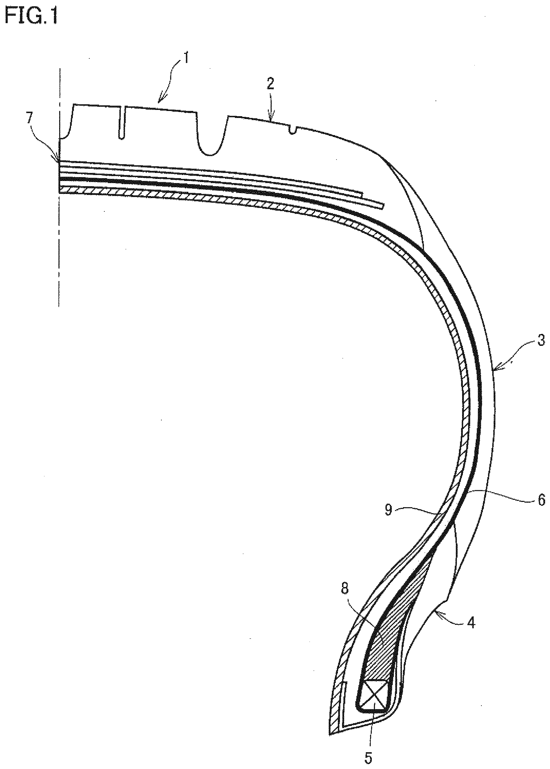

An embodiment of a pneumatic tire manufactured by the present invention will be described based on the drawings. Fig. 1 is a schematic cross sectional view of the right half of the pneumatic tire. In the figure, pneumatic tire 1 includes a tread portion 2, and a sidewall portion 3 and bead portions 4 so as to form a shape of toroid from the opposite ends of the tread portion. In each of bead portions 4, a bead core 5 is embedded. Further, a carcass ply 6 and a belt layer 7 are disposed. Carcass ply 6 is provided to extend from one bead portion 4 to the other bead portion, and is anchored by winding its ends around bead cores 5. Belt layer 7, which is formed of at least two plies, is disposed outside a crown portion of carcass ply 6.

Belt layer 7 is disposed such that two plies, which are formed of cords such as steel cords or aramid fibers, are arranged to allow the cords to cross each other between the plies normally at an angle of 5° to 30° relative to the tire circumferential direction. It should be noted that topping rubber layers can be provided on the outer sides of the ends of the belt layer to reduce detachment in the ends of the belt layer. Further, in the carcass ply, organic fiber cords such as polyester, nylon, or aramid are arranged at substantially 90° relative to the tire circumferential direction. In a region surrounded by the carcass ply and its turning portion, a bead apex 8 is disposed to extend from the upper end of bead core 5 in the sidewall direction. Further, an inner liner 9 is disposed inwardly relative to carcass ply 6 in the tire radial direction, so as to extend from one bead portion 4 to the other bead portion 4.

<Strip>

Each of Figs. 4(a) to 4(d) show a cross sectional view of an embodiment of a strip 10. In strip 10, a strip main body 10A has a thickness (T1) of 0.05 mm to 1.0 mm.

If the thickness (T1) of strip main body 10A is less than 0.05 mm, extrusion molding will be difficult, and the number of times will be increased unnecessarily in order to form an inner liner of predetermined thickness. On the other hand, if the thickness exceeds 1.0 mm, flection durability of the inner liner will be decreased and weight reduction can no longer be expected. The thickness (T1) of the strip preferably ranges from 0.1 mm to 0.6 mm. The strip has an overall width (W0) adjusted to range from 5 mm to 40 mm, and preferably ranges from 10 mm to 30 mm.

Ear portions 10B formed on the opposite sides of strip main body 10A have a thickness (T2) thinner than the thickness (T1) of the strip main body, and ranges from 0.02 mm to 0.5 mm, and more preferably ranges from 0.05 mm to 0.3 mm. If the thickness (T2) of the ear portions is thinner than 0.02 mm, extrusion dimensional accuracy may be deteriorated. On the other hand, if the thickness (T2) of the ear portions is thicker than 0.5 mm, unevenness of the surface formed by adjacent portions of the strip may be increased. Here, the thickness (T2) of the ear portions is defined as an average thickness in the widthwise direction when it is changed in the widthwise direction of the strip.

Ear portions 10B preferably have a width (W2) ranging from 0.5 mm to 5.0 mm so as to smooth out unevenness formed on the surface wound on a drum, which is more preferably adjusted to range from 0.8 mm to 3.0 mm. Preferably, the value of (W2x2) is a value less than or equal to the value of (W0×0.5). If the width (W2) of the ear portions falls outside the range of 0.5 mm to 5.0 mm, the thickness dimension of the cross section of the inner liner formed by bonding the strip may become uneven. Here, ear portions 10B of the strip preferably have a symmetric shape on the right and left ends of the strip main body, but they can be asymmetric.

In Fig. 4(a), the strip has an approximately parallelogram section. Ear portion 10B on the left side has a shape gradually decreasing in thickness downward, and ear portion 10B on the right side has a shape gradually decreasing in thickness upward.

Fig. 4(b) shows ear portions 10B gradually decreasing in thickness toward the lower surface of the strip on the right and left ends of strip main body 10A. With this strip shape, when bonding the strip on the drum, a step difference will be formed at ends where adjacent portions of the strip are bonded to each other, but an inner liner sheet having less uneven surface shape can be obtained.

In Fig. 4(c), the ear portion on the left side is formed with a constant thickness on the lower surface, and the ear portion on the right side is formed with a constant thickness on the upper surface. With such a shape, the ear portions of the strip adjacent to each other when winding the strip on the drum to form the inner liner reduce the step difference formed at the strip ends, enabling less uneven bonding. It should be noted that strip main body 10A has its thickness (T1) presenting a horizontally-long, flat rectangular shape constant in the longitudinal direction.

Fig. 4(d) shows ear portions 10B having step differences formed on the right and left ends of strip main body 10A and decreased in thickness. Ear portions 10B have a constant thickness on the lower surface of the strip. In this case, when bonding the strip on the drum, step differences will be formed at ends of adjacent portions of the strip, but the unevenness can be reduced.

By forming the strip of the present invention into the above-described shapes, adjacent ear portions of the strip when winding the strip on the drum to form an inner liner fit together appropriately, so that a junction of even thickness can be formed. It should be noted that the thickness (T1) of strip main body 10A forms a horizontally long, flat rectangular shape constant in the longitudinal direction. It should be noted that not only these shapes but also various variations can be employed for the ear portions of the present invention.

<Layer Stack>

In the present invention, the inner liner is manufactured by winding a ribbon-shaped strip on the drum, and the strip is implemented by a layer stack. Here, the layer stack is formed of a first layer containing a styrene-isobutylene-styrene triblock copolymer (SIBS) and a second layer containing at least one of a styrene-isoprene-styrene triblock copolymer (SIS) and a styrene-isobutylene diblock copolymer (SIB).

By manufacturing the strip with the ear portions formed on the both sides of this layer stack in the widthwise direction and adopting the strip for an inner liner, surface unevenness can be reduced and made smooth. This can solve the conventional problems, such as remaining air due to great unevenness.

<First Layer>

The first layer is made of a thermoplastic elastomer composition containing 0.1 part by mass to 50 parts by mass of an organic derivative of clay mineral relative to 100 parts by mass of a styrene-isobutylene-styrene triblock copolymer (hereinafter also referred to as "SIBS").

A sheet made of a thermoplastic elastomer composition containing the SIBS is excellent in air permeability resistance due to the isobutylene block of the SIBS. Hence, when a sheet made of a thermoplastic elastomer composition containing the SIBS is used for the inner liner, there can be obtained a pneumatic tire excellent in air permeability resistance.

Further, the molecular structure of the SIBS is completely saturated except aromatic side chain, so that the SIBS is restrained from being deteriorated and hardened and therefore has excellent durability. Hence, when a sheet made of a thermoplastic elastomer composition containing the SIBS is used for the inner liner, there can be obtained a pneumatic tire excellent in durability.

When a sheet made of a thermoplastic elastomer composition containing the SIBS is applied to the inner liner and a pneumatic tire is manufactured, air permeability resistance can be secured. This eliminates use of or reduces a usage amount of a halogenated rubber of high specific gravity, such as a halogenated butyl rubber, which has been conventionally used to provide air permeability resistance. Accordingly, weight reduction of the tire can be achieved, thus providing an effect of improving fuel consumption.

The molecular weight of the SIBS is not particularly limited, but the SIBS preferably has a weight average molecular weight of 50,000 to 400,000, which is measured through GPC measurement, in view of flowability, molding step, rubber elasticity, and the like. When the weight average molecular weight thereof is less than 50,000, tensile strength and tensile elongation may be unfavorably decreased. On the other hand, when the weight average molecular weight thereof exceeds 400,000, extrusion workability unfavorably becomes bad. In order to further improve air permeability resistance and durability, the SIBS preferably contains the styrene component at a content of 10 percent by mass to 30 percent by mass, preferably, 14 percent by mass to 23 percent by mass.

In the SIBS, the isobutylene block preferably has a degree of polymerization in a range of approximately 10,000 to 150,000, and the styrene block preferably has a degree of polymerization in a range of approximately 5,000 to 30,000, in view of rubber elasticity and handling (when the degree of polymerization is less than 10,000, each block will be in a liquid form).

The SIBS can be obtained through a general living cationic polymerization method for a vinyl-based compound. For example, each of Japanese Patent Laying-Open No. 62-48704 and Japanese Patent Laying-Open No. 64-62308 discloses that living cationic polymerization is possible between isobutylene and another vinyl compound and use of isobutylene and another compound for a vinyl compound allows for production of a polyisobutylene-based block copolymer.

The SIBS does not have a double bond other than double bond of an aromatic side chain in the molecule. Hence, the SIBS is highly stable to ultraviolet rays as compared with a polymer having a double bond in the molecule, such as polybutadiene. Accordingly, the SIBS is excellent in weather resistance.

<Organic Derivative of Clay Mineral>

The first layer of the layer stack is made of a thermoplastic elastomer composition containing 0.1 part by mass to 50 parts by mass of an organic derivative of clay mineral relative to 100 parts by mass of a styrene-isobutylene-styrene triblock copolymer.

The organic derivative of clay mineral is a layered clay mineral with an organic compound intercalated therein. By intercalating the organic compound between layers of the layered clay mineral, the interlayer distance is increased, which improves dispersibility in the polymer.

The layered clay mineral is a kind of a layer silicate mineral having a crystal structure in which three layers of a silicic acid tetrahedral layer, an alumina octahedral layer and a silicic acid tetrahedral layer are stacked, and presents the form of an ultrathin plate whose unit layer has a thickness of about 10Å (1 nm) and a breadth of 0.1 $\mu$m to 1 $\mu$m.

A representative example of the layered clay mineral is montmorillonite. Montmorillonite falls short of positive electric charges with part of Al which is a central atom of the alumina octahedral layer in the crystal structure being substituted by Mg, and each crystal layer itself is negatively charged. However, by inserting a cation, such as $Na^+$, $K^+$, $Ca^{2+}$, or $Mg^{2+}$ between crystal layers, the shortage of charges is neutralized, so that a stable state is attained. Therefore, montmorillonite exists with a number of crystal layers overlapping one upon another.

If water comes into contact with the surface of the plate-like crystal layer of montmorillonite, water molecules will be hydrated into an exchangeable cation between layers, so that the interlayer distance will be increased. Moreover, by intercalating the organic compound between layers by way of the cation exchangeability of montmorillonite, the interlayer distance is increased and dispersibility into an organic solvent or a polymer is improved.

Examples of the layered clay mineral include: phyllosilicates such as a smectite-based clay such as montmorillonite (particularly, sodium montmorillonite, magnesium montmorillonite and calcium montmorillonite), bentoneite, kaolinite, nonlite, beidellite, volkonskoite, hectorite, saponite, sauconite, sobockite, stevensite, svinfordite, and vermiculite; mica minerals such as illite and a mixture of illite/smectite (rectorite, tarosovite, ledikite and a mixture of the clay compound and illite); or attapulgite and sepiolite hydrotalcite-based layered compound, and the like. Among them, a smectite-based clay is preferable, and a montmorillonite-based clay is particularly preferable. Bentoneite containing a smectite-based clay mineral may be used. Generally, these layered clay minerals are obtained by gathering natural minerals and performing a predetermined refining operation thereon. These synthetic clays can be used without distinction.

Examples of the organic compound used as an intercalant include an organic compound having an easy-to-ionize polar group in the molecule. It is held that an organic compound having a polar group brings about a strong interaction with the surface of a layer covered with an anion, such as an oxygen ion, of a smectite-based clay mineral enters (is intercalated) between layers of the layered clay mineral, and increases the interlayer distance to be expanded.

A preferable organic compound has an alkyl group having six or more carbon atoms and has a polar group to be ionized terminally. Examples thereof include an organic compound having a hydroxyl or carboxyl group, aldehydes, amines, amides, and a quaternary ammonium salt.

Examples of the organic compound having a hydroxyl group include phenols as well as alcohols such as fatty alcohol such as octyl alcohol and nonyl alcohol, and aromatic alcohol with an alkyl group substituted.

Examples of the organic compound having a carboxyl group include a straight-chain aliphatic group such as stearic acid, palmitate acid and lauric acid, a straight-chain alkene acid such as oleic acid, dienoic acid such as linolelaidic acid, a polyunsaturated fatty acid such as trienoic acid, and the like.

Examples of aldehydes include hexylaldehyde and the like. Examples of amines or amides include a polar organic compound having one or more amines or amides, for example, alkylamine, amino cycloalkane and aminocycloalkane substitution, annular aliphatic diamine, aliphatic amine, alkyl aromatic amine, alkyl diarylamine, aliphatic amide, and the like, and primary, secondary and/or tertiary amines or amides are included. Among them, alkylamine, aliphatic amine, alkyl aromatic amine, and alkyl diarylamine are preferable. The above-mentioned organic compounds can be used independently or two or more or them can be used in mixture.

Examples of preferable amines include primary amines such as 1-hexylamine, 1-heptylamine, 1-octylamine, 1-nonylamine, 1-dodecylamine, 1-hexadecylamine, 1-octadecylamine, and oleylamine, secondary amines such as di-n-dodecylamine, di-n-hexadecylamine and di-n-octadecylamine, tertiary amines such as dimethyl-n-octylamine, dimethyl-n-decylamine, dimethyl-n-tetradecylamine, dimethyl-n-hexadecylamine, dimethyl-n-octadecylamine, and dimethyloleylamine, and aliphatic amines such as di-n-decylmethylamine, dicocoalkyl methylamine, tri-n-octylamine, tri-n-decylamine, and tri-n-hexadecyl amine.

Examples of preferable amides include hexylamide, heptylamide, octylamide, nonylamide, lauramide, myristamide, palmitamide, steramide, palmiamide, oleamide, linoleamide, and the like.

Moreover, as an organic compound having a polar group, an organic compound having a nitrile group or a lactam group, pyridines, esters, surface active agents, ethers or the like can also be used.

Examples of the quaternary ammonium salt include dimethyldistearyl ammonium salt, trimethylstearyl ammonium salt, dimethyldioctadecyl ammonium, dimethylbenzyl octadecyl ammonium, trimethyl octadecyl ammonium, and the like.

As a method for intercalating an organic compound into a layered clay mineral, a publicly-known method can be adopted. For example, in order to bring a montmorillonite-based clay mineral and an organic compound into contact with each other, there is a method for previously causing a layered clay mineral to contain water ranging from 10 percent by mass to about 20 times the mass thereof and then bringing an organic compound and the montmorillonite-based clay mineral into contact to obtain an organic derivative of clay mineral.

The cation exchange amount of the organic compound in the organic derivative of layered clay mineral is preferably 50 meg/100 g to 200 meg/100 g.

The blending amount of the organic derivative of layered clay mineral is 0.1 percent by mass to 50 percent by mass relative to 100 parts by mass of the styrene-isobutylene-styrene triblock copolymer, and more preferably 0.5 percent by mass to 30 percent by mass. If the blending amount of the organic derivative of layered clay mineral is less than 0.1 percent by mass, air permeability resistance and tensile property at the time of high temperature of the thermoplastic elastomer composition will be decreased. On the other hand, if the blending amount of the organic derivative of layered clay mineral exceeds 50 percent by mass, the thermoplastic elastomer composition will have excessively large hardness, and flex fatigue resistance will be decreased.

<Additive for Thermoplastic Elastomer Composition>

Various types of compounding agents and additives, which are blended in a general polymer composition, such as other reinforcers, vulcanizing agents, vulcanization accelerators, various types of oils, antioxidants, softeners, plasticizers, and coupling agents can be blended into the thermoplastic elastomer composition according to an embodiment of the present invention. Moreover, the content of these compounding agents and additives can also be a general amount.

<Thickness of First Layer>

The first layer containing the SIBS preferably has a thickness of 0.05 mm to 0.6 mm. If the thickness of the first layer is less than 0.05 mm, the first layer may be broken due to pressing pressure when vulcanizing the raw tire in which the layer stack is applied to the inner liner, with the result that an air leakage phenomenon may take place in the resulting tire. On the other hand, if the thickness of the first layer exceeds 0.6 mm, the weight of the tire is increased to result in decreased performance in fuel efficiency. Further, the first layer preferably has a thickness of 0.05 mm to 0.4 mm. The first layer can be obtained by forming the thermoplastic elastomer composition containing the SIBS into the form of a sheet by means of a general method for forming thermoplastic resin or thermoplastic elastomer into a sheet, such as extrusion molding or calender molding.

<Second Layer>

The second layer contains at least one of a styrene-isoprene-styrene triblock copolymer and a styrene-isobutylene diblock copolymer.

The isoprene block of the styrene-isoprene-styrene triblock copolymer (SIS) is a soft segment. Hence, a sheet made of a thermoplastic elastomer composition containing the SIS is likely to adhere to a rubber component through vulcanization. Therefore, when a sheet made of a thermoplastic elastomer composition containing the SIS is used for the inner liner, a pneumatic tire excellent in durability can be obtained because the inner liner is excellent in adhesive property with the rubber layer of the carcass ply, for example.

The molecular weight of the SIS is not particularly limited, but the SIS preferably has a weight average molecular weight of 100,000 to 290,000 measured through GPC measurement, in view of rubber elasticity and moldability. When the weight average molecular weight thereof is less than 100,000, tensile strength may be unfavorably decreased. On the other hand, when the weight average molecular weight thereof exceeds 290,000, extrusion workability unfavorably becomes bad. The SIS preferably contains the styrene component at a content of 10 percent by mass to 30 percent by mass in order to maintain tackiness, adhesive property, and rubber elasticity.

In the present invention, it is preferable that in the SIS, the isoprene block has a degree of polymerization in a range of approximately 500 to 5,000 and the styrene block has a degree of polymerization in a range of approximately 50 to 1,500 in view of rubber elasticity and handling.

The SIS can be obtained through a general polymerization method for a vinyl-based compound, such as the living cationic polymerization method. The SIS layer can be obtained by forming the SIS into the form of a film by means of a general method for forming thermoplastic resin or thermoplastic elastomer into a film, such as extrusion molding or calender molding.

The isobutylene block of the styrene-isobutylene diblock copolymer (SIB) is a soft segment. Hence, a sheet made of a thermoplastic elastomer composition containing the SIB is likely to adhere to a rubber component through vulcanization. Therefore, when a sheet made of a thermoplastic elastomer composition containing the SIB is used for the inner liner, a pneumatic tire excellent in durability can be obtained because the inner liner is excellent in adhesive property with an adjacent rubber forming the carcass or the insulation, for example.

For the SIB, a linear SIB is preferably used in view of rubber elasticity and adhesive property. The molecular weight of the SIB is not particularly limited, but the SIB preferably has a weight average molecular weight of 40,000 to 120,000 measured through GPC measurement, in view of rubber elasticity and moldability. When the weight average molecular weight thereof is less than 40,000, tensile strength may be unfavorably decreased. On the other hand, when the weight average molecular weight thereof exceeds 120,000, extrusion workability unfavorably becomes bad.

The SIB preferably contains the styrene component at a content of 10 percent by mass to 35 percent by mass, in view of tackiness, adhesive property, and rubber elasticity.

In the present invention, it is preferable that in the SIB, the isobutylene block has a degree of polymerization in a range of approximately 300 to 3,000 and the styrene block has a degree of polymerization in a range of approximately 10 to 1,500 in view of rubber elasticity and handling

The SIB can be obtained through a general polymerization method for a vinyl-based compound, such as the living cationic polymerization method. For example, International Publication No. WO2005/033035 discloses a manufacturing method wherein the SIB is obtained by adding methylcyclohexane, n-butyl chloride, and cumyl chloride into an agitator, cooling them to -70°C, reacting them for 2 hours, then adding a large amount of methanol to stop the reaction, and performing vacuum-drying at 60°C.

A sheet of a thermoplastic elastomer composition containing the SIS or a sheet of a thermoplastic elastomer composition containing the SIB can be obtained by forming the SIS or the SIB into the form of a sheet through a general method for forming thermoplastic resin or thermoplastic elastomer into a sheet, such as extrusion molding or calender molding.

The thickness of the second layer is less than or equal to 0.4 mm, and preferably ranges from 0.01 mm to 0.3 mm. Here, when the second layer is made only of a sheet of a thermoplastic elastomer composition containing the SIS (hereinafter also referred to as an SIS layer), the thickness of the second layer refers to the thickness of this SIS layer. When the second layer is made only of a sheet of a thermoplastic elastomer composition containing the SIB (hereinafter also referred to as an SIB layer), the thickness of the second layer refers to the thickness of this SIB layer. When the second layer is made of two layers of the SIS layer and the SIB layer, the thickness of the second layer refers to the total thickness of the SIS and SIB layers. If the thickness of the second layer is less than 0.01 mm, the second layer may be broken due to pressing pressure when vulcanizing the raw tire in which the layer stack is applied to the inner liner, with the result that vulcanization adhesion strength may be decreased. On the other hand, if the thickness of the second layer exceeds 0.4 mm, the weight of the tire is increased to result in decreased performance in fuel efficiency. Further, the second layer preferably has a thickness of 0.01 mm to 0.3 mm.

<Method for Manufacturing Strip>

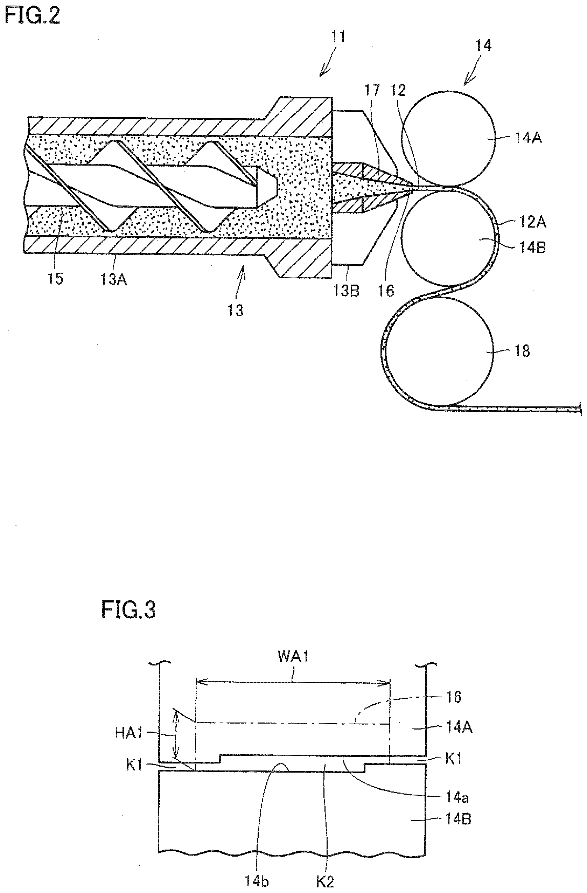

A method for manufacturing strip 10 will be described with reference to Fig. 2. A strip manufacturing device 11 is composed of an extruder 13 for extrusion molding of a thermoplastic elastomer sheet 12 having a horizontally-long rectangular cross section and a pair of die rollers 14 arranged in the vicinity of an extrusion port 16.

Extruder 13 includes an extruder main body 13 A having a screw shaft 15 and an extrusion head 13B forming a sheet of thermoplastic elastomer discharged from this extruder main body 13A and extruding the sheet through extrusion port 16. Extruder main body 13 A kneads and melts the input thermoplastic elastomer with screw shaft 15 driven by a motor having a slowdown function.

Extrusion head 13B has a mouthpiece 17 for extrusion molding attached to the leading end of extruder main body 13 A to constitute extrusion port 16.

The pair of die rollers 14 has a structure having upper and lower rolls 14A, 14B, and is held in the transverse direction orthogonal to the direction of extrusion through extrusion port 16. Upper and lower die rolls 14A, 14B are rotatably drive controlled at the same speed and in synchronization with each other.

In addition, a gap between upper and lower die rolls 14A, 14B presents a shape resembling the sectional shape of strip 10, as shown in Fig. 3. Here, "resembling" refers to being substantially similar to the sectional shape of strip 10. The similarity proportion is usually in a range of 0.50 to 0.90 in consideration of expansion. The distance between roll 14A and roll 14B at gap sections K1 corresponding to the thickness of the ear portions of the strip is smaller than the distance between roll 14A and roll 14B at a gap section K2 corresponding to the thickness of the strip main body.

That is, one or both of upper and lower die rolls 14A, 14B are provided with recessed sections 14a, 14b on the circumferential surface of a straight cylindrical roll body. Recessed sections 14a, 14b correspond to strip main body 10A. Therefore, ear portions 10B are molded by gap sections K1 between die rolls 14A, 14B, and strip main body 10A is molded by gap section K2 formed by recessed sections 14a, 14b.

In this way, in manufacturing device 11, horizontally-long rectangular sheet 12 is formed first by extruder 13, and the shape of the die rolls is transferred to the sheet on the condition that heat is not generated during die roll molding. Then, strip 12A with the ear portions formed thereon is detached from die roller 14B by a free roller 18, and is processed into a final shape. Accordingly, dimensional accuracy and stability are increased, and manufacturing efficiency can be improved in that, for example, a knife cutting operation for width adjustment, which usually has been required in calender molding, becomes unnecessary. Besides, variations in thickness T2 at ear portions 10B can be reduced, so that strip 10 of high quality can be manufactured.

It should be noted that, for that purpose, it is preferable to set an opening height HA1 of extrusion port 16 of extrusion head 13B at 2 to 7 times thickness T1 of the strip and to set an opening width WA1 of extrusion port 16 at 0.7 to 1.0 times width W0 of the strip.

If opening height HA1 exceeds 7 times T1 and opening width WA1 is less than 0.7 times W0, the processing ratio in die roll molding will be excessively large, resulting in degraded quality and accuracy of strip 10. Particularly, accuracy in width will become unstable, which will require width accuracy to be maintained by knife cutting. On the other hand, if opening height HA1 is less than twice T1, the sheet thickness at the time of extrusion will be thin in order to obtain strip 10 of less than or equal to 1.0 mm. Then, extrusion pressure will be higher, resulting in unstable dimensions. On the other hand, if opening width WA1 exceeds 1 times W0, the processing ratio will become too small to the contrary to cause strip 10 to break, and dimensional stability will be deteriorated.

It should be noted that it is desirable to perform mold release processing on the die rolls and the free roll to be used in the molding step and the detaching step. Examples of a conventional technique that can be adopted for the mold release processing include a method for subjecting the roll surface to nitriding (radical nitriding, Kanuc process) to obtain a Cr-N coating (hardness Hv: 200 to 800; thickness: 25 $\mu$m to 500 $\mu$m), plating obtained by impregnating hard chromium with Teflon (registered trademark) (hardness Hv: 800 to 1000; thickness: 25 $\mu$m to 1000 $\mu$m), a diamond-like carbon (DLC) coating (hardness Hv: 2000 to 7000; thickness: 0.2 $\mu$m to 3.0 $\mu$m), and a Teflon (registered trademark) coating (hardness Hv: 100 to 500; thickness: 0.1 $\mu$m to 0.5 $\mu$m).

<Method for Producing Thermoplastic Elastomer Composition>

A thermoplastic elastomer composition can be manufactured by a conventionally known method. For example, after weighing the above-mentioned respective materials at a predetermined blending ratio, they can be kneaded at 100°C to 250°C for 5 minutes to 60 minutes using a rubber kneader such as an open roll or a Banbury mixer, thereby obtaining a pellet of a thermoplastic elastomer composition.

<Manufacturing of Inner Liner>

The inner liner of the present invention is formed by winding ribbon-shaped strip 10 such that portions of strip main body 10A overlap one another. As shown in Fig. 5(a), strip 10 is sequentially wound spirally such that portions of strip main body 10A on a cylindrical drum D overlap one another in the range of 3 mm to 38 mm, for example, to form an inner liner. Here, adjacent portions of strip 10 form a step difference during winding as shown in Fig. 5(b) with the ends shown on an enlarged scale, but the ear portions will reduce a step difference d of unevenness. On the other hand, as shown in Fig. 7, a step difference d0 of unevenness in the case of using a conventional strip of rectangular cross section having no ear portions is about twice the unevenness in the case of the strip having the ear portions.

In this way, the use of the strip having the ear portions facilitates making the inner liner resemble a finished sectional shape required of the inner liner. In addition, a smooth contour can be obtained, and surface cracks can be prevented from occurring after vulcanization. On the other hand, the inner liner can be formed by approximately the same number of times of winding as in the case of a conventional strip of the same thickness, which can restrain production efficiency from being deteriorated and air from remaining.

<Method for Manufacturing Pneumatic Tire>

The pneumatic tire of the present invention can be manufactured using a general manufacturing method. In Fig. 6, layer stack PL is used to manufacture a strip. Then, an inner liner is manufactured by the above-described method. Pneumatic tire 1 can be manufactured by applying the above-described inner liner to a raw tire and molding them together with other members through vulcanization. When disposing layer stack PL on the raw tire, the second layer of layer stack PL, i.e., PL2 made of an SIS layer or PL3 made of an SIB layer is disposed outwardly in the tire radial direction so as to be in contact with carcass ply C. With this arrangement, in the tire vulcanization step, adhesion strength can be increased between carcass ply C and PL2 made of the SIS layer or PL3 made of the SIB layer. In the resulting pneumatic tire, the inner liner and the rubber layer of carcass ply C are adhered to each other in an excellent manner. Thus, the pneumatic tire has excellent air permeability resistance and durability.

<Arrangement State of Inner Liner>

Fig. 6 shows arrangement states of the inner liner formed of the layer stack in the vulcanized tire of the present invention. In Fig. 6(a), layer stack PL is composed of PL1 of a first layer containing a thermoplastic elastomer composition containing the SIBS (hereinafter also referred to as a SIBS layer), and second layer PL2 made of an SIS layer. When applying layer stack PL to the inner liner of the pneumatic tire and disposing PL2 made of the SIS layer outwardly in the tire radial direction so as to be in contact with carcass ply C, adhesion strength between PL2 made of the SIS layer and carcass ply C can be increased in the step of vulcanizing the tire. Accordingly, in the resulting pneumatic tire, the inner liner and the rubber layer of carcass ply C are adhered to each other in an excellent manner. Thus, the pneumatic tire can have excellent air permeability resistance and durability.

In Fig. 6(b), layer stack PL is composed of PL1 made of a SIBS layer serving as the first layer, and PL3 made of a SIB layer serving as the second layer. When applying layer stack PL to the inner liner of the pneumatic tire and disposing a surface of PL3 made of the SIB layer outwardly in the tire radial direction so as to be in contact with carcass ply C, adhesion strength between PL3 made of the SIB layer and carcass C can be increased in the step of vulcanizing the tire. Accordingly, in the resulting pneumatic tire, the inner liner and the rubber layer of carcass ply C are adhered to each other in an excellent manner. Thus, the pneumatic tire can have excellent air permeability resistance and durability.

In Fig. 6(c), layer stack PL is composed of PL1 made of a SIBS layer serving as the first layer, PL2 made of a SIS layer and PL3 made of a SIB layer both serving as the second layer, which are stacked on one another in this order. When applying layer stack PL to the inner liner of the pneumatic tire and disposing a surface of PL3 made of the SIB layer outwardly in the tire radial direction so as to be in contact with carcass ply C, adhesion strength between PL3 made of the SIB layer and carcass ply C can be increased in the step of vulcanizing the tire. Accordingly, in the resulting pneumatic tire, the inner liner and the rubber layer of carcass ply C are adhered to each other in an excellent manner. Thus, the pneumatic tire can have excellent air permeability resistance and durability.

In Fig. 6(d), layer stack PL is composed of PL1 made of a SIBS layer serving as the first layer, and PL3 made of a SIB layer and PL2 made of a SIS layer both serving as the second layer, which are stacked on one another in this order. When applying layer stack PL to the inner liner of the pneumatic tire and disposing a surface of PL2 made of the SIS layer outwardly in the tire radial direction so as to be in contact with carcass ply C, adhesion strength between PL2 made of the SIS layer and carcass ply C can be increased in the step of vulcanizing the tire. Accordingly, the inner liner and the rubber layer of carcass ply C are adhered to each other in an excellent manner. Thus, the pneumatic tire can have excellent air permeability resistance and durability.

[Second Embodiment]

In an embodiment of the present invention, a strip for an inner liner is a strip of a thermoplastic elastomer composition to be wound spirally on a cylindrical drum to form an inner liner for a tire having a shape close to a finished sectional shape. The strip is composed of a layer stack of a first layer made of a thermoplastic elastomer composition containing 60 percent by mass to 99.9 percent by mass of a styrene-isobutylene-styrene triblock copolymer and 0.5 percent by mass to 40 percent by mass of a styrene-maleic anhydride copolymer, and a second layer made of a thermoplastic elastomer composition containing a styrene-isoprene-styrene triblock copolymer. The strip has a strip main body and ear portions disposed on both sides thereof. The strip main body has a thickness (T1) of 0.05 mm to 1.0 mm. The ear portions have a thickness (T2) thinner than the thickness (T1) of the strip main body and a width (W2) of 0.5 mm to 5.0 mm. The strip, a method for manufacturing the strip, a pneumatic tire including the strip, and a method for manufacturing the pneumatic tire will now be described.

<Structure of Tire>

In the present embodiment, the pneumatic tire can have a structure similar to that of the first embodiment.

<Strip>

In the present embodiment, the strip can have a shape similar to that of the first embodiment.

It should be noted that the width (W2) of ear portions 10B preferably ranges from 0.5 mm to 5.0 mm so as to smooth out the unevenness formed on the wound surface on the drum, and the value of (W2×2) is preferably less than or equal to the value of (W0×0.5).

<Layer Stack>

In the present invention, the inner liner is manufactured by winding a ribbon-shaped strip on a drum, and the strip is implemented by a layer stack. Here, the layer stack is formed of a first layer made of a thermoplastic elastomer containing a styrene-isobutylene-styrene triblock copolymer (SIBS) and a styrene-maleic anhydride copolymer, and a second layer made of a thermoplastic elastomer composition containing a styrene-isoprene-styrene triblock copolymer (SIS). By manufacturing a strip with ear portions formed on the both sides of the layer stack in the widthwise direction and adopting the strip for the inner liner, surface unevenness can be reduced and smoothed out. This can solve the conventional problems, such as remaining air due to great unevenness.

<First Layer>

The first layer is made of a thermoplastic elastomer composition containing 60 percent by mass to 99.5 percent by mass of a styrene-isobutylene-styrene triblock copolymer (SIBS), and 0.5 percent by mass to 40 percent by mass of a styrene-maleic anhydride copolymer (hereinafter also referred to as "SMA").

By blending the SMA into the SIBS, the thermoplastic elastomer composition can improve vulcanization adhesive property with a rubber while maintaining air permeability resistance.

In the present embodiment, the SIBS similar to that of the first embodiment can be used.

(Styrene-Maleic Anhydride Copolymer)

In the present specification, the "styrene-maleic anhydride copolymer (SMA)" is described to represent a concept including: a styrene-maleic anhydride copolymer base resin (hereinafter, also referred to as "SMA base resin"); an ester resin (hereinafter, also referred to as "SMA ester resin") of a styrene-maleic anhydride copolymer, the ester resin being obtained by esterification of the styrene-maleic anhydride copolymer base resin and having a monoester group and a monocarboxylic acid group; and a styrene-maleic anhydride copolymer ammonium salt aqueous solution (hereinafter, also referred to as "SMA resin ammonium salt aqueous solution") which is a solution containing ammonium salt of the styrene-maleic anhydride copolymer base resin.

The styrene-maleic anhydride copolymer (SMA) has been used as a polymer surfactant or a high-functionality cross linking agent in dispersion or emulsification, and is very excellent in vulcanization adhesion with a rubber. Further, the styrene-maleic anhydride copolymer provides the rubber with wettability, and is therefore excellent in tackiness effect.

In the polymer component of the thermoplastic elastomer composition, the content of the SMA is 0.5 percent by mass to 40 percent by mass. With the content of the SMA being 0.5 percent by mass or more, there can be obtained an inner liner excellent in adhesive property with the second layer. With the content of the SMA being 40 percent by mass or less, there can be obtained an inner liner excellent in air permeability resistance and durability. The content of the SMA in the polymer component is more preferably 2 percent by mass to 30 percent by mass.

(Styrene-Maleic Anhydride Copolymer Base Resin)

In one embodiment of the present invention, the SMA preferably contains the SMA base resin in view of unvulcanization tackiness and post-vulcanization adhesive property.

The SMA base resin preferably contains the styrene component and the maleic anhydride component at a molar ratio of 50/50 to 90/10, in order to attain a high softening point and high thermal stability. The SMA base resin preferably has a weight average molecular weight of 4,000 to 20,000 in view of post-vulcanization adhesive property and flowability. Moreover, the weight average molecular weight is more preferably 5,000 to 15,000.

In the SMA base resin, the acid value of the maleic anhydride component in the styrene-maleic anhydride copolymer is preferably 50 to 600 in view of unvulcanization tackiness. Moreover, the acid value of the maleic anhydride component is more preferably 95 to 500.

(Ester Resin of Styrene-Maleic Anhydride Copolymer)

In one embodiment of the present invention, the styrene-maleic anhydride copolymer preferably contains the ester resin (hereinafter, also referred to as "SMA ester resin") of the styrene-maleic anhydride copolymer, the ester resin being obtained by esterification of the styrene-maleic anhydride copolymer base resin and having a monoester group and a monocarboxylic acid group.

The SMA ester resin has such a property that vulcanization adhesive property is excellent. Hence, by blending the SIBS with the SMA ester resin, the thermoplastic elastomer composition for an inner liner can be provided with excellent vulcanization adhesive property with a rubber layer. The SMA ester resin preferably contains the styrene component and the maleic anhydride component at a molar ratio of 50/50 to 90/10 in view of vulcanization adhesive property.

The SMA ester resin preferably has a weight average molecular weight of 5,000 to 12,000 in view of post-vulcanization adhesive property and flowability. Moreover, the weight average molecular weight is more preferably 6,000 to 11,000. In the SMA ester resin, the acid value of the maleic anhydride component is preferably 50 to 400 in view of tackiness to an unvulcanized rubber. Moreover, the acid value of the maleic anhydride component is more preferably 95 to 290.

The SMA ester resin can be produced by, for example, introducing a base resin and an alcohol into a reaction container and heating and stirring them under an inert gas atmosphere.

(Styrene-Maleic Anhydride Copolymer Ammonium Salt Aqueous Solution)

In an embodiment of the present invention, the styrene-maleic anhydride copolymer preferably contains the styrene-maleic anhydride copolymer ammonium salt aqueous solution (hereinafter, also referred to as "SMA ammonium salt aqueous solution") which is a solution containing ammonium salt of the SMA base resin.
The SMA ammonium salt aqueous solution has such a property that wettability is excellent. Hence, by blending the SIBS with the SMA ammonium salt aqueous solution, the thermoplastic elastomer composition for the inner liner can be provided with excellent tackiness.
The SMA ammonium salt aqueous solution preferably has a solid concentration of 10.0% to 45.0% in view of tackiness to an unvulcanized rubber and molding workability. The SMA ammonium salt aqueous solution preferably has a pH of 8.0 to 9.5 in view of tackiness. The SMA ammonium salt aqueous solution can be produced in the following manner, for example. Water is introduced into a reaction container and a base resin is added under vigorous stirring. Then, ammonium hydroxide is gradually added to cause exothermic reaction. Thereafter, heating is performed to a predetermined temperature, and stirring is continued until completion of dissolution.

<Additive for Thermoplastic Elastomer Composition>

In an embodiment of the present invention, additives similar to those of the first embodiment can be blended into the thermoplastic elastomer composition.

<Thickness of First Layer>

The first layer made of a thermoplastic elastomer composition containing the SIBS and the SMA preferably has a thickness of 0.05 mm to 0.6 mm. If the thickness of the first layer is less than 0.05 mm, the first layer may be broken due to pressing pressure when vulcanizing the raw tire in which the layer stack is applied to the inner liner, with the result that an air leakage phenomenon may take place in the resulting tire. On the other hand, if the thickness of the first layer exceeds 0.6 mm, the weight of the tire is increased to result in decreased performance in fuel efficiency. Further, the first layer preferably has a thickness of 0.05 mm to 0.4 mm. The first layer can be formed by forming a thermoplastic elastomer composition containing the SIBS into the form of a sheet by means of a general method for forming thermoplastic resin or thermoplastic elastomer into a sheet, such as extrusion molding or calender molding.

<Second Layer>

The second layer contains a thermoplastic elastomer composition containing a styrene-isoprene-styrene triblock copolymer (SIS).

In the present embodiment, a SIS similar to that of the first embodiment can be used.

The second layer preferably has a thickness of less than or equal to 0.4 mm, and preferably ranges from 0.01 mm to 0.3 mm. If the thickness of the second layer is less than 0.01 mm, the second layer may be broken due to pressing pressure when vulcanizing the raw tire in which the layer stack is applied to the inner liner, with the result that vulcanization adhesion strength may be decreased. On the other hand, if the thickness of the second layer exceeds 0.4 mm, the weight of the tire is increased to result in decreased performance in fuel efficiency. Further, the second layer preferably has a thickness of 0.01 mm to 0.3 mm.

<Method for Manufacturing Strip>

In the present embodiment, a method for producing a strip similar to that of the first embodiment can be used.

<Method for Manufacturing Thermoplastic Elastomer Composition>

The thermoplastic elastomer composition of the present invention can be manufactured by a conventionally known method. The above-described materials are measured to attain a predetermined blending ratio, and thereafter they are kneaded at 100°C to 250°C for 5 minutes to 60 minutes using a rubber kneader such as an open roll or a Banbury mixer.

For example, the SIBS, the SMA, the SMA base resin, the SMA ester resin, and the SMA ammonium salt aqueous solution, as well as various types of additives as required are introduced into a twin-screw extruder and are kneaded at approximately 100°C to approximately 250°C and 50 rpm to 300 rpm, thereby obtaining a pellet of a thermoplastic elastomer composition in which these components are dynamically crosslinked to each other.

In the twin-screw extruder, the SIBS, which is a thermoplastic elastomer composition, serves as the matrix phase, and the rubber component serves as the island phase and is dispersed. Further, in the twin-screw extruder, the rubber component reacts with the additive component, and the rubber component serving as the island phase produces a crosslinking reaction. The rubber component is dynamically crosslinked in the twin-screw extruder (dynamic crosslinking). Even if the rubber component is crosslinked in the twin-screw extruder, the shear viscosity of the whole system is low since the matrix phase of the system is composed of the thermoplastic elastomer component, so that extrusion molding is possible.

In the pellet of the dynamically-crosslinked thermoplastic elastomer composition obtained with the twin-screw extruder, the rubber component is crosslinked, however, the thermoplastic elastomer composition of the matrix phase holds plasticity, and maintains plasticity of the whole system. Therefore, the pellet also exhibits plasticity in the T-die extrusion, and thus can be molded into a sheet shape.

Further, since the rubber component is crosslinked in the pellet of the dynamically-crosslinked thermoplastic elastomer composition, the thermoplastic elastomer composition of the inner liner can be prevented from penetrating into the carcass layer even when a pneumatic tire is heated while manufacturing the pneumatic tire by applying the thermoplastic elastomer layer stack manufactured using this pellet to the inner liner.

<Molding of Inner Liner>

In the present embodiment, a method for molding an inner liner similar to that of the first embodiment can be used.

<Method for Manufacturing Pneumatic Tire>

In the present embodiment, a method for manufacturing a pneumatic tire similar to that of the first embodiment can be used.

<Arrangement State of Inner Liner>

Fig. 6(a) shows an arrangement state of the inner liner formed of the layer stack in the vulcanized tire of the present invention. In Fig. 6(a), layer stack PL is composed of PL1 serving as the first layer made of a thermoplastic elastomer composition containing the SIBS and the SMA, and PL2 serving as the second layer made of a thermoplastic elastomer composition containing the SIS. When applying layer stack PL to the inner liner of the pneumatic tire and disposing PL2 serving as the second layer outwardly in the tire radial direction so as to be in contact with carcass ply C, adhesion strength between SIS layer PL2 and carcass ply C can be increased in the step of vulcanizing the tire. In the resulting pneumatic tire, the inner liner and the rubber layer of carcass ply C are adhered to each other in an excellent manner. Thus, the pneumatic tire has excellent air permeability resistance and durability.

[Third Embodiment]

In an embodiment of the present invention, a strip for forming an inner liner is a strip of a polymer composition to be wound spirally on a cylindrical drum to form an inner liner for a tire having a shape close to a finished sectional shape. The strip is formed of a polymer sheet of a polymer composition containing more than or equal to 0.1 part by mass and less than or equal to 5 parts by mass of sulfur relative to 100 parts by mass of a polymer component containing more than or equal to 5 percent by mass and less than or equal to 40 percent by mass of a styrene-isobutylene-styrene triblock copolymer and more than or equal to 60 percent by mass and less than or equal to 95 percent by mass of at least one kind of rubber component selected from the group consisting of a natural rubber, an isoprene rubber and a butyl rubber. The strip has a strip main body and ear portions disposed on both sides thereof. The strip main body has a thickness (T1) of 0.05 mm to 1.0 mm. The ear portions have a thickness (T2) thinner than the thickness (T1) of the strip main body and a width (W2) of 0.5 mm to 5.0 mm.

In another embodiment of the present invention, the strip is composed of a layer stack of a first layer of a polymer sheet of a polymer composition containing more than or equal to 0.1 part by mass and less than or equal to 5 parts by mass of sulfur relative to 100 parts by mass of a polymer component containing more than or equal to 5 percent by mass and less than or equal to 40 percent by mass of a styrene-isobutylene-styrene triblock copolymer and more than or equal to 60 percent by mass and less than or equal to 95 percent by mass of at least one kind of rubber component selected from the group consisting of a natural rubber, an isoprene rubber and a butyl rubber, and a second layer made of a thermoplastic elastomer composition.

The strip, a method for manufacturing the strip, a pneumatic tire including the strip, and a method for manufacturing the pneumatic tire will now be described.

<Structure of Tire>

In the present embodiment, the pneumatic tire can have a structure similar to that of the first embodiment.

<Shape of Strip>

In the present embodiment, the strip can have a shape similar to that of the first embodiment.

It should be noted that the width (W2) of ear portions 10B preferably ranges from 0.5 mm to 5.0 mm so as to smooth out the unevenness formed on a wound surface on a drum, and the value of (W2×2) is preferably less than or equal to the value of (W0×0.5).

<Strip: Polymer Sheet>

The strip of the present invention is made of a polymer composition containing more than or equal to 0.1 part by mass and less than or equal to 5 parts by mass of sulfur relative to 100 parts by mass of a polymer component containing more than or equal to 5 percent by mass and less than or equal to 40 percent by mass of a styrene-isobutylene-styrene triblock copolymer and more than or equal to 60 percent by mass and less than or equal to 95 percent by mass of at least one kind of rubber component selected from the group consisting of a natural rubber, an isoprene rubber and a butyl rubber.

The polymer composition contains the SIBS, a rubber component, and sulfur. When the rubber component and sulfur are added to the SIBS and mixed by heating, the rubber component and sulfur produce a vulcanization reaction during mixing by heating to form a sea-island structure in which the SIBS serves as a matrix (sea), and the rubber component serves as an island.

The polymer composition having the sea-island structure has air permeation resistance originating in the matrix phase composed of the SIBS. Further, the rubber component constituting the island phase has tackiness before vulcanization with an adjacent member containing a rubber component and vulcanization adhesive property with the adjacent member because of the vulcanization reaction with the rubber component of the adjacent member during mixing by heating. Therefore, a polymer sheet made of the polymer composition is excellent in air permeation resistance, and can have tackiness before vulcanization and vulcanization adhesive property with the adjacent member.

(Styrene-Isobutylene-Styrene Triblock Copolymer)

In the present embodiment, a SIBS similar to that of the first embodiment can be used.

The SIBS content is more than or equal to 5 percent by mass and less than or equal to 40 percent by mass in the polymer component of the polymer composition. When the SIBS content is less than 5 percent by mass, air permeation resistance of the polymer sheet may be reduced. On the other hand, when the SIBS content exceeds 40 percent by mass, vulcanization adhesion strength with an adjacent member may be insufficient. The SIBS content is preferably more than or equal to 10 percent by mass and less than or equal to 30 percent by mass of the polymer component in terms of ensuring air permeation resistance.

(Rubber Component)

The polymer composition constituting a polymer sheet for an inner liner contains a rubber component. The rubber component can provide the polymer composition with tackiness before vulcanization with an adjacent member containing a rubber component. Further, because of the vulcanization reaction with sulfur, the rubber component can provide the polymer composition with vulcanization adhesive property with an adjacent member such as a carcass or an insulation. The rubber component contains at least one kind selected from the group consisting of a natural rubber, an isoprene rubber and a butyl rubber, and it is particularly preferable to contain a natural rubber in terms of breaking strength and adhesive property.

The content of the rubber component is more than or equal to 60 percent by mass and less than or equal to 95 percent by mass in the polymer component of the polymer composition. When the content of the rubber component is less than 60 percent by mass, the viscosity of the polymer composition increases to cause extrusion moldability to deteriorate. Hence, when producing a polymer sheet, the polymer sheet may not be made thin. When the content of the rubber component exceeds 95 percent by mass, air permeation resistance of the polymer sheet may be reduced. The content of the rubber component is preferably more than or equal to 70 percent by mass and less than or equal to 90 percent by mass of the polymer component in terms of tackiness before vulcanization and vulcanization adhesive property.

(Sulfur)

For a polymer composition, widely used sulfur can be used, but insoluble sulfur is preferably used. As used herein, insoluble sulfur refers to sulfur obtained by heating and rapidly cooling natural sulfur $S_8$, and polymerizing it so as to become $S_x$ (x = 100,000 to 300,000). The use of insoluble sulfur can prevent blooming that would usually occur when sulfur is used as a rubber vulcanization agent.

The sulfur content is more than or equal to 0.1 part by mass and less than or equal to 5 parts by mass with respect to 100 parts by mass of the polymer component. When the sulfur content is less than 0.1 part by mass, the vulcanization effect of the rubber component cannot be achieved. On the other hand, when the sulfur content exceeds 5 parts by mass, the hardness of the polymer composition increases, and when the polymer composition is used for an inner liner, the durability of a pneumatic tire may deteriorate. The sulfur content is more preferably more than or equal to 0.3 part by mass and less than or equal to 3.0 parts by mass.

(Additive for Polymer Composition)

The polymer composition constituting the strip can contain additives such as stearic acid, zinc oxide, an antioxidant, and a vulcanization accelerator. Stearic acid functions as a vulcanization assistant for the rubber component. The content of stearic acid is preferably more than or equal to 1 part by mass and less than or equal to 5 parts by mass with respect to 100 parts by mass of the polymer component. When the content of stearic acid is less than 1 part by mass, the effect as a vulcanization assistant cannot be achieved. On the other hand, when the content of stearic acid exceeds 5 parts by mass, the viscosity of the polymer composition may be reduced, and the breaking strength may be reduced, which is not preferable. The content of stearic acid is more preferably more than or equal to 1 part by mass and less than or equal to 4 parts by mass.

Zinc oxide functions as a vulcanization assistant of the rubber component. The content of zinc oxide is preferably more than or equal to 0.1 part by mass and less than or equal to 8 parts by mass with respect to 100 parts by mass of the polymer component. When the content of zinc oxide is less than 0.1 part by mass, the effect as a vulcanization assistant cannot be achieved. On the other hand, when the content of zinc oxide exceeds 8 parts by mass, the hardness of the polymer composition increases, and when the polymer sheet is used as the inner liner, the durability of a pneumatic tire may deteriorate. The content of zinc oxide is more preferably more than or equal to 0.5 part by mass and less than or equal to 6 parts by mass.

An antioxidant has the function of preventing a series of degradations, such as oxidation degradation called aging, thermal degradation, ozone degradation, and fatigue degradation. Antioxidants are classified into a primary antioxidant including amines and phenols and a secondary antioxidant including sulfur compounds and phosphites. The primary antioxidant has the function of supplying hydrogen to various polymer radicals to stop a chain reaction of autoxidation, and the secondary antioxidant exhibits a stabilizing effect by turning hydroxyperoxide into stable alcohol.

Examples of the antioxidant include amines, phenols, imidazoles, phosphors, thioureas, and the like. The antioxidants may be used alone, or two or more kinds of them may be used in combination. Particularly, it is preferable to use N-(1,3-dimethylbutyl)-N'-phenyl-p-phenylenediamine.

The antioxidant content is preferably more than or equal to 0.1 part by mass and less than or equal to 5 parts by mass relative to 100 parts by mass of the polymer component. When the antioxidant content is less than 0.1 part by mass, the antioxidant effect cannot be achieved. On the other hand, when the antioxidant content exceeds 5 parts by mass, the blooming phenomenon will occur in the polymer composition. The antioxidant content is more preferably more than or equal to 0.3 part by mass and less than or equal to 4 parts by mass.

As the vulcanization accelerator, thiurams, thiazoles, thioureas, dithiocarbamates, guanidines, sulfenamides, and the like can be used. The vulcanization accelerators may be used alone, or two or more kinds of them may be used in combination. Particularly, it is preferable to use dibenzothiazyl sulfide.

The content of the vulcanization accelerator is preferably more than or equal to 0.1 part by mass and less than or equal to 5 parts by mass relative to 100 parts by mass of the polymer component. When the content of the vulcanization accelerator is less than 0.1 part by mass, the vulcanization acceleration effect cannot be achieved. On the other hand, when the content of the vulcanization accelerator exceeds 5 parts by mass, the hardness of the polymer composition increases, and when the polymer sheet is used as an inner liner, the durability of a pneumatic tire may deteriorate. In addition, the raw material cost of the polymer composition increases. The content of the vulcanization accelerator is more preferably more than or equal to 0.3 part by mass and less than or equal to 4 parts by mass.

<Strip: Layer Stack>

As the strip according to an embodiment of the present invention, a layer stack of a first layer and a second layer is used. Here, the first layer can be implemented by substantially the same polymer composition as that of the above-described polymer sheet, and is a polymer composition mainly containing a styrene-isobutylene-styrene triblock copolymer (SIBS).

(Second Layer)

In the layer stack, the second layer is made of a thermoplastic elastomer composition containing a thermoplastic elastomer. This second layer can also be obtained by blending at least one kind of rubber component selected from the group consisting of a natural rubber, an isoprene rubber and a butyl rubber into a thermoplastic elastomer. By adding the rubber component to the thermoplastic elastomer, tackiness before vulcanization and vulcanization adhesion strength with the first layer are improved. Furthermore, tackiness before vulcanization and vulcanization adhesion strength with an adjacent member, such as a carcass and an insulation, are also improved.

As the thermoplastic elastomer, at least one kind selected from the group consisting of: a styrene-isoprene-styrene triblock copolymer; a styrene-isobutylene diblock copolymer; a styrene-butadiene-styrene triblock copolymer; a styrene-isoprene butadiene-styrene triblock copolymer; a styrene-ethylene butene-styrene triblock copolymer; a styrene-ethylene propylene-styrene triblock copolymer; a styrene-ethylene ethylene propylene-styrene triblock copolymer; and a styrene-butadiene butylene-styrene triblock copolymer can be used. It should be noted that these thermoplastic elastomers may be epoxy-modified thermoplastic elastomers having an epoxy group.

Particularly, it is preferable to use a styrene-isoprene-styrene triblock copolymer (SIS), a styrene-isobutylene diblock copolymer (SIB), or an epoxidized styrene-butadiene-styrene triblock copolymer.

In the present embodiment, a SIS similar to that of the first embodiment can be used.

In the present embodiment, a SIB similar to that of the first embodiment can be used.

The epoxidized styrene-butadiene-styrene triblock copolymer (hereinafter also referred to as epoxidized SBS) is a thermoplastic elastomer including a polystyrene block as a hard segment and a butadiene block as a soft segment, with an unsaturated double bond portion included in the butadiene block having been epoxidized. Since the epoxidized SBS has the soft segment, a thermoplastic elastomer composition containing the epoxidized SBS easily adheres to a rubber component through vulcanization. Therefore, when the thermoplastic elastomer composition containing the epoxidized SBS is used for the polymer layer stack for an inner liner, the polymer layer stack is excellent in adhesive property with an adjacent rubber forming the carcass or the insulation, for example, and thus a pneumatic tire that can avoid the air-in phenomenon and presents excellent durability can be obtained.

As for the molecular weight of the epoxidized SBS, the epoxidized SBS preferably has a weight average molecular weight of 10,000 to 400,000, which is measured through GPC measurement, in view of rubber elasticity and moldability. If the weight average molecular weight thereof is less than 10,000, the reinforcing effect may be unfavorably decreased. If the weight average molecular weight thereof exceeds 400,000, the viscosity of the thermoplastic elastomer composition may be unfavorably increased.

The epoxidized SBS preferably contains the styrene unit at a content of more than or equal to 10 percent by mass and less than or equal to 30 percent by mass, in view of tackiness, adhesive property, and rubber elasticity. The epoxidized SBS preferably contains the butadiene unit and the styrene unit at a molar ratio (butadiene unit/styrene unit) of 90/10 to 70/30. In the epoxidized SBS, it is preferable that the butadiene block has a degree of polymerization of approximately 500 to 5,000 and the styrene block has a degree of polymerization of approximately 500 to 1,500 in view of rubber elasticity and handling.

When the second layer contains a rubber component, the rubber component is preferably more than or equal to 20 percent by mass and less than or equal to 90 percent by mass, and more preferably more than or equal to 30 percent by mass and less than or equal to 80 percent by mass relative to the total of the thermoplastic elastomer and the rubber component. When the rubber component is less than 20 percent by mass, the second layer may be less likely to adhere to the carcass layer through vulcanization. When the rubber component exceeds 90 percent by mass, the second layer and the carcass layer may excessively adhere to each other through vulcanization.

The sulfur content is more than or equal to 0.1 part by mass and less than or equal to 5 parts by mass relative to 100 parts by mass of the thermoplastic elastomer. When the sulfur content is less than 0.1 part by mass, the vulcanization reaction may not be produced. When the sulfur content exceeds 5 parts by mass, the crosslinking density of the thermoplastic elastomer composition may be increased to increase viscosity. The sulfur content is more preferably more than or equal to 0.3 part by mass and less than or equal to 3 parts by mass.

(Additive for Thermoplastic Elastomer Composition)

The thermoplastic elastomer composition can contain additives such as stearic acid, zinc oxide, an antioxidant, and a vulcanization accelerator. Blending similar to that of the first layer can be adopted for these additives.

<Strip Manufacturing Device>

In the present embodiment, the strip can be manufactured using strip manufacturing device 11 similar to that of the first embodiment.

<Method for Manufacturing Strip>

(Production of Polymer Sheet or Layer Stack)

The strip for an inner liner of the present invention can be manufactured by the following method. The respective ingredients are charged into a twin-screw extruder and kneaded under the conditions of about 150°C to 280°C and 50 to 300 rpm, thereby obtaining a pellet of a polymer composition in which the SIBS, the rubber component, sulfur, and various additives according to necessity are dynamically crosslinked. The obtained pellet is introduced into a T-die extruder to obtain a sheet-like polymer sheet (or the first layer) made of a polymer composition and a sheet-like second layer made of a thermoplastic elastomer composition.

In the twin-screw extruder, the SIBS, which is a thermoplastic elastomer, serves as the matrix phase, and the rubber component serves as the island phase and is dispersed. Further, in the twin-screw extruder, the rubber component reacts with the additive component, and the rubber component serving as the island phase produces a crosslinking reaction. So-called dynamic crosslinking in which the rubber component is dynamically crosslinked in the twin-screw extruder is formed. Even if the rubber component is crosslinked in the twin-screw extruder, the shear viscosity of the whole system is low and extrusion molding is possible since the matrix phase of the system is composed of the thermoplastic elastomer component.

In the pellet of the dynamically-crosslinked polymer composition obtained with the twin-screw extruder, the rubber component is crosslinked, however, the thermoplastic elastomer component of the matrix phase holds plasticity, and serves to produce plasticity of the whole polymer composition. Therefore, the polymer composition also exhibits plasticity in the T-die extruder, and thus can be molded into a sheet shape.

Further, since the rubber component is crosslinked in the pellet of the dynamically-crosslinked polymer composition, the polymer composition of the inner liner can be prevented from penetrating into the carcass layer even when a pneumatic tire is heated while manufacturing the pneumatic tire by applying the polymer sheet produced from this pellet to the inner liner.

When implementing the strip by a layer stack, the first layer and the second layer are bonded together. Here, a polymer sheet can be used for the first layer. Alternatively, the respective pellets of the polymer composition and the thermoplastic elastomer composition can be subjected to lamination extrusion such as laminate extrusion or coextrusion to form a layer stack, thereby obtaining a ribbon-shaped sheet. Then, a strip having ear portions of a predetermined shape formed on the both ends in the width direction of the sheet is manufactured.

<Molding of Inner Liner>

In the present embodiment, the inner liner can be molded by a method similar to that of the first embodiment.

<Method for Manufacturing Pneumatic Tire>

In the present embodiment, the pneumatic tire can be manufactured by a method similar to that of the first embodiment.

<Arrangement State of Inner Liner>

Fig. 6 shows arrangement states of the inner liner formed of the layer stack in the vulcanized tire of the present invention. In Fig. 6(a), layer stack PL is composed of PL1 made of the first layer containing a polymer composition and PL2 made of the second layer containing a thermoplastic elastomer composition. When applying layer stack PL to the inner liner of the pneumatic tire and disposing second layer PL2 outwardly in the tire radial direction so as to be in contact with carcass ply C, adhesion strength between second layer PL2 and carcass ply C can be increased in the step of vulcanizing the tire. In the resulting pneumatic tire, the inner liner and the rubber layer of carcass ply C are adhered to each other in an excellent manner. Thus, the pneumatic tire has excellent air permeability resistance and durability.

[Fourth Embodiment]

In an embodiment of the present invention, a strip for forming an inner liner is a strip of a thermoplastic elastomer composition to be wound spirally on a cylindrical drum to form an inner liner for a tire having a shape close to a finished sectional shape. The strip is composed of a first layer disposed on the tire inside and a second layer disposed adjacent to the carcass. At least one of the first layer and the second layer is an isobutylene-based block copolymer made of a polymeric block (A) mainly containing isobutylene and a polymeric block (B) mainly containing an aromatic vinyl-based compound, and is an elastomer composition containing an isobutylene-based modified copolymer with β-pinene copolymerized in at least one block. The strip has a strip main body and ear portions disposed on both sides thereof. The strip main body has a thickness (T1) of 0.05 mm to 1.0 mm. The ear portions have a thickness (T2) thinner than the thickness (T1) of the strip main body and a width (W2) of 0.5 mm to 5.0 mm. The strip, a method for manufacturing the strip, a pneumatic tire including the strip, and a method for manufacturing the pneumatic tire will now be described.

<Structure of Tire>

In the present embodiment, the pneumatic tire can have a structure similar to that of the first embodiment.

<Strip>

In the present embodiment, the strip can have a shape similar to that of the first embodiment.

<Polymer Layer Stack>

In the present invention, the inner liner is composed of a first layer disposed inwardly in the tire, and a second layer disposed so as to come into contact with a rubber layer of the carcass ply. At least one of the elastomer compositions of the first layer and the second layer contains an isobutylene-based modified copolymer.

<First Layer>

In the present invention, the elastomer component of the elastomer composition used for the first layer of the inner liner is implemented by an isobutylene-based modified copolymer alone or a mixture of the isobutylene-based modified copolymer and another elastomer component.
The isobutylene-based modified copolymer ranges from 10 percent by mass to 100 percent by mass, preferably 30 percent by mass to 100 percent by mass of the whole elastomer component. When the isobutylene-based modified copolymer is less than 10 percent by mass, vulcanization adhesion strength with the second layer may be decreased.

(Isobutylene-Based Modified Copolymer)

In the present invention, the isobutylene-based modified copolymer is an isobutylene-based modified copolymer made of a polymeric block (A) mainly containing isobutylene and a polymeric block (B) mainly containing an aromatic vinyl-based compound, and is a random copolymer in which at least one block contains β-pinene.

The polymeric block (A) containing isobutylene as a principal component is a polymeric block in which a unit whose soft segment originates in isobutylene occupies more than or equal to 80 percent by weight. Such a polymeric block can be produced by using aliphatic olefins, dienes, vinyl ethers, silanes, vinylcarbazole, acenaphthylene, or the like as a monomer component.

On the other hand, the polymeric block (B) mainly containing an aromatic vinyl-based compound is a polymeric block in which a unit whose hard segment originates in the aromatic vinyl-based compound occupies more than or equal to 80 percent by weight.

Examples of the aromatic vinyl-based compound include styrene, methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethyl styrene, chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, a-chloro-2,6-dichlorostyrene, α-chloro-2,4-dichlorostyrene, β-chloro-2,6-dichlorostyrene, β-chloro-2,4-dichlorostyrene, t-butylstyrene, methoxy styrene, chloromethylstyrene, and bromomethylstyrene, and the like. In terms of cost, styrene and α-methylstyrene are particularly preferable.

In the isobutylene-based modified copolymer of the present invention, at least one block of the polymeric blocks (A) and (B) has been copolymerized at random with β-pinene. In terms of low-temperature characteristics, it is preferable that β-pinene has been copolymerized with the polymeric block (B) mainly containing an aromatic vinyl-based compound.

On the other hand, in terms of adhesive property, it is preferable that β-pinene has been copolymerized with the polymeric block (A) mainly containing isobutylene. In this case, the content of β-pinene is preferably 0.5 percent by weight to 25 percent by weight, and more preferably 2 percent by weight to 25 percent by weight of the isobutylene-based modified copolymer. When the content of β-pinene is less than 0.5 percent by weight, adhesive property is insufficient. When it exceeds 25 percent by weight, it will become fragile, and rubber elasticity is likely to be decreased.

There is no particular restriction on the constitution of the isobutylene-based modified copolymer of the present invention, and any of a block copolymer, a triblock copolymer, a multi-block copolymer, and the like having a straight, branched or star chain structure can be selected. In terms of property balance and molding workability, a constitution in which the polymeric blocks (A) and (B) constitute a diblock copolymer ((A)-(B)) or a triblock copolymer ((B)-(A)-(B)) can be adopted. They can be used each alone or two or more kinds of them can be combined, in order to obtain desired physical properties and molding workability.

Moreover, as for the molecular weight of the isobutylene-based modified copolymer, the weight average molecular weight measured through GPC measurement is preferably 30,000 to 300,000, and particularly preferably 30,000 to 150,000 in terms of flowability, molding workability, rubber elasticity and the like. When the weight average molecular weight is lower than 30,000, mechanical physical properties are less likely to be fully exhibited. On the other hand, when it exceeds 300,000, flowability and workability are likely to deteriorate. Furthermore, in terms of processing stability, the value of the molecular weight distribution of the isobutylene-based modified copolymer (weight average molecular weight/number average molecular weight) is preferably less than or equal to 1.3.

<Method for Producing Isobutylene-Based Modified Copolymer>

A method for producing an isobutylene-based modified copolymer is disclosed in Japanese Patent Laying-Open No. 2010-195969, for example. For example, the isobutylene-based modified copolymer can be produced by polymerizing the above-described monomer components under the presence of a polymerization initiator expressed by a general formula (1) indicated below.

$$(CR^1R^2X)\,nR^3 \qquad (1)$$

(where X is a substituent selected from among a halogen atom, an alkoxy group having 1 to 6 carbon atoms and an acyloxy group, each of $R^1$ and $R^2$ is a hydrogen atom or a monovalent hydrocarbon group having 1 to 6 carbon atoms, $R^1$ and $R^2$ may be the same or may be different, $R^3$ is a monovalent or multivalent aromatic hydrocarbon group, or a monovalent or multivalent aliphatic hydrocarbon group, and n indicates a natural number of 1 to 6).

The compound expressed by the above general formula (1) will be an initiator, and generates carbocation under the presence of Lewis acid or the like to be the starting point of cationic polymerization. Examples of the compound expressed by the above general formula (1) include bis(1-chloro-1-methylethyl) benzene [$C_6H_4(C(CH_3)_2Cl)_2$] and tris(1-chloro-1-methylethyl) benzene [$(ClC(CH_3)_2)_3C_6H_3$].

When producing an isobutylene-based modified copolymer, a Lewis acid catalyst can further be present together. Lewis acid can be used for cationic polymerization, and a metal halide such as $TiCl_4$, $TiBr_4$, $BCl_3$, $BF_3$, $BF_3OEt_2$, $ZnBr_2$, or $AlCl_3$, or an organic metal halide such as $Et_2AlCl$, or $EtAlCl_2$ can be used, for example. The above Lewis acid can be used by 0.1 molar equivalent to 100 molar equivalent relative to the compound expressed by the general formula (1).

Moreover, when producing the isobutylene-based modified copolymer, an electron donor component can also be present together. Examples of this electron donor component include pyridines, amines, amides, and sulfoxides, for example.

Polymerization of the isobutylene-based modified copolymer can be performed in an organic solvent. Here, an organic solvent that does not inhibit cationic polymerization can be used. For example, a halogenated hydrocarbon such as methyl chloride, dichloromethane, chloroform, ethyl chloride, and dichloroethane, alkylbenzenes such as benzene, toluene, xylene, and ethylbenzene, straight aliphatic hydrocarbons such as ethane, propane, butane, pentane, hexane, and heptane, branched aliphatic hydrocarbons such as 2-methylpropane and 2-methylbutane, or cyclic aliphatic hydrocarbons such as cyclohexane, methylcyclohexane and ethylcyclohexane can be used.

In terms of viscosity adjustment and heat dissipation of a copolymer solution to be generated, the amount of the above-mentioned organic solvent is adjusted such that the copolymer has a concentration of 5 percent by mass to 40 percent by mass. It should be noted that the copolymerization reaction in the range of -20°C to -70°C is preferable.

(Blending with Elastomer Component)

As the elastomer component, a thermoplastic elastomer, particularly a styrene-based thermoplastic elastomer is suitably used. Here, the styrene-based thermoplastic elastomer refers to a copolymer including a styrene block as a hard segment. Examples thereof include: a styrene-isoprene-styrene block copolymer ("SIS"); a styrene-isobutylene block copolymer ("SIB"); a styrene-butadiene-styrene block copolymer ("SBS"); a styrene-isobutylene-styrene block copolymer ("SIBS"); a styrene-ethylene butene-styrene block copolymer ("SEBS"); a styrene-ethylene propylene-styrene block copolymer ("SEPS"); a styrene-ethylene ethylene propylene-styrene block copolymer ("SEEPS"); and a styrene-butadiene butylene-styrene block copolymer ("SBBS").

Further, the styrene-based thermoplastic elastomer may have an epoxy group in its molecular structure. A usable example thereof is Epofriend A1020 provided by Daicel Chemical Industries Ltd, i.e., an epoxy modified styrene-butadiene-styrene copolymer (epoxidized SBS) (having a weight average molecular weight of 100,000 and an epoxy equivalent of 500). It should be noted that, among styrene-based thermoplastic elastomers, a styrene-isobutylene-styrene block copolymer is suitably used.

A rubber component can be blended as the elastomer component of the first layer. By blending the rubber component, tackiness with the adjacent carcass ply in an unvulcanized state is imparted, and vulcanization adhesive property with the carcass ply or the insulation can be increased through vulcanization.

The rubber component preferably contains at least one kind selected from the group consisting of a natural rubber, an isoprene rubber, a chloroprene rubber, and a butyl rubber. The blending amount of the rubber component preferably ranges from 5 percent by mass to 20 percent by mass relative to 100 parts by mass of a thermoplastic polymer component.

The first layer has a thickness of 0.05 mm to 0.6 mm. If the thickness of the first layer is less than 0.05 mm, the first layer may be broken due to pressing pressure when vulcanizing the raw tire in which the polymer layer stack is applied to the inner liner, with the result that an air leakage phenomenon may take place in the resulting tire. On the other hand, if the thickness of the first layer exceeds 0.6 mm, the weight of the tire is increased to result in decreased performance in fuel efficiency.

<Second Layer>

In the present invention, the elastomer component in the elastomer composition used for the second layer of the inner liner is composed of a mixture of an isobutylene-based modified copolymer and another elastomer component.

The isobutylene-based modified copolymer ranges from 5 percent by mass to 80 percent by mass, preferably 10 percent by mass to 60 percent by mass of the whole elastomer component. When the isobutylene-based modified copolymer is less than 5 percent by mass, vulcanization adhesion strength with the first layer may be decreased. When it exceeds 80 percent by mass, vulcanization adhesion with the carcass ply may be decreased.

As the elastomer component in the elastomer composition used for the second layer, a thermoplastic elastomer, particularly a styrene-based thermoplastic elastomer is suitably used. Examples of the styrene-based thermoplastic elastomer include: a styrene-isoprene-styrene block copolymer ("SIS"); a styrene-isobutylene block copolymer ("SIB");

a styrene-butadiene-styrene block copolymer ("SBS"); a styrene-isobutylene-styrene block copolymer ("SIBS"); a styrene-ethylene butene-styrene block copolymer ("SEBS"); a styrene-ethylene propylene-styrene block copolymer ("SEPS"); a styrene-ethylene ethylene propylene-styrene block copolymer ("SEEPS"); and a styrene-butadiene butylene-styrene block copolymer ("SBBS").

Particularly, a thermoplastic elastomer composition containing at least one of a styrene-isoprene-styrene block copolymer (SIS) and a styrene-isobutylene block copolymer (SIB) is preferable.

Among the styrene-based thermoplastic elastomers used for the second layer, the SIS and the SIB are particularly suitable.

In the present embodiment, a SIS and a SIB similar to those of the first embodiment can be used.

The second layer preferably has a thickness of 0.01 mm to 0.3 mm. Here, when the second layer is formed of only one layer of a SIS layer or a SIB layer, for example, the thickness of the second layer refers to the thickness of that one layer. On the other hand, when the second layer includes the SIS layer, the SIB layer and the like, the thickness of the second layer refers to the total thickness of these layers.

<Tackifier>

In the present invention, at least one of the first layer and the second layer can be blended with 0.1 part by mass to 100 parts by mass of a tackifier relative to 100 parts by mass of the thermoplastic elastomer component. Here, the term tackifier refers to a compounding agent for increasing tackiness of the thermoplastic elastomer composition. Examples of such a tackifier will be illustrated below.

Typical examples include a C9 petroleum resin and a C5 petroleum resin. Here, a C9 petroleum resin is an aromatic petroleum resin obtained by polymerizing C5 to C9 fractions (mainly C9 fraction) in a mixed state. The C5 to C9 fractions are remnants when obtaining useful compounds, such as ethylene, propylene, and butadiene, by thermally decomposing naphtha. Examples thereof include products such as: ARKON P70, P90, P100, P125, P140, M90, M100, M115, and M135 (each provided by Arakawa Chemical Industries, Ltd, and having a softening point of 70°C to 145°C); I-MARV S100, S110, P100, P125, and P140 (aromatic copolymer-based hydrogenated petroleum resins each provided by Idemitsu Petrochemical Ltd, having a softening point of 100°C to 140°C, having a weight average molecular weight of 700 to 900, and having a bromine number of 2.0g/100g to 6.0g/100g); and Petcoal XL (provided by TOSOH Corporation).

The second layer is disposed between the first layer disposed on the tire inside and the carcass ply, and is required to have adhesive property with them. Therefore, the tackifier is blended in a range of 0.1 part by mass to 100 parts by mass, preferably 1 part by mass to 50 parts by mass relative to 100 parts by mass of the thermoplastic elastomer of the second layer.

<Method for Manufacturing Strip>

In the present embodiment, the strip can be manufactured by a method similar to that of the first embodiment.

<Molding of Inner Liner>

In the present embodiment, the inner liner can be molded by a method similar to that of the first embodiment.

<Method for Manufacturing Pneumatic Tire>

In the present embodiment, a method for manufacturing a pneumatic tire similar to that of the first embodiment can be used.

<Arrangement State of Inner Liner>

Fig. 6 shows arrangement states of the inner liner formed of the layer stack in the vulcanized tire of the present invention. In Fig. 6(a), layer stack PL is composed of first layer PL1 and second layer PL2. When applying layer stack PL to the inner liner for a pneumatic tire and disposing second layer PL2 outwardly in the tire radial direction so as to be in contact with carcass ply C, adhesion strength between second layer PL2 and carcass ply C can be increased in the step of vulcanizing the tire. In the resulting pneumatic tire, the inner liner and the rubber layer of carcass ply C are adhered to each other in an excellent manner. Thus, the pneumatic tire has excellent air permeability resistance and durability.

Example 1

<Material of Strip>

The following thermoplastic elastomers (SIB and SIBS) were used for manufacturing of the strip of the present invention.

[SIBS]

"SIBSTAR 102T (Shore A hardness: 25; the content of the styrene component: 25 percent by mass; weight average molecular weight: 100,000)" provided by Kaneka Corporation was used.

[Mixture of SIBS and Organic derivative of clay mineral]

According to the blendings indicated in Tables 1 and 2, the SIBS (SIBSTAR 102T) and an organic derivative of clay mineral or an inorganic clay mineral were pelletized with a twin-screw extruder (screw diameter: ø50 mm, L/D:30, cylinder temperature: 220°C).
Here, BENTONE 34 provided by Rheox Inc. was used for the organic derivative of clay mineral. Here, the layered clay mineral is a hectorite clay mineral. The organic compound is a dimethyl distearylammonium salt. The cation exchange amount of the organic compound is 100 meg/100 g. It should be noted that Kunipia F provided by KUNIMINE INDUSTRIES CO., LTD. was used for the inorganic clay mineral.

[SIS]

D1161JP (the content of the styrene component: 15 percent by mass and weight average molecular weight: 150,000) provided by Kraton Polymers was used and pelletized with a twin-screw extruder (screw diameter: ø50 mm, L/D: 30, cylinder temperature: 220°C).

<Method for Manufacturing Inner Liner>

As for the above-mentioned SIBS and SIS, commercially available pellets were mixed with other additives by the following blend. This mixture was extruded into a ribbon-shaped sheet (thickness: 0.3 mm) at a screw speed of 80 RPM and an extrusion rate of about 9 m/min using an extruder shown in Figs. 2 and 3 (screw diameter: ø80 mm; L/D: 50; die gap width: 40 mm; cylinder temperature: 220°C).
This sheet was passed between die rolls 14A and 14B to manufacture strip 12A with the ear portions of predetermined shape formed on the opposite ends. It should be noted that ribbon-shaped sheet 12 is a layer stack made by coextruding thermoplastic elastomers of the first layer and the second layer with the above-mentioned extruder. Then, the strip was passed by a free roller 19 and detached from the die rollers to obtain strip 12A having a sectional structure shown in Fig. 4. Here, width W0 and thickness T1 of strip 10, width W2 of ear portion 10B and thickness T2 of the ear portions are indicated in Tables 1 and 2.

<Basic Blending of Strip (First layer, Second layer)>

| | |
|---|---|
| Thermoplastic elastomer (*1) | 100 parts by mass |
| Organic derivative of clay mineral variable | |
| Stearic acid (*2) | 3 parts by mass |
| Zinc oxide (*3) | 5 parts by mass |
| Antioxidant (*4) | 1 part by mass |
| Vulcanization accelerator (*5) | 1 part by mass |

(continued)

| Sulfur (*6) | 0.5 part by mass |
|---|---|

(*1) The SIBS and the SIS were used for thermoplastic elastomers.

(*2) Stearic Acid: "Stearic Acid LUNAC S30" provided by Kao Corp.

(*3) Zinc Oxide: "Zinc White No. 1" provided by Mitsui Mining and Smelting Co., Ltd.

(*4) Antioxidant: "NOCRAC 6C" (N-(1,3-dimethylbutyl)-N'-phenyl-p-phenylenediamine) provided by Ouchi Shinko Chemical (*5) Vulcanization Accelerator: "NOCCELER DM" (di-2-benzothiazolyldisulfide) provided by Ouchi Shinko Chemical (*6) Sulfur: "Sulfur Powder" provided by TSURUMI CHEMICAL INDUSTRIES CO. LTD.

<Manufacturing of Tire>

The above-described strip was wound on the drum as shown in Fig. 5 and molded into the shape of a wide sheet such that adjacent portions of the strip overlap one another to manufacture a sheet for an inner liner. Here, the overlapping width of the strip is more than or equal to 3 mm and less than or equal to 38 mm.

A pneumatic tire of tire size of 195/65R15 was prototyped using an inner liner obtained by molding each strip based on the specifications shown in Tables 1, 2 on a drum. It should be noted that press vulcanization was performed for 20 minutes at 170°C. Then, the tire was cooled for 3 minutes at 100°C without removing the tire from the vulcanization mold, and then was removed from the vulcanization mold.

It should be noted that the ear portions are provided for the strip in the Examples, while in the Comparative Examples, ear portions are not provided for the strip or an organic derivative of clay mineral is not blended in the first layer.

[Table 1]

| | | | Example 1-1 | Example 1-2 | Example 1-3 | Example 1-4 | Example 1-5 | Example 1-6 | Example 1-7 | Example 1-8 | Example 1-9 | Example 1-10 |
|---|---|---|---|---|---|---|---|---|---|---|---|---|
| Layer Stack | First Layer | SIBS | 100 | 100 | 100 | 100 | 100 | 100 | 100 | 100 | 100 | 100 |
| | | Organic derivative of clay mineral | 0.5 | 0.5 | 0.5 | 0.5 | 25 | 25 | 25 | 25 | 0.1 | 50 |
| | | Inorganic Clay Mineral | - | - | - | - | - | - | - | - | - | - |
| | | Thickness [mm] | 0.59 | 0.59 | 0.59 | 0.59 | 0.59 | 0.59 | 0.59 | 0.59 | 0.59 | 0.59 |
| | Second Layer | SIS | 100 | 100 | 100 | 100 | 100 | 100 | 100 | 100 | 100 | 100 |
| | | Thickness [mm] | 0.01 | 0.01 | 0.01 | 0.01 | 0.01 | 0.01 | 0.01 | 0.01 | 0.01 | 0.01 |
| Strip | Shape | | Fig.4(a) | Fig.4(b) | Fig.4(c) | Fig.4(d) | Fig.4(a) | Fig.4(b) | Fig.4(c) | Fig.4(d) | Fig.4(a) | Fig.4(a) |
| | Width (W0) [mm] | | 40 | 10 | 40 | 20 | 40 | 10 | 40 | 20 | 40 | 40 |
| | Thickness (T1) [mm] | | 0.6 | 0.05 | 1.0 | 0.3 | 0.6 | 0.05 | 1 | 0.3 | 0.6 | 0.6 |
| | Width of Ear Portions (W2) [mm] | | 5 | 0.5 | 5 | 3 | 5 | 0.5 | 5 | 3 | 5 | 5 |
| | Thickness of Ear Portions (T2) [mm] | | 0.3 | 0.02 | 0.5 | 0.02 | 0.3 | 0.02 | 0.5 | 0.02 | 0.3 | 0.3 |
| Evaluation | Presence/Absence of Air-in | | A | A | A | A | A | A | A | A | A | A |
| | Index of Flection Crack Growth | | 128 | 125 | 123 | 120 | 138 | 137 | 135 | 133 | 122 | 136 |
| | Index of Rolling Resistance | | 138 | 133 | 130 | 130 | 133 | 128 | 125 | 125 | 126 | 118 |
| | Static Air Pressure Decreasing Ratio (%) | | 1.7 | 1.9 | 1.9 | 2.0 | 1.5 | 1.6 | 1.7 | 1.8 | 2.1 | 1.4 |
| | Uniformity (Index) | | 121 | 120 | 120 | 121 | 125 | 124 | 125 | 124 | 118 | 117 |

EP 2 754 566 B1

[Table 2]

| | | Comparative Example 1-1 | Comparative Example 1-2 | Comparative Example 1-3 | Comparative Example 1-4 | Comparative Example 1-5 | Comparative Example 1-6 | Comparative Example 1-7 | Comparative Example 1-8 | Comparative Example 1-9 |
|---|---|---|---|---|---|---|---|---|---|---|
| Layer Stack | First Layer – SIBS | 100 | 100 | 100 | 100 | 100 | 100 | 100 | 100 | 100 |
| | Organic derivative of clay mineral | 25 | - | - | - | - | 0.05 | 0.05 | 70 | 70 |
| | Inorganic Clay Mineral | - | 0.5 | 0.5 | 25 | 25 | - | - | - | - |
| | Thickness [mm] | 0.59 | 0.59 | 0.59 | 0.59 | 0.59 | 0.59 | 0.59 | 0.59 | 0.59 |
| | Second Layer – SIS | 100 | 100 | 100 | 100 | 100 | 100 | 100 | 100 | 100 |
| | Thickness [mm] | 0.01 | 0.01 | 0.01 | 0.01 | 0.01 | 0.01 | 0.01 | 0.01 | 0.01 |
| Strip | Shape | Rectangle | Fig.4(a) | Fig.4(b) | Fig.4(a) | Fig.4(b) | Fig.4(a) | Fig.4(b) | Fig.4(a) | Fig.4(b) |
| | Width (W0) [mm] | 20 | 40 | 10 | 40 | 10 | 40 | 40 | 40 | 40 |
| | Thickness (T1) [mm] | 0.3 | 0.6 | 0.05 | 0.6 | 0.05 | 0.6 | 0.6 | 0.6 | 0.6 |
| | Width of Ear Portions (W2) [mm] | - | 5 | 0.5 | 5 | 0.5 | 5 | 5 | 5 | 5 |
| | Thickness of Ear Portions (T2) [mm] | - | 0.3 | 0.02 | 0.3 | 0.02 | 0.3 | 0.3 | 0.3 | 0.3 |
| Evaluation | Presence/Absence of Air-in | B | B | B | B | B | B | B | C | C |
| | Index of Flection Crack Growth | 100 | 113 | 110 | 120 | 121 | 103 | 100 | 100 | 100 |
| | Index of Rolling Resistance | 100 | 134 | 136 | 111 | 110 | 100 | 100 | 100 | 100 |
| | Static Air Pressure Decreasing Ratio (%) | 2.0 | 2.7 | 2.7 | 2.3 | 2.3 | 2.4 | 2.5 | 1.8 | 1.8 |
| | Uniformity (Index) | 100 | 100 | 98 | 98 | 95 | 95 | 95 | 92 | 92 |

<Method for Evaluating Tire Performance>

For the pneumatic tires of the Examples shown in Table 1 and Comparative Examples, performance evaluation was conducted by the following methods.

<Air-In Performance>

The inside of each vulcanized tire was checked by appearance and evaluated as follows:

A: In appearance, per tire, the number of air bubbles with a diameter less than or equal to 5 mm was 0, and the number of air bubbles with a diameter exceeding 5 mm was 0.
B: In appearance, per tire, the number of air bubbles with a diameter less than or equal to 5 mm was 1 to 3, and the number of air bubbles with a diameter exceeding 5 mm was 0.
C: In appearance, per tire, the number of air bubbles with a diameter less than or equal to 5 mm was 4 or more, and the number of air bubbles with a diameter exceeding 5 mm was 1 or more. <Flection Crack Growth Test>

In a flection crack growth test, evaluation was made depending on whether the inner liner was cracked or detached. Each trial tire was assembled to a JIS specification rim 15 × 6JJ. The tire internal pressure was set at 150 KPa, which was lower internal pressure than normal internal pressure. The load was set at 600 kg. The speed was set at 100 km/h. The travel distance was set at 20,000 km. Inside of the tire was observed to measure the number of cracks and detachments. The crack growth property of each Example and each Comparative Example was indicated by an index based on the following equation using Comparative Example 1-1 as a reference. It shows that as the numeric value thereof is larger, the flection crack growth is smaller.

$$\text{Index of Flection Crack Growth} = (\text{Number of Cracks in Comparative Example 1-1})/(\text{Number of Cracks in Each Example}) \times 100$$

<Index of Rolling Resistance>

Each trial tire was assembled to a JIS specification rim 15 × 6JJ, and a rolling resistance tester provided by Kobe Steel Ltd. was used to measure rolling resistance thereof while performing traveling at a room temperature (30°C) under conditions of a load of 3.4 kN, an air pressure of 230 kPa, and a speed of 80 km/h. Based on the following equation, the rolling resistance changing ratio (%) of each Example was indicated by an index with Comparative Example 1-1 being 100 as a reference. It shows that as the rolling resistance changing ratio is larger, the rolling resistance is further reduced.

$$\text{Index of Rolling Resistance} = (\text{Rolling Resistance of Comparative Example 1-1}/\text{Rolling Resistance of Example}) \times 100$$

<Static Air Pressure Decreasing Ratio Test>

Each trial tire was assembled to a JIS specification rim 15 × 6JJ, and air was introduced thereinto at an initial air pressure of 300 kPa. Then, the trial tire was left for 90 days at a room temperature. Then, the decreasing ratio of air pressure was calculated after one month. As the numerical value thereof is smaller, the air pressure is less decreased, which is preferable.

<Evaluation of Tire Uniformity>

Using a tire uniformity tester, a radial force variation (RFV) is measured in conformity with JASO C607: 2000 "Test Procedures for Automobile Tire Uniformity", and a relative value is evaluated by an index assuming Comparative Example 1-1 as 100. It shows that as the numerical value thereof is larger, the uniformity is more favorable. Measurement conditions included a rim of 8.0×17, a tire speed of 60 rpm, an air pressure of 200 kPa, and a longitudinal load of 4000 kN.

<Tire Evaluation Result>

In Table 1, Examples 1-1 to 1-4 are instances where the first layer contains 0.5 part by mass of an organic derivative of clay mineral. Examples 1-5 to 1-8 are instances where the organic derivative of clay mineral of the first layer is 25 parts by mass. Example 1-9 is an instance where the organic derivative of clay mineral of the first layer is 0.1 part by mass. Example 1-10 is an instance where the organic derivative of clay mineral of the first layer is 50 parts by mass. Furthermore, the strips of Examples 1-1 to 1-10 have different sectional shapes.

In Table 2, Comparative Example 1-1 is an example where the strip is not provided with ear portions. Comparative Examples 1-2 to 1-5 are examples where ear portions are formed, and the first layer has an inorganic clay mineral blended therein. Comparative Examples 1-6 and 1-7 are instances where ear portions are formed and the first layer has 0.05 part by mass of an organic derivative of clay mineral blended therein, which falls outside the predetermined range. Comparative Examples 1-8 and 1-9 are instances where ear portions are formed and the first layer has 70 parts by mass of an organic derivative of clay mineral blended therein, which falls outside the predetermined range.

The evaluation results shown in Tables 1 and 2 reveal that the Examples of the present invention are superior to Comparative Example 1-1 in the respective results of air-in, flection crack growth test, index of rolling resistance, static air pressure decreasing ratio, and uniformity as a whole.

Example 2

<Manufacturing of Inner Liner>

In accordance with the blending formulation shown in each of Tables 3 to 6, various compounding agents were introduced into and pelletized by a twin-screw extruder (screw diameter: ø50 mm; L/D: 30; cylinder temperature: 220°C). The pellet was extruded into a ribbon-shaped sheet at a screw speed of 80 RPM and an extrusion rate of about 9 m/min using the extruder shown in Figs. 2 and 3 (screw diameter: ø80 mm; L/D: 50; die gap width: 40 mm; cylinder temperature: 220°C). This sheet was then passed between die rolls 14A and 14B to manufacture strip 12A with ear portions of predetermined shape formed on the opposite ends.

It should be noted that ribbon-shaped sheet 12 is a layer made by coextruding thermoplastic elastomers of the first layer and the second layer using the above-mentioned extruder. Then, the strip was passed by a free roller 18 and detached from the die rollers to obtain strip 12A having a sectional structure shown in Fig. 4. Width W0 and thickness T1 of strip 10, width W2 of ear portion 10B and thickness T2 of the ear portions are indicated in Tables 3 to 6.

[Table 3]

| | | Blending | Example 2-1 | Example 2-2 | Example 2-3 | Example 2-4 | Example 2-5 | Example 2-6 | Example 2-7 | Example 2-8 |
|---|---|---|---|---|---|---|---|---|---|---|
| Layer Stack | First Layer | SIBS (*2) | 95.5 | 80 | 60 | 99 | 99 | 95.5 | 80 | 99 |
| | | SMA Base Resin (*3) | 0.5 | 20 | 40 | 0.5 | 0.5 | 0.5 | 20 | 0.5 |
| | | SMA Ester Resin (*4) | - | - | - | 0.5 | - | - | - | 0.5 |
| | | SMA Ammonium Salt Aqueous Solution (*5) | - | - | - | - | 0.5 | - | - | - |
| | | Stearic Acid (*7) | 3 | 3 | 3 | 3 | 3 | 3 | 3 | 3 |
| | | Zinc Oxide (*8) | 5 | 5 | 5 | 5 | 5 | 5 | 5 | 5 |
| | | Antioxidant (*9) | 1 | 1 | 1 | 1 | 1 | 1 | 1 | 1 |
| | | Vulcanization Accelerator (*10) | 1 | 1 | 1 | 1 | 1 | 1 | 1 | 1 |
| | | Sulfur (*11) | 0.5 | 0.5 | 0.5 | 0.5 | 0.5 | 0.5 | 0.5 | 0.5 |
| | | Thickness [mm] | 0.59 | 0.59 | 0.59 | 0.59 | 0.59 | 0.59 | 0.59 | 0.59 |
| | Second Layer | SIS (*12) | 100 | 100 | 100 | 100 | 100 | 100 | 100 | 100 |
| | | Thickness [mm] | 0.01 | 0.01 | 0.01 | 0.01 | 0.01 | 0.01 | 0.01 | 0.01 |
| Strip | Shape | | Fig.4(a) | | | | | Fig.4(b) | | |
| | Width (W0) | | 40 | 40 | 40 | 40 | 40 | 10 | 10 | 10 |
| | Thickness (T1) | | 0.6 | 0.6 | 0.6 | 0.6 | 0.6 | 0.05 | 0.05 | 0.05 |
| | Width of Ear Portions (W2) | | 5.0 | 5.0 | 5.0 | 5.0 | 5.0 | 0.5 | 0.5 | 0.5 |
| | Thickness of Ear Portions (T2) | | 0.3 | 0.3 | 0.3 | 0.3 | 0.3 | 0.02 | 0.02 | 0.02 |
| Evaluation | Presence/Absence of Air-in | | A | A | A | A | A | A | A | A |
| | Index of Flection Crack Growth | | 190 | 160 | 140 | 185 | 155 | 188 | 165 | 180 |
| | Index of Rolling Resistance | | 103 | 105 | 102 | 103 | 102 | 104 | 104 | 104 |
| | Static Air Pressure Decreasing Ratio (%) | | 2.4 | 2.6 | 2.8 | 2.4 | 2.4 | 2.3 | 2.7 | 2.4 |
| | Uniformity | | 121 | 122 | 122 | 123 | 122 | 121 | 122 | 123 |

[Table 4]

| | | Blending | Example 2-9 | Example 2-10 | Example 2-11 | Example 2-12 | Example 2-13 | Example 2-14 |
|---|---|---|---|---|---|---|---|---|
| Layer Stack | First Layer | SIBS (*2) | 95.5 | 80 | 99 | 95.5 | 80 | 99 |
| | | SMA Base Resin (*3) | 0.5 | 20 | 0.5 | 0.5 | 20 | 0.5 |
| | | SMA Ester Resin (*4) | - | - | 0.5 | - | - | 0.5 |
| | | SMA Ammonium Salt Aqueous Solution (*5) | - | - | - | - | - | - |
| | | Stearic Acid (*7) | 3 | 3 | 3 | 3 | 3 | 3 |
| | | Zinc Oxide (*8) | 5 | 5 | 5 | 5 | 5 | 5 |
| | | Antioxidant (*9) | 1 | 1 | 1 | 1 | 1 | 1 |
| | | Vulcanization Accelerator (*10) | 1 | 1 | 1 | 1 | 1 | 1 |
| | | Sulfur (*11) | 0.5 | 0.5 | 0.5 | 0.5 | 0.5 | 0.5 |
| | | Thickness [mm] | 0.59 | 0.59 | 0.59 | 0.59 | 0.59 | 0.59 |
| | Second Layer | SIS (*12) | 100 | 100 | 100 | 100 | 100 | 100 |
| | | Thickness [mm] | 0.01 | 0.01 | 0.01 | 0.01 | 0.01 | 0.01 |
| Strip | Shape | | Fig.4(c) | | | Fig.4(d) | | |
| | Width (W0) [mm] | | 40 | 40 | 40 | 20 | 20 | 20 |
| | Thickness (T1) [mm] | | 1.0 | 1.0 | 1.0 | 0.3 | 0.3 | 0.3 |
| | Width of Ear Portions (W2) [mm] | | 5.0 | 5.0 | 5.0 | 3.0 | 3.0 | 3.0 |
| | Thickness of Ear Portions (T2) [mm] | | 0.5 | 0.5 | 0.5 | 0.02 | 0.02 | 0.02 |
| Evaluation | Presence/Absence of Air-in | | A | A | A | A | A | A |
| | Index of Flection Crack Growth | | 186 | 166 | 178 | 184 | 168 | 175 |
| | Index of Rolling Resistance | | 103 | 103 | 104 | 102 | 104 | 105 |
| | Static Air Pressure Decreasing Ratio (%) | | 2.4 | 2.6 | 2.4 | 2.5 | 2.7 | 2.6 |

[Table 5]

| | | Blending | Example 2-15 | Example 2-16 | Example 2-17 | Example 2-18 | Example 2-19 |
|---|---|---|---|---|---|---|---|
| Layer Stack | First Layer | SIBS (*2) | 95.5 | 80 | 60 | 99 | 99 |
| | | SMA Base Resin (*3) | 0.5 | 20 | 40 | 0.5 | 0.5 |
| | | SMA Ester Resin (*4) | - | - | - | 0.5 | - |
| | | SMA Ammonium Salt Aqueous Solution (*5) | - | - | - | - | 0.5 |
| | | Stearic Acid (*7) | 3 | 3 | 3 | 3 | 3 |
| | | Zinc Oxide (*8) | 5 | 5 | 5 | 5 | 5 |
| | | Antioxidant (*9) | 1 | 1 | 1 | 1 | 1 |
| | | Vulcanization Accelerator (*10) | 1 | 1 | 1 | 1 | 1 |
| | | Sulfur (*11) | 0.5 | 0.5 | 0.5 | 0.5 | 0.5 |
| | | Thickness [mm] | 0.59 | 0.59 | 0.59 | 0.59 | 0.59 |
| | Second Layer | SIS (*12) | 100 | 100 | 100 | 100 | 100 |
| | | Thickness [mm] | 0.01 | 0.01 | 0.01 | 0.01 | 0.01 |
| Strip | Shape | | Fig.4(a) | | | | |
| | Width (W0) [mm] | | 40 | 40 | 40 | 40 | 40 |
| | Thickness (T1) [mm] | | 0.6 | 0.6 | 0.6 | 0.6 | 0.6 |
| | Width of Ear Portions (W2) [mm] | | 5.0 | 5.0 | 5.0 | 5.0 | 5.0 |
| | Thickness of Ear Portions (T2) [mm] | | 0.3 | 0.3 | 0.3 | 0.3 | 0.3 |
| Evaluation | Presence/Absence of Air-in | | A | A | A | A | A |
| | Index of Flection Crack Growth | | 189 | 155 | 140 | 181 | 150 |
| | Index of Rolling Resistance | | 103 | 105 | 102 | 102 | 102 |
| | Static Air Pressure Decreasing Ratio (%) | | 2.4 | 2.5 | 2.6 | 2.6 | 2.6 |
| | Uniformity | | 122 | 120 | 120 | 121 | 119 |

[Table 6]

| | | Blending | Comparative Example 2-1 | Comparative Example 2-2 | Comparative Example 2-3 | Comparative Example 2-4 | Comparative Example 2-5 |
|---|---|---|---|---|---|---|---|
| Layer Stack | First Layer | IIR (*1) | 100 | - | - | - | - |
| | | SIBS (*2) | - | 95.5 | 100 | 50 | 50 |
| | | SMA Base Resin (*3) | - | 0.5 | - | 50 | - |
| | | SMA Ester Resin (*4) | - | - | - | - | 50 |
| | | SMA Ammonium Salt Aqueous Solution (*5) | - | - | - | - | - |
| | | Carbon (*6) | 60 | - | - | - | - |
| | | Stearic Acid (*7) | 3 | 3 | 3 | 3 | 3 |
| | | Zinc Oxide (*8) | 5 | 5 | 5 | 5 | 5 |
| | | Antioxidant (*9) | 1 | 1 | 1 | 1 | 1 |
| | | Vulcanization Accelerator (*10) | 1 | 1 | 1 | 1 | 1 |
| | | Sulfur (*11) | 0.5 | 0.5 | 0.5 | 0.5 | 0.5 |
| | | Thickness [mm] | 0.59 | 0.59 | 0.59 | 0.59 | 0.59 |
| | Second Layer | SIS (*12) | 100 | 100 | 100 | 100 | 100 |
| | | Thickness [mm] | 0.01 | 0.01 | 0.01 | 0.01 | 0.01 |
| Strip | | Shape | Rectangle | Rectangle | Fig.4(a) | Fig.4(a) | Fig.4(a) |
| | | Width (W0) [mm] | 20 | 20 | 40 | 40 | 40 |
| | | Thickness (T1) [mm] | 0.3 | 0.3 | 0.6 | 0.6 | 0.6 |
| | | Width of Ear Portions (W2) [mm] | - | - | 5.0 | 5.0 | 5.0 |
| | | Thickness of Ear Portions (T2) [mm] | - | - | 0.3 | 0.3 | 0.3 |
| Evaluation | | Presence/Absence of Air-in | B | B | C | C | C |
| | | Index of Flection Crack Growth | 100 | 125 | 118 | 83 | 86 |
| | | Index of Rolling Resistance | 100 | 97 | 85 | 89 | 90 |
| | | Static Air Pressure Decreasing Ratio (%) | 2.9 | 2.8 | 3.6 | 3.8 | 3.8 |
| | | Uniformity | 100 | 100 | 101 | 102 | 103 |

EP 2 754 566 B1

(*1) IIR: "Exxon Chlorobutyl 1068" provided by Exxon Mobil Corporation

(*2) SIBS: "SIBSTAR 102T" (Shore A hardness: 25; the content of the styrene: 25 percent by mass) provided by Kaneka Corporation.

(*3) SMA Base Resin: "SMA1000" (styrene component/maleic anhydride component: 50/50; weight average molecular weight: 5,500; acid value of maleic anhydride: 490) provided by Sartomer.

(*4) SMA Ester Resin: "SMA1440" (styrene component/maleic anhydride component: 80/20; weight average molecular weight: 7,000; acid value of maleic anhydride: 200) provided by Sartomer.

(*5) SMA Ammonium Salt Aqueous Solution: "SMA1000H" (pH 9.0) provided by Sartomer.

(*6) Carbon: "SEAST V" (N660, $N_2SA$: $27m^2/g$) provided by Tokai Carbon Co., Ltd.

(*7) Stearic Acid: "Stearic Acid LUNAC S30" provided by Kao Corp.

(*8) Zinc Oxide: "Zinc White No. 1" provided by Mitsui Mining and Smelting Co., Ltd.

(*9) Antioxidant: "NOCRAC 6C" (N-(1,3-dimethylbutyl)-N'-phenyl-p-phenylenediamine) provided by Ouchi Shinko Chemical

(*10) Vulcanization Accelerator: "NOCCELER DM" (di-2-benzothiazolyldisulfide) provided by Ouchi Shinko Chemical

(*11) Sulfur: "Sulfur Powder" provided by TSURUMI CHEMICAL INDUSTRIES CO. LTD.

(*12) SIS: D1161JP (the content of the styrene component: 15 percent by mass; weight average molecular weight: 150,000) provided by Kraton Polymers.

(*13) SIB.

Into a 2L reaction container having an agitator, 589 mL of methylcyclohexane (dried with molecular sieves), 613ml of n-butyl chloride (dried with molecular sieves), and 0.550g of cumyl chloride were added. The reaction container was cooled to -70°C, and then 0.35 mL of α-picoline (2-methylpyridine) and 179 mL of isobutylene were added. Further, 9.4 mL of titanium tetrachloride was added to start polymerization. They were reacted with each other for 2.0 hours while stirring the solution at -70°C. Next, 59 mL of styrene was added to the reaction container, and reaction was continued for another 60 minutes. Thereafter, a large amount of methanol was added to stop the reaction. After removing the solvent and the like from the reaction solution, a polymer was dissolved with toluene and rinsed twice. This toluene solution was added to a methanol mixture to precipitate the polymer. The polymer thus obtained was dried at 60°C for 24 hours, thereby obtaining a styrene-isobutylene diblock copolymer.

Styrene component: 15 percent by mass
Weight average molecular weight: 70,000

<Manufacturing of Tire>

The above-described strip was wound on the drum shown in Fig. 5 and molded into the shape of a wide sheet while forming junctions such that adjacent portions of the strip overlap one another by 5 mm to manufacture a sheet for an inner liner.

A pneumatic tire of tire size of 195/65R15 was prototyped using an inner liner obtained by molding each strip based on the specifications shown in Tables 3 to 6 on a drum. It should be noted that press vulcanization was performed for 20 minutes at 170°C. Then, the tire was cooled for 3 minutes at 100°C without removing the tire from the vulcanization mold, and then was removed from the vulcanization mold.

<Method for Evaluating Tire Performance>

For each pneumatic tire of the Examples and Comparative Examples shown in Tables 3 to 6, performance evaluation was conducted by the following methods.

<Air-In Performance>

The inside of each vulcanized tire was checked by appearance and evaluated on the same basis as Example 1.

<Flection Crack Growth Test>

The flection crack growth test was conducted by a method similar to that of Example 1. The crack growth property of each Example and Comparative Example was indicated by an index based on the following equation using Comparative Example 2-1 as a reference. It shows that as the value thereof is larger, the flection crack growth is smaller.

$$\text{Index of Flection Crack Growth} = (\text{Number of Cracks in Comparative Example 2-1})/(\text{Number of Cracks in Each Example}) \times 100$$

<Index of Rolling Resistance>

Rolling resistance was measured by a method similar to that of Example 1. Based on the following equation, the rolling resistance changing ratio (%) of each Example was indicated by an index using Comparative Example 2-1 as a reference 100. It shows that as the rolling resistance changing ratio is larger, the rolling resistance is further reduced.

$$\text{Index of Rolling Resistance} = (\text{Rolling Resistance of Comparative Example 2-1}/\text{Rolling Resistance of Example}) \times 100$$

<Static Air Pressure Decreasing Ratio Test>

The static air pressure decreasing ratio test was conducted by a method similar to that of Example 1.

<Uniformity (RFV)>

The radial force variation (RFV) was measured in conformity with the uniformity test conditions of JASOC607: 2000. A relative value assuming Comparative Example 2-1 as 100 was indicated by an index. As the index is larger, the uniformity is more excellent. Measurement conditions included a rim of $8.0 \times 17$, a tire speed of 60 rpm, an air pressure of 200 kPa, and a longitudinal load of 4000 kN.

<Tire Evaluation Result>

Examples 2-1 to 2-5 are instances where each strip had the sectional shape shown in Fig. 4(a) and the blending ratio between the styrene-isobutylene-styrene triblock copolymer and the SMA base resin in the first layer was varied. It should be noted that Example 2-4 is an instance where the SMA base resin and the SMA ester resin were blended, and Example 2-5 is an instance where the SMA base resin and the SMA ammonium aqueous solution were blended. In any of the Examples, air-in is not observed, but improvement in Index of Flection Crack Growth, rolling resistance, static air pressure decreasing ratio, and uniformity is recognized.

Examples 2-6 to 2-8 are instances where each strip had the sectional shape shown in Fig. 4(b) and the blending ratio between the styrene-isobutylene-styrene triblock copolymer and the SMA base resin in the first layer was varied.

It should be noted that Example 2-8 is an instance where the SMA base resin and the SMA ester resin were blended. In any of the Examples, air-in was not observed, and improvements in index of flection crack growth, rolling resistance, static air pressure decreasing ratio, and uniformity were recognized.

Examples 2-9 to 2-11 are instances where each strip had the sectional shape shown in Fig. 4(c) and the blending ratio between the styrene-isobutylene-styrene triblock copolymer and the SMA base resin in the first layer was varied. It should be noted that Example 2-11 is an instance where the SMA base resin and the SMA ester resin were blended. In any of the Examples, air-in was not observed, and improvements in index of flection crack growth, rolling resistance, and static air pressure decreasing ratio were recognized.

Examples 2-12 to 2-14 are instances where each strip had the sectional shape shown in Fig. 4(d) and the blending ratio between the styrene-isobutylene-styrene triblock copolymer and the SMA base resin in the first layer was varied. It should be noted that Example 2-14 is an instance where the SMA base resin and the SMA ester resin were blended. In any of the Examples, air-in was not observed, and improvements in index of flection crack growth, rolling resistance, static air pressure decreasing ratio, and uniformity were recognized.

Examples 2-15 to 2-17 are instances where each strip had the sectional shape shown in Fig. 4(a) and the blending ratio between the styrene-isobutylene-styrene triblock copolymer and the SMA base resin in the first layer was varied. It should be noted that the SIB was used for the second layer. Example 2-18 is an instance where the SMA base resin and the SMA ester resin were blended. Example 2-19 is an instance where the SMA base resin and the SMA ammonium aqueous solution were blended. In any of the Examples, air-in was not observed, and improvements in index of flection crack growth, rolling resistance, static air pressure decreasing ratio, and uniformity were recognized.

Comparative Example 2-1 is an instance where the strip had a rectangular sectional shape and IIR was used for the first layer. Comparative Example 2-2 is an instance where the strip has a rectangular sectional shape and a mixture of a styrene-isobutylene-styrene triblock copolymer and an SMA base resin was used for the first layer. Comparative Example 2-3 is an instance where the strip had the sectional shape shown in Fig. 4(a) and only the styrene-isobutylene-styrene triblock copolymer was used for the first layer. Comparative Example 2-4 is an instance where the strip had the sectional shape shown in Fig. 4(a) and 50 percent by mass of the styrene-isobutylene-styrene triblock copolymer and 50 percent by mass of the SMA base resin were blended in the first layer. Comparative Example 2-5 is an instance where the strip had the sectional shape shown in Fig. 4(a) and 50 percent by mass of the styrene-isobutylene-styrene triblock copolymer and 50 percent by mass of the SMA ammonium aqueous solution were blended in the first layer. In any of Comparative Examples, air-in was observed, and deterioration in index of flection crack growth, rolling resistance, and static air pressure decreasing ratio was recognized.

Example 3

<Manufacturing of Inner Liner>

In accordance with the blending formulation shown in each of Tables 7 and 8, various compounding agents were introduced into and pelletized by a twin-screw extruder (screw diameter: ø50 mm; L/D: 30; cylinder temperature: 220°C). This pellet was extruded into a ribbon-shaped sheet at a screw speed of 80 RPM and an extrusion rate of about 9 m/min using the extruder shown in Figs. 2 and 3 (screw diameter: ø80 mm; L/D: 50; die gap width: 40 mm; cylinder temperature: 220°C). This sheet was passed between die rolls 14A and 14B to manufacture strip 12A with ear portions of predetermined shape formed on the opposite ends.

It should be noted that when ribbon-shaped sheet 12 is formed of only one layer of polymer sheet, it is manufactured with one extruder, and in the case of a layer stack, a polymer sheet of the first layer and a thermoplastic elastomer of the second layer are coextruded to manufacture the layer stack. Then, the strip was passed by free roller 18 and detached from the die rollers to obtain strip 12A. The enlarged sectional structure of strip 12A is shown as strip 10 in Fig. 4. Here, width W0 and thickness T1 of strip 10, width W2 of ear portion 10B and thickness T2 of the ear portions are indicated in Tables 7 and 9 to 11.

The blendings of the first layer and the second layer of each strip manufactured by the above-described manufacturing method are shown in Tables 7 and 8. Table 7 shows the blending of a polymer sheet (the first layer of the layer stack). Blends A1 to A6 are instances where a mixture of IIR and/or a natural rubber was used for the SIBS as a polymer component. Each of Blends B1 to B7 is the SIBS or the IIR alone, or a mixture of them and NR, which falls outside the scope of the present invention.

Table 8 shows the blending of the second layer, and shows instances where each of the SIS, the SIB and the epoxidized SBS was used alone, or a mixture of them with a natural rubber or a butyl rubber was used, as a polymer component.

<Manufacturing of Tire>

The above-described strip was wound on the drum shown in Fig. 5 and molded into the shape of a wide sheet while forming junctions where adjacent portions of the strip overlap one another by 5 mm to manufacture a sheet for an inner liner.

Examples S1 to S6 and Comparative Examples S1 to S7 of Table 7 each show an example of a pneumatic tire in which a polymer sheet of one layer was used for the strip. Example 3-1 to 3-23 and Comparative Examples 3-1 to 3-8 of Tables 9 to 11 each show an example of a pneumatic tire in which a layer stack was used for the strip. A pneumatic tire of tire size of 195/65R15 was prototyped using an inner liner obtained by molding each strip on a drum. Press vulcanization was performed for 20 minutes at 170°C. Then, the tire was cooled for 3 minutes at 100°C without removing the tire from the vulcanization mold, and then was removed from the vulcanization mold. The specifications of tires of the Examples of the present invention and the Comparative Examples as well as the performance test results thereof are shown in Tables 7 and 9 to 11.

[Table 7]

| Blending of Polymer Sheet (First Layer) | | | Example | | | | | | Comparative Example | | | | | | |
|---|---|---|---|---|---|---|---|---|---|---|---|---|---|---|---|
| | | | S1 | S2 | S3 | S4 | S5 | S6 | S1 | S2 | S3 | S4 | S5 | S6 | S7 |
| Blend No. | | | A1 | A2 | A3 | A4 | A5 | A6 | B1 | B2 | B3 | B4 | B5 | B6 | B7 |
| Strip | Blend (parts by mass) | IIR (*1) | 60 | - | 77.5 | - | 95 | - | 100 | - | - | 50 | - | 98 | - |
| | | NR (*2) | - | 60 | - | 77.5 | - | 95 | - | - | - | - | 50 | 0 | 98 |
| | | SIBS (*3) | 40 | 40 | 22.5 | 22.5 | 5 | 5 | - | 100 | 100 | 50 | 50 | 2 | 2 |
| | | Carbon Black (*4) | - | - | - | - | - | - | 50 | - | - | - | - | - | - |
| | | Stearic Acid (*5) | 3 | 3 | 3 | 3 | 3 | 3 | 3 | - | 3 | 3 | 3 | 3 | 3 |
| | | Zinc Oxide (*6) | 5 | 5 | 5 | 5 | 5 | 5 | 5 | - | 5 | 5 | 5 | 5 | 5 |
| | | Antioxidant (*7) | 1 | 1 | 1 | 1 | 1 | 1 | 1 | - | 1 | 1 | 1 | 1 | 1 |
| | | Vulcanization Accelerator (*8) | 1 | 1 | 1 | 1 | 1 | 1 | 1 | - | 1 | 1 | 1 | 1 | 1 |
| | | Sulfur (*9) | 0.5 | 0.5 | 0.5 | 0.5 | 0.5 | 0.5 | 0.5 | - | 0.5 | 0.5 | 0.5 | 0.5 | 0.5 |
| | Structure | Shape | Fig.4(a) | | | | | | | | | | | | |
| | | Width (W0) (mm) | 40 | | | | | | | | | | | | |
| | | Thickness (T1) (mm) | 0.6 | | | | | | | | | | | | |
| | | Width of Ear Portions (W2) (mm) | 5.0 | | | | | | | | | | | | |
| | | Thickness of Ear Portions (T2) (mm) | 0.3 | | | | | | | | | | | | |
| | Evaluation | Mooney Viscosity (ML$_{1+4}$, 130°C) | 28 | 29 | 31 | 31 | 44 | 45 | 50 | 8 | 11 | 25 | 25 | 45 | 46 |
| | | Index of Unvulcanization Tackiness with Carcass Layer | 60 | 66 | 76 | 83 | 96 | 102 | 100 | 10 | 10 | 50 | 54 | 99 | 102 |
| | | Index of Vulcanization Adhesion Strength with Carcass Layer | 80 | 86 | 93 | 97 | 99 | 101 | 100 | 10 | 10 | 51 | 54 | 100 | 100 |
| | | Index of Weight Saving Effect | 140 | 140 | 125 | 125 | 110 | 110 | 100 | 210 | 210 | 150 | 150 | 101 | 101 |
| | | Index of Rolling Resistance | 106 | 106 | 105 | 105 | 103 | 102 | 100 | 110 | 110 | 105 | 105 | 100 | 101 |
| | | Static Air Pressure Decreasing Ratio (%/month) | 2.2 | 2.2 | 2.2 | 2.2 | 2.5 | 2.5 | 4 | 2.4 | 2.3 | 2.7 | 3.1 | 3.8 | 4 |
| | | Overall Judgment | A | A | A | A | A | A | C | C | C | C | C | B | B |

[Table 8]

<table>
<tr><td rowspan="2" colspan="2">Blending of Second Layer</td><td colspan="16">Blend No.</td></tr>
<tr><td>1</td><td>2</td><td>3</td><td>4</td><td>5</td><td>6</td><td>7</td><td>8</td><td>9</td><td>10</td><td>11</td><td>12</td><td>13</td><td>14</td><td>15</td><td>16</td></tr>
<tr><td rowspan="10">Blend (parts by mass)</td><td>SIS (*10)</td><td>100</td><td>100</td><td>-</td><td>-</td><td>-</td><td>-</td><td>10</td><td>-</td><td>-</td><td>10</td><td>-</td><td>-</td><td>80</td><td>80</td><td>5</td><td>85</td></tr>
<tr><td>SIB (*11)</td><td>-</td><td>-</td><td>100</td><td>100</td><td>-</td><td>-</td><td>-</td><td>10</td><td>-</td><td>-</td><td>10</td><td>-</td><td>-</td><td>-</td><td>-</td><td>-</td></tr>
<tr><td>Epoxidized SBS (*12)</td><td>-</td><td>-</td><td>-</td><td></td><td>100</td><td>100</td><td>-</td><td>-</td><td>10</td><td>-</td><td>-</td><td>10</td><td>-</td><td>-</td><td>-</td><td>-</td></tr>
<tr><td>Natural Rubber (*13)</td><td>-</td><td>-</td><td>-</td><td>-</td><td>-</td><td>-</td><td>90</td><td>90</td><td>90</td><td>-</td><td>-</td><td>-</td><td>20</td><td>-</td><td>95</td><td>-</td></tr>
<tr><td>Butyl Rubber (*14)</td><td>-</td><td>-</td><td>-</td><td>-</td><td>-</td><td>-</td><td>-</td><td>-</td><td>-</td><td>90</td><td>90</td><td>90</td><td>-</td><td>20</td><td>-</td><td>15</td></tr>
<tr><td>Stearic Acid (*5)</td><td>-</td><td>3</td><td>-</td><td>3</td><td>-</td><td>3</td><td>3</td><td>3</td><td>3</td><td>3</td><td>3</td><td>3</td><td>3</td><td>3</td><td>3</td><td>3</td></tr>
<tr><td>Zinc Oxide (*6)</td><td>-</td><td>5</td><td>-</td><td>5</td><td>-</td><td>5</td><td>5</td><td>5</td><td>5</td><td>5</td><td>5</td><td>5</td><td>5</td><td>5</td><td>5</td><td>5</td></tr>
<tr><td>Antioxidant (*7)</td><td>-</td><td>1</td><td>-</td><td>1</td><td>-</td><td>1</td><td>1</td><td>1</td><td>1</td><td>1</td><td>1</td><td>1</td><td>1</td><td>1</td><td>1</td><td>1</td></tr>
<tr><td>Vulcanization Accelerator (*8)</td><td>-</td><td>1</td><td>-</td><td>1</td><td>-</td><td>1</td><td>1</td><td>1</td><td>1</td><td>1</td><td>1</td><td>1</td><td>1</td><td>1</td><td>1</td><td>1</td></tr>
<tr><td>Sulfur (*9)</td><td>-</td><td>0.5</td><td>-</td><td>0.5</td><td>-</td><td>0.5</td><td>0.5</td><td>0.5</td><td>0.5</td><td>0.5</td><td>0.5</td><td>0.5</td><td>0.5</td><td>0.5</td><td>0.5</td><td>0.5</td></tr>
<tr><td rowspan="2">Evaluation</td><td>Index of Unvulcanization Tackiness with Carcass Layer</td><td>100</td><td>101</td><td>100</td><td>101</td><td>100</td><td>103</td><td>101</td><td>103</td><td>102</td><td>101</td><td>102</td><td>103</td><td>102</td><td>102</td><td>101</td><td>102</td></tr>
<tr><td>Index of Vulcanization Adhesion Strength with Carcass Layer</td><td>100</td><td>102</td><td>97</td><td>103</td><td>98</td><td>102</td><td>103</td><td>104</td><td>103</td><td>102</td><td>103</td><td>103</td><td>102</td><td>103</td><td>98</td><td>97</td></tr>
</table>

(*1) IIR: "Exxon Chlorobutyl 1066" provided by Exxon Mobil Corporation

(*2) NR: Natural Rubber TSR20

(*3) SIBS: "SIBSTAR 102T" provided by Kaneka Corporation (a styrene-isobutylene-styrene triblock copolymer, weight-average molecular weight of 100,000, styrene unit content of 25 percent by mass, Shore A hardness of 25)

(*4) Carbon Black: "Seast V" provided by Tokai Carbon Co., Ltd. (N660, nitrogen adsorption specific surface area: $27m^2/g$)

(*5) Stearic Acid: "Stearic Acid Lunac S30" provided by Kao Corporation

(*6) Zinc Oxide: "Zinc White No.1" provided by Mitsui Mining & Smelting Co., Ltd.

(*7) Antioxidant: "Noclac 6C" (N-(1,3-dimethylbutyl)-N'-phenyl-p-phenylenediamine) provided by Ouchi Shinko Chemical Industrial Co., Ltd.

(*8) Vulcanization Accelerator: "Nocceler DM" (di-2-benzothiazolyldisulfide) provided by Ouchi Shinko Chemical Industrial Co., Ltd.

(*9) Sulfur: "Sulfur Powder" provided by Tsurumi Chemical Industry Co., Ltd.

(*10) SIS: "D1161JP" (a styrene-isoprene-styrene triblock copolymer, weight-average molecular weight of 150,000, styrene unit content of 15 percent by mass) provided by Kraton Performance Polymers Inc.

(*11) SIB: the SIB obtained by the above-described (Production of SIB) (a styrene-isobutylene diblock copolymer, weight-average molecular weight of 70,000, styrene unit content of 15 percent by mass)

(*12) Epoxidized SBS: "Epofriend A1020" (an epoxy-modified styrene-butadiene-styrene copolymer, weight-average molecular weight of 10,000, epoxy equivalent of 500) provided by Daicel Chemical Industries, Ltd.

(*13) Natural Rubber: TSR20

(*14) Butyl Rubber: "Exxon Chlorobutyl 1066" provided by Exxon Mobil Corporation

[Table 9]

| | | Example | | | | | | | | | | | |
|---|---|---|---|---|---|---|---|---|---|---|---|---|---|
| | | 3-1 | 3-2 | 3-3 | 3-4 | 3-5 | 3-6 | 3-7 | 3-8 | 3-9 | 3-10 | 3-11 | 3-12 |
| Layer Stack Structure | First Layer (Blend No.) | A1 | A1 | A1 | A1 | A2 | A3 | A4 | A5 | A6 | A1 | A1 | A2 |
| | Second Layer (Blend No.) | 2 | 2 | 2 | 2 | 2 | 2 | 2 | 2 | 2 | 7 | 10 | 7 |
| Strip | Shape | Fig.4(a) | Fig.4(b) | Fig.4(c) | Fig.4(d) | Fig.4(a) | | | | | | | |
| | Width (W0) (mm) | 40 | 10 | 40 | 20 | 40 | | | | | | | |
| | Thickness (T1) (mm) | 0.6 | 0.05 | 1.0 | 0.3 | 0.6 | | | | | | | |
| | Width of Ear Portions (W2) (mm) | 5.0 | 0.5 | 5.0 | 3.0 | 5.0 | | | | | | | |
| | Thickness of Ear Portions (T2) (mm) | 0.3 | 0.02 | 0.5 | 0.02 | 0.3 | | | | | | | |
| Evaluation | Mooney Viscosity (ML$_{1+4}$, 130°C) | 28 | 28 | 28 | 28 | 29 | 34 | 38 | 44 | 45 | 39 | 37 | 39 |
| | Index of Unvulcanization Tackiness between First and Second Layers | 75 | 74 | 75 | 75 | 85 | 80 | 85 | 83 | 93 | 78 | 88 | 85 |
| | Index of Vulcanization Adhesion Strength between First and Second Layers | 85 | 86 | 84 | 84 | 95 | 88 | 101 | 95 | 105 | 100 | 110 | 107 |
| | Index of Weight Saving Effect | 141 | 143 | 140 | 144 | 140 | 125 | 125 | 110 | 110 | 140 | 140 | 140 |
| | Index of Rolling Resistance | 105 | 103 | 104 | 104 | 106 | 105 | 105 | 103 | 102 | 105 | 105 | 103 |
| | Static Air Pressure Decreasing Ratio (%/month) | 2.1 | 2.1 | 2.2 | 2.2 | 2.2 | 2.2 | 2.2 | 2.5 | 2.5 | 2 | 1.9 | 2.2 |
| | Overall Judgment | A | A | A | A | A | A | A | A | A | A | A | A |
| | Uniformity | 110 | 108 | 107 | 106 | 107 | 108 | 109 | 109 | 108 | 108 | 108 | 109 |

EP 2 754 566 B1

43

[Table 10]

| | | Example | | | | | | | | | | |
|---|---|---|---|---|---|---|---|---|---|---|---|---|
| | | 3-13 | 3-14 | 3-15 | 3-16 | 3-17 | 3-18 | 3-19 | 3-20 | 3-21 | 3-22 | 3-23 |
| Layer Stack | First Layer (Blend No.) | A2 | A3 | A3 | A4 | A4 | A5 | A5 | A6 | A6 | A1 | A1 |
| Structure | Second Layer (Blend No.) | 10 | 7 | 10 | 7 | 10 | 7 | 10 | 7 | 10 | 13 | 14 |
| Strip | Shape | Fig.4(a) | | | | | | | | | | |
| | Width (W0) (mm) | 40 | | | | | | | | | | |
| | Thickness (T1) (mm) | 0.6 | | | | | | | | | | |
| | Width of Ear Portions (W2) (mm) | 5.0 | | | | | | | | | | |
| | Thickness of Ear Portions (T2) (mm) | 0.3 | | | | | | | | | | |
| Evaluation | Mooney Viscosity (ML$_{1+4}$, 130°C) | 37 | 42 | 41 | 42 | 41 | 44 | 46 | 45 | 45 | 37 | 35 |
| | Index of Unvulcanization Tackiness between First and Second Layers | 75 | 70 | 85 | 82 | 70 | 98 | 97 | 102 | 102 | 75 | 85 |
| | Index of Vulcanization Adhesion Strength between First and Second Layers | 97 | 95 | 105 | 102 | 93 | 99 | 99 | 101 | 101 | 92 | 102 |
| | Index of Weight Saving Effect | 140 | 110 | 110 | 110 | 110 | 110 | 109 | 110 | 110 | 110 | 110 |
| | Index of Rolling Resistance | 104 | 103 | 104 | 102 | 103 | 103 | 104 | 102 | 103 | 105 | 106 |
| | Static Air Pressure Decreasing Ratio (%/month) | 2 | 2.1 | 2 | 2.2 | 2 | 2.5 | 2.5 | 2.5 | 2.4 | 1.9 | 1.8 |
| | Overall Judgment | A | A | A | A | A | A | A | A | A | A | A |
| | Uniformity | 108 | 108 | 107 | 108 | 107 | 107 | 109 | 108 | 107 | 108 | 109 |

EP 2 754 566 B1

44

**EP 2 754 566 B1**

[Table 11]

| | | Comparative Example | | | | | | | |
|---|---|---|---|---|---|---|---|---|---|
| | | 3-1 | 3-2 | 3-3 | 3-4 | 3-5 | 3-6 | 3-7 | 3-8 |
| Layer Stack Structure | First Layer (Blend No.) | B1 | B2 | B3 | B4 | B5 | B6 | B7 | B1 |
| | Second Layer (Blend No.) | 2 | 2 | 2 | 2 | 2 | 2 | 7 | 2 |
| Strip | Shape | Fig.4(a) | | | | Rectangle | | | |
| | Width (W0) (mm) | 40 | | | | 20 | | | |
| | Thickness (T1) (mm) | 0.6 | | | | 0.3 | | | |
| | Width of Ear Portions (W2) (mm) | 5.0 | | | | - | | | |
| | Thickness of Ear Portions (T2) (mm) | 0.3 | | | | - | | | |
| Evaluation | Mooney Viscosity (ML$_{1+4}$, 130°C) | 50 | 10 | 15 | 25 | 26 | 48 | 49 | 50 |
| | Index of Unvulcanization Tackiness between First and Second Layers | 100 | 20 | 20 | 45 | 45 | 95 | 105 | 100 |
| | Index of Vulcanization Adhesion Strength between First and Second Layers | 100 | 20 | 20 | 45 | 50 | 99 | 109 | 100 |
| | Index of Weight Saving Effect | 100 | 200 | 200 | 150 | 150 | 100 | 100 | 97 |
| | Index of Rolling Resistance | 100 | 110 | 110 | 105 | 105 | 101 | 101 | 96 |
| | Static Air Pressure Decreasing Ratio (%/month) | 4 | 2 | 2 | 3 | 3 | 3.9 | 3.9 | 4.5 |
| | Overall Judgment | C | C | C | C | C | B | B | C |
| | Uniformity | 100 | 89 | 88 | 78 | 79 | 81 | 77 | 68 |

In Tables 7 to 11, a method for evaluating each strip and each pneumatic tire will be described below.

(a) Mooney Viscosity of First Layer

In conformity to JIS K-6300 "Test Method of Unvulcanized Rubber", a Mooney viscosity tester "Moony Viscometer SMV-202" available from Shimadzu Corporation was used, and a small rotor was rotated under the temperature condition of 130°C preheated for 1 minute, then, the Mooney viscosity (ML$_{1+4}$, 130°C) of the polymer composition after the lapse of 4 minutes was measured. It shows that as the Mooney viscosity is smaller, the workability is more excellent.

(b1) Index of Unvulcanization Tackiness with Carcass Layer

A sheet of a carcass layer (blending: 100 parts by mass of a styrene-butadiene rubber, 50 parts by mass of carbon black, 2 parts by mass of sulfur, thickness: 2.0 mm) was prepared. The polymer sheet and the sheet of the carcass layer were bonded together and held at 100 gf for 30 seconds, and force for detaching them was measured as the tackiness before vulcanization. By the following equation, the adhesion strength before vulcanization of each blend was indicated by an index using Blend B1 as a reference (100) for the first layer, and using Blend No. 1 as a reference (100) for the second layer. It shows that as the index of tackiness before vulcanization is larger, the tackiness before vulcanization is stronger, which is preferable.

$$\text{(Index of Tackiness before Vulcanization)} = \text{(Index of Tackiness before Vulcanization of Each Blend)}/\text{(Index of Tackiness before Vulcanization of Blend B1 or Blend No.1)} \times 100$$

(b2) Index of Unvulcanization Tackiness between First and Second Layers

The polymer sheets of the first and second layers were bonded together and held at 100 gf for 30 seconds. Then, force for detaching them was measured as the tackiness before vulcanization. The tackiness before vulcanization of each blend was indicated by an index by the following equation using Comparative Example 3-1 as a reference (100). It shows that as the index of tackiness before vulcanization is larger, the tackiness before vulcanization is stronger, which is preferable.

$$\text{(Index of Tackiness before Vulcanization)} = \text{(Tackiness before Vulcanization of Each Blend)/(Tackiness before Vulcanization of Comparative Example 3-1)} \times 100$$

(c1) (Vulcanization Adhesion Strength with Carcass Layer)

The polymer sheet and the sheet of the carcass layer were bonded together, and were heated at 170°C for 20 minutes to obtain a sample for measuring vulcanization adhesion strength. Detachment force was measured by a tensile detachment test, thereby obtaining vulcanization adhesion strength. By the following equation, vulcanization adhesion strength of each blend was indicated by an index using Comparative Example S1 as a reference (100) for the first layer and using Blend No. 1 (100) as a reference for the second layer. It shows that as the index of vulcanization adhesion strength is larger, the vulcanization adhesion strength is stronger, which is preferable.

$$\text{(Index of Vulcanization Adhesion Strength)} = \text{(Vulcanization Adhesion Strength of Each Blend)/(Vulcanization Adhesion Strength of Comparative Example S1 or Blend No.1)} \times 100$$

(c2) (Vulcanization Adhesion Strength between First and Second Layers)

The polymer sheets of the first and second layers were bonded together, and were heated at 170°C for 20 minutes to obtain a sample for measuring vulcanization adhesion strength. Detachment force was measured by a tensile detachment test, thereby obtaining vulcanization adhesion strength. The vulcanization adhesion strength of each blend was indicated by an index by the following equation using Comparative Example 3-1 as a reference (100). It shows that as the index of vulcanization adhesion strength is larger, the vulcanization adhesion strength is stronger, which is preferable.

$$\text{(Index of Vulcanization Adhesion Strength)} = \text{(Vulcanization Adhesion Strength of Each Blend)/(Vulcanization Adhesion Strength of Comparative Example 3-1)} \times 100$$

Moreover, evaluation of each pneumatic tire was carried out based on the following methods.

(d) Index of Weight Saving Effect

By the following equation, the weight of each pneumatic tire was indicated by an index using Comparative Example S1 as a reference (100) in the case where a polymer sheet was used for an inner liner, and using Comparative Example 3-1 as a reference (100) in the case where a layer stack was used for an inner liner. It shows that as the index of weight saving effect is larger, the tire weight is lighter, which is preferable.

$$\text{(Index of Weight Saving Effect)} = \text{(Tire Weight of Comparative Example S1 or Comparative Example 3-1)/(Tire Weight of Each Blend)} \times 100.$$

(e) Index of Rolling Resistance

Each manufactured pneumatic tire of size of 195/65R15 was assembled to a JIS specification rim 15 × 6JJ, and a rolling resistance tester provided by Kobe Steel Ltd. was used to measure rolling resistance thereof while performing traveling at a room temperature (38°C) under conditions of a load of 3.4 kN, an air pressure of 230 kPa, and a speed of 80 km/h. By the following equation, the rolling resistance of each blend was indicated by an index using Comparative Example S1 as a reference (100) in the case where a polymer sheet was used for the inner liner, and using Comparative Example 3-1 as a reference (100) in the case where a layer stack was used for the inner liner. It shows that as the index of rolling resistance is larger, the rolling resistance is reduced, which is preferable.

$$(\text{Index of Rolling Resistance}) = (\text{Rolling Resistance of Comparative Example}$$
$$\text{S1 or Comparative Example 3-1})/(\text{Rolling Resistance of Each Blend}) \times 100$$

(f) Static Air Pressure Decreasing Ratio

Each produced tire of 195/65R15 size was mounted on a JIS standard rim 15 × 6JJ and an initial air pressure of 300 kPa was applied. The tire was left at room temperatures for 90 days, following which an air pressure decreasing ratio (%/month) was calculated.

(g) Uniformity

A tire uniformity tester was used to measure the radial force variation (RFV) in conformity with JASO C607: 2000 "Test Procedures for Automobile Tire Uniformity." A relative value was indicated by an index using Comparative Example 3-1 as a reference (100). As the index is larger, the uniformity is more excellent. Measurement conditions were a rim of 8.0×17, a tire revolving speed of 60 rpm, an air pressure of 200 kPa, and a longitudinal load of 4000 kN.

Overall Judgment

Criteria for overall judgment are as shown in Table 12.

[Table 12]

| Overall Judgment | Judgment Criteria | (a) Mooney Viscosity of First Layer | (b1) Index of Unvulcanization Tackiness with Carcass Layer / (b2) Unvulcanization Tackiness between First and Second Layers | (c1) Index of Vulcanization Adhesion Strength with Carcass Layer / (c2) Vulcanization Adhesion Strength between First and Second Layers | (e) Index of Weight Saving Effect | (d) Index of Rolling Resistance | (f) Static Air Pressure Decreasing Ratio (%/month) |
|---|---|---|---|---|---|---|---|
| A | All of (a) to (f) satisfy conditions on the right. | 45 or less | 60 or more | 80 or more | 110 or more | 100 or more | 2.5 or less |
| B | Any one of (a) to (f) satisfies a corresponding condition on the right. When several judgments apply, a lower evaluation was adopted. | 46 to 50 | 40 to 59 | 60 to 79 | 100 to 109 | 90 to 99 | 2.6 to 3.9 |
| C | Any one of (a) to (f) satisfies a corresponding condition on the right. When several judgments apply, a lower evaluation was adopted. | 51 or more | 39 or less | 59 or less | 99 or less | 89 or less | 4.0 or more |

EP 2 754 566 B1

<Examples S1 to S6>

Examples S1 to S6 and Comparative Examples S1 to S7 are exemplary pneumatic tires in which a single layer of a polymer sheet was used for the strip. It is clear that although Examples S1 to S6 are each inferior to Comparative Example S1 in index of unvulcanization tackiness and index of vulcanization adhesion strength of the strip, they are excellent in performance of the pneumatic tire as a whole.

Example 3-5 to 3-23 and Comparative Examples 3-1 to 3-8 are examples where the strip had a sectional shape shown in Fig. 4(a) and the combination of blends of the first and second layers was varied. Although some of Examples 3-1 to 3-23 are inferior to Comparative Example 3-1 in index of unvulcanization tackiness and index of vulcanization adhesion strength of the strip, they are excellent in performance of the pneumatic tire as a whole.

Example 4

Examples and Comparative Examples of the present invention were made by the following methods.

<Preparation of Elastomer Component>

Elastomers used for the first and second layers of the present invention were prepared as follows.

(1) Isoprene-Based Modified Copolymer

(1-1) Component A-1: (styrene/β-pinene)-isobutylene-(styrene/β-pinene) block copolymer (β-pinene content: 9.7 percent by weight, number average molecular weight (Mn): 103,000).

A method for producing Component A-1 is as follows.

Air inside a container of a 2L-separable flask was substituted by nitrogen, and 31.0 mL of n-hexane dried with molecular sieves and 294.6 mL of similarly dried butyl chloride were added using a syringe. A polymerization container was immersed and cooled in a mixture bath of dry ice and methanol of -70°C. Then, a liquid deliver tube made of Teflon (registered trademark) was connected to a liquefaction and collection tube made of a pressure-resistant glass with a three-way stop cock containing 88.9 mL (941.6 mmol) of isobutylene monomer, and isobutylene monomer was delivered into the polymerization container by means of nitrogen pressure. Then, 0.148 g (0.6 mmol) of p-dicumylchloride and 0.07 g (0.8 mmol) of α-picoline were added. Furthermore, 0.87 mL (7.9 mmol) of titanium tetrachloride was added to start polymerization. The polymerized solution was agitated at a similar temperature for 1.5 hours from the start of polymerization, and then, 1mL of the polymerized solution was extracted from the polymerized solution as a sample. Then, 10.4 g (99.4 mmol) of styrene monomer and 6.8 g (49.7 mmol) of β-pinene which had been cooled to -70°C were uniformly agitated and added into the polymerization container. After 45 minutes since the addition of styrene and β-pinene, approximately 40 mL of methanol was added to terminate the reaction. After evaporating the solvent and the like from the reaction solution, the reaction solution was dissolved with toluene and rinsed twice. The toluene solution was added to a large amount of methanol to precipitate a polymer. The polymer thus obtained was vacuum dried at 60°C for 24 hours. The molecular weight of the block copolymer obtained through the GPC method was measured. The number average molecular weight (Mn) is 103,000, and Mw/Mn is 1.21.

(1-2) Component A-2: (styrene/β-pinene)-isobutylene-(styrene/β-pinene) block copolymer (β-pinene content: 5.3 percent by weight, number average molecular weight: 10,7000).

A method for producing Component A-2 is as follows.

Air inside a container of a 2L-separable flask was substituted by nitrogen, and 31.0 mL of n-hexane dried with molecular sieves and 294.6 mL of similarly dried butyl chloride were added using a syringe. A polymerization container was immersed and cooled in a mixture bath of dry ice and methanol of -70°C. Then, a liquid deliver tube made of Teflon (registered trademark) was connected to a liquefaction and collection tube made of a pressure-resistant glass with a three-way stop cock containing 88.9 mL (941.6 mmol) of isobutylene monomer, and isobutylene monomer was delivered into the polymerization container by means of nitrogen pressure. Then, 0.148 g (0.6 mmol) of p-dicumylchloride and 0.07 g (0.8 mmol) of α-picoline were added.

Next, 0.87 mL (7.9 mmol) of titanium tetrachloride was added to start polymerization. The polymerized solution was agitated at a similar temperature for 1.5 hours from the start of polymerization, and then, 1mL of the polymerized solution was extracted from the polymerized solution as a sample. Then, 10.4 g (99.4 mmol) of styrene monomer and 3.6 g (26.3 mmol) of β-pinene which had been cooled to -70°C were uniformly agitated and added into the polymerization container. After 45 minutes since the addition of styrene and β-pinene, approximately 40 mL of methanol was added to terminate the reaction. After evaporating the solvent and the like from the reaction solution, the reaction solution was dissolved with toluene and rinsed twice. The toluene solution was added to a large amount of methanol to precipitate a polymer. The polymer thus obtained was vacuum dried at 60°C for 24 hours. The molecular weight of the block copolymer obtained through the GPC method was measured. The number average molecular weight (Mn) of the block copolymer is 107,000, and Mw/Mn is 1.23.

(1-3) Component A-3: styrene-(isobutylene/β-pinene)-styrene block copolymer (β-pinene content: 5.3 percent by weight, the number average molecular weight: 10,9000).

A method for producing Component A-3 is as follows.
Air inside a container of a 2L-separable flask was substituted by nitrogen, and 31.0 mL of n-hexane dried with molecular sieves and 294.6 mL of butyl chloride dried with molecular sieves were added using a syringe. A polymerization container was immersed and cooled in a mixture bath of dry ice and methanol of -70°C, and 3.6 g (26.3 mmol) of β-pinene was added.
Then, a liquid deliver tube made of Teflon (registered trademark) was connected to a liquefaction and collection tube made of a pressure-resistant glass with a three-way stop cock containing 88.9 mL (941.6 mmol) of isobutylene monomer, and isobutylene monomer was delivered into the polymerization container by means of nitrogen pressure. Furthermore, 0.148 g (0.6 mmol) ofp-dicumylchloride and 0.07 g (0.8 mmol) of α-picoline were added. Next, 0.87 mL (7.9 mmol) of titanium tetrachloride was added further to start polymerization. After 45 minutes since the start of polymerization, 10.4 g (99.4 mmol) of styrene monomer which had been cooled to -70°C was added in the polymerization container. After 45 minutes since the addition of styrene, approximately 40 mL of methanol was added to terminate the reaction. After evaporating the solvent and the like from the reaction solution, the reaction solution was dissolved with toluene and rinsed twice. The toluene solution was added to a large amount of methanol to precipitate a polymer. The polymer thus obtained was vacuum dried at 60°C for 24 hours. The molecular weight of the block copolymer obtained through the GPC method was measured. The number average molecular weight (Mn) of the block copolymer is 109,000, and Mw/Mn is 1.21.

(2) SIB (Styrene-Isobutylene Block Copolymer)

Into a 2L reaction container having an agitator, 589 mL of methylcyclohexane (dried with molecular sieves), 613ml of n-butyl chloride (dried with molecular sieves), and 0.550g of cumyl chloride were added. The reaction container was cooled to -70°C, and then 0.35 mL of α-picoline (2-methylpyridine) and 179 mL of isobutylene were added. Further, 9.4 mL of titanium tetrachloride was added to start polymerization. They were reacted with each other for 2.0 hours while stirring the solution at -70°C. Next, 59 mL of styrene was added to the reaction container, and the reaction was continued for another 60 minutes. Thereafter, a large amount of methanol was added to stop the reaction. After removing the solvent and the like from the reaction solution, the polymer was dissolved with toluene and rinsed twice. This toluene solution was added to a methanol mixture to precipitate a polymer. The polymer thus obtained was dried at 60°C for 24 hours, thereby obtaining a styrene-isobutylene diblock copolymer (the content of the styrene component: 15 percent by mass; weight average molecular weight: 70,000).

(3) SIBS (Styrene-Isobutylene-Styrene Block Copolymer)

"SIBSTAR 102T (Shore A hardness: 25; the content of the styrene component: 25 percent by mass; weight average molecular weight: 100,000)" provided by Kaneka Corporation was used.

(4) SIS (Styrene-Isoprene-Styrene Block Copolymer)

D1161JP (the content of the styrene component: 15 percent by mass; weight average molecular weight: 150,000) provided by Kraton Polymers was used.

(5) "Exxon Chlorobutyl 1066" provided by Exxon Mobil Corporation was used for IIR.

<Adjustment of Elastomer Compositions of First Layer and Second Layer>

As shown in Tables 13 and 14, additives were blended into the above-described elastomer components, and the elastomer compositions of the first and second layers were adjusted.

[Table 13]

| Blending of First Layer | | A1 | A2 | A3 | A4 | A5 | A6 | A7 | A8 | A9 | A10 | A11 | A12 | A13 | A14 | A15 | B1 | B2 | B3 | B4 |
|---|---|---|---|---|---|---|---|---|---|---|---|---|---|---|---|---|---|---|---|---|
| Blend (parts by mass) | Component A-1 | 100 | - | - | 100 | 100 | 100 | 30 | 70 | 30 | 50 | 50 | 50 | 15 | - | - | - | - | - | - |
| | Component A-2 | - | 100 | - | - | - | - | - | - | - | - | - | - | - | 50 | - | - | - | - | - |
| | Component A-3 | - | - | 100 | - | - | - | - | - | - | - | - | - | - | - | 50 | - | - | - | - |
| | SIBS | - | - | - | - | - | - | - | - | - | 50 | 50 | 50 | 15 | 50 | 50 | 100 | 100 | 100 | 100 |
| | IIR | - | - | - | - | - | - | 70 | 30 | 70 | - | - | - | 70 | - | - | - | - | - | - |
| | CB (*1) | - | - | - | - | - | - | 60 | 60 | 60 | - | - | - | 60 | - | - | - | - | - | - |
| | ZnO (*2) | - | - | - | 4.0 | - | - | 4.0 | 4.0 | 4.0 | - | - | - | 4.0 | - | - | - | - | - | 4 |
| | Stearic Acid (*3) | - | - | - | 2.0 | - | - | 2.0 | 2.0 | 2.0 | - | - | - | 2.0 | - | - | - | - | - | 2 |
| | Antioxidant (*4) | - | - | - | 0.2 | - | - | 0.2 | 0.2 | 0.2 | - | - | - | 0.2 | - | - | - | - | - | 0.2 |
| | Vulcanization Accelerator (*5) | - | - | - | 2.0 | - | - | 2.0 | 2.0 | 2.0 | - | - | - | 2.0 | - | - | - | - | - | 2 |
| | Sulfur (*6) | - | - | - | 1.0 | - | - | 1.0 | 1.0 | 1.0 | - | - | - | 1.0 | - | - | - | - | - | 1 |
| | Tackifier (*7) | - | - | - | - | 10 | - | - | - | 10 | - | 10 | - | - | - | - | - | 10 | - | - |
| | Polyisobutylene (*8) | - | - | - | - | - | 10 | - | - | 10 | - | - | 10 | - | - | - | - | - | 10 | - |

[Table 14]

| Blending of Second Layer | | C16 | C17 | C18 | C19 | C20 | C21 | C22 | C23 | C24 | D5 | D6 | D7 | D8 | D9 | D10 |
|---|---|---|---|---|---|---|---|---|---|---|---|---|---|---|---|---|
| Blend (parts by mass) | SIS | 50 | 50 | 50 | - | 50 | 50 | 50 | - | 25 | 100 | - | 50 | 100 | 100 | 100 |
| | SIB | - | - | - | 50 | - | - | - | 50 | - | - | 100 | - | - | - | - |
| | SIBS | - | - | - | - | - | - | - | - | - | - | - | 50 | - | - | - |
| | Component A-1 | 50 | - | - | 50 | 50 | 50 | 50 | 50 | 25 | - | - | - | - | - | - |
| | Component A-2 | - | 50 | - | - | - | - | - | - | - | - | - | - | - | - | - |
| | Component A-3 | - | - | 50 | - | - | - | - | - | - | - | - | - | - | - | - |
| | IIR | - | - | - | - | - | - | - | - | 50 | - | - | - | - | - | - |
| | CB (*1) | - | - | - | - | - | - | - | - | 60 | - | - | - | - | - | - |
| | ZnO (*2) | - | - | - | - | 4.0 | - | - | 4.0 | 4.0 | - | - | - | 4.0 | - | - |
| | Stearic Acid (*3) | - | - | - | - | 2.0 | - | - | 2.0 | 2.0 | - | - | - | 2.0 | - | - |
| | Antioxidant (*4) | - | - | - | - | 0.2 | - | - | 0.2 | 0.2 | - | - | - | 0.2 | - | - |
| | Vulcanization Accelerator (*5) | - | - | - | - | 2.0 | - | - | 2.0 | 2.0 | - | - | - | 2.0 | - | - |
| | Sulfur (*6) | - | - | - | - | 1.0 | - | - | 1.0 | 1.0 | - | - | - | 1.0 | - | - |
| | Tackifier (*7) | - | - | - | - | - | 10 | - | 10 | 10 | - | - | - | - | 10 | - |
| | Polyisobutylene (*8) | - | - | - | - | - | - | 10 | 10 | 10 | - | - | - | - | - | 10 |

EP 2 754 566 B1

52

(*1) Carbon Black (CB): "Seast V" provided by Tokai Carbon Co., Ltd. (N660, $N_2SA$: $27m^2/g$)

(*2) Zinc Oxide (ZnO): "Zinc White No. 1" provided by Mitsui Mining and Smelting Co., Ltd.

(*3) Stearic Acid: "Stearic Acid LUNAC S30" provided by Kao Corp.

(*4) Antioxidant: "Noclac 6C" by Ouchi Shinko Chemical Industrial Co., Ltd.

(*5) Vulcanization Accelerator : "Nocceler DM" by Ouchi Shinko Chemical Industrial Co., Ltd.

(*6) Sulfur: "Sulfur Powder" provided by TSURUMI CHEMICAL INDUSTRIES CO. LTD.

(*7) Tackifier: C9 petroleum resin, ARKON P140 (provided by Arakawa Chemical Industries Co., Ltd; softening point: 140°C; weight average molecular weight Mw: 900).

(*8) Polyisobtylene: "TETRAX 3T" (viscosity average molecular weight: 30,000; weight average molecular weight: 49,000) provided by Nippon Oil Corporation

<Method for Manufacturing Inner Liner>

Based on the blends in Tables 13 and 14, additives were added to thermoplastic elastomers, such as an isoprene-based modified copolymer, SIBS, SIS, and SIB and blended with a Banbury mixer, a kneader, and a twin-screw extruder (screw diameter: ø50 mm, L/D: 30, cylinder temperature: 220°C), thereby obtaining an elastomer composition.

This composition was extruded into a ribbon-shaped sheet at a screw speed of 80 RPM and an extrusion rate of about 9 m/min using the extruder shown in Figs. 2 and 3 (screw diameter: ø80 mm; L/D: 50; die gap width: 40 mm; cylinder temperature: 220°C). This sheet was then passed between die rolls 14A and 14B to manufacture strip 12A with the ear portions of predetermined shape formed on the opposite ends.

It should be noted that ribbon-shaped sheet 12 is a layer stack by coextruding thermoplastic elastomers of the first and second layers using the above-mentioned extruder. Then, the strip was passed by free roller 18 and detached from the die rollers to obtain strip 12A having a sectional structure shown in Fig. 4. Here, width W0 and thickness T1 of strip 10, width W2 of ear portion 10B and thickness T2 of the ear portions are indicated in Tables 15 to 18.

The thicknesses of the first and second layers of each strip used for Comparative Examples and Examples are as follows.

In Comparative Examples 4-1 and 4-12, the first layer is 0.25 mm, the second layer is 0.05 mm, and the total thickness is 0.3 mm.

In Fig. 4(a), the first layer is 0.4 mm, the second layer is 0.2 mm, and the total thickness is 0.6 mm.

In Fig. 4(b), the first layer is 0.04 mm, the second layer is 0.01 mm, and the total thickness is 0.05 mm.

In Fig. 4(c), the first layer is 0.7 mm, the second layer is 0.3 mm, and the total thickness is 1 mm.

In Fig. 4(d), the first layer is 0.25 mm, the second layer is 0.05 mm, and the total thickness is 0.3 mm.

<Manufacturing of Pneumatic Tire>

The above-described strip was wound on the drum shown in Fig. 5 and molded into a wide sheet while forming junctions where adjacent ear portions of the strip overlap one another by 5 mm, and a sheet for an inner liner was manufactured.

A pneumatic tire of tire size of 195/65R15 was prototyped using an inner liner obtained by molding each strip based on the specifications shown in Tables 15 to 18 on the drum. It should be noted that press vulcanization was performed for 20 minutes at 170°C. Then, the tire was cooled for 3 minutes at 100°C without removing the tire from the vulcanization mold, and then was removed from the vulcanization mold.

[Table 15]

| | | | Example 4-1 | Example 4-2 | Example 4-3 | Example 4-4 |
|---|---|---|---|---|---|---|
| First Layer | | | A1 | A1 | A1 | A1 |
| Second Layer | | | C16 | C16 | C16 | C16 |
| Strip | | Shape | Fig.4(a) | Fig.4(b) | Fig.4(c) | Fig.4(d) |
| | | Width (W0) (mm) | 40 | 10 | 40 | 20 |
| | | Thickness (T1) (mm) | 0.6 | 0.05 | 1.0 | 0.3 |
| | | Width of Ear Portions (W2) (mm) | 5.0 | 0.5 | 5.0 | 3.0 |
| | | Thickness of Ear Portions (T2) (mm) | 0.3 | 0.02 | 0.5 | 0.02 |
| Vulcanization Adhesion | | | 110 | 106 | 110 | 109 |
| Flection Crack Growth | | | 110 | 107 | 106 | 106 |
| Rolling Resistance Changing ratio | | | 109 | 108 | 108 | 107 |
| Static Air Pressure Decreasing Ratio (%/month) | | | 2.0 | 2.2 | 2.2 | 2.4 |
| Overall Judgment | | | A | A | A | A |
| Uniformity | | | 108 | 109 | 110 | 106 |

[Table 16]

| | | Example 4-5 | Example 4-6 | Example 4-7 | Example 4-8 | Example 4-9 | Example 4-10 | Example 4-11 | Example 4-12 | Example 4-13 | Example 4-14 | Example 4-15 |
|---|---|---|---|---|---|---|---|---|---|---|---|---|
| First Layer | | A5 | A6 | A7 | A8 | A9 | A10 | All | A12 | A13 | A14 | A15 |
| Second Layer | | C16 | C16 | C16 | C16 | C16 | C16 | C16 | C16 | C16 | C16 | C16 |
| Strip | Shape | Fig.4(a) | | | | | | | | | | |
| | Width (W0) (mm) | 40 | | | | | | | | | | |
| | Thickness (T1) (mm) | 0.6 | | | | | | | | | | |
| | Width of Ear Portions (W2) (mm) | 5.0 | | | | | | | | | | |
| | Thickness of Ear Portions (T2) (mm) | 0.3 | | | | | | | | | | |
| Vulcanization Adhesion | | 114 | 109 | 116 | 114 | 119 | 107 | 109 | 107 | 113 | 107 | 107 |
| Flection Crack Growth | | 102 | 103 | 107 | 107 | 107 | 103 | 103 | 103 | 104 | 103 | 103 |
| Rolling Resistance Changing Ratio | | 104 | 104 | 103 | 103 | 103 | 103 | 103 | 103 | 103 | 103 | 103 |
| Static Air Pressure Decreasing Ratio (%/month) | | 2.2 | 2.2 | 2 | 2 | 2 | 2.2 | 2.2 | 2.2 | 2.5 | 2.2 | 2.2 |
| Overall Judgment | | A | A | A | A | A | A | A | A | A | A | A |
| Uniformity | | 108 | 109 | 109 | 110 | 111 | 112 | 112 | 109 | 108 | 110 | 108 |

[Table 17]

| | Example 4-16 | Example 4-17 | Example 4-18 | Example 4-19 | Example 4-20 | Example 4-21 | Example 4-22 | Example 4-23 | Example 4-24 | Example 4-25 | Example 4-26 | Example 4-27 | Example 4-28 | Example 4-29 |
|---|---|---|---|---|---|---|---|---|---|---|---|---|---|---|
| First Layer | A5 | A6 | A7 | A8 | A9 | A10 | A11 | A12 | A13 | A14 | A15 | A1 | A1 | A1 |
| Second Layer | C16 | C16 | C16 | C16 | C16 | C16 | C16 | C16 | C16 | C16 | C16 | C22 | C23 | C24 |
| Strip — Shape | Fig.4(c) | | | | | | | | | | | Fig.4(a) | | |
| Strip — Width (W0) (mm) | 40 | | | | | | | | | | | 40 | | |
| Strip — Thickness (T1) (mm) | 1.0 | | | | | | | | | | | 0.6 | | |
| Strip — Width of Ear Portions (W2) (mm) | 5.0 | | | | | | | | | | | 5.0 | | |
| Strip — Thickness of Ear Portions (T2) (mm) | 0.5 | | | | | | | | | | | 0.3 | | |
| Vulcanization Adhesion | 117 | 115 | 117 | 117 | 115 | 117 | 117 | 117 | 117 | 122 | 120 | 119 | 127 | 132 |
| Flection Crack Growth | 107 | 107 | 107 | 107 | 108 | 106 | 107 | 108 | 108 | 112 | 110 | 111 | 110 | 111 |
| Rolling Resistance Changing Ratio | 104 | 104 | 104 | 103 | 105 | 103 | 104 | 103 | 105 | 106 | 106 | 106 | 107 | 106 |
| Static Air Pressure Decreasing Ratio (%/month) | 1.8 | 1.8 | 1.8 | 1.8 | 1.8 | 1.8 | 1.9 | 2 | 1.9 | 1.9 | 1.9 | 1.9 | 1.9 | 1.8 |
| Overall Judgment | A | A | A | A | A | A | A | A | A | A | A | A | A | A |
| Uniformity | 109 | 110 | 109 | 110 | 111 | 112 | 110 | 109 | 109 | 110 | 112 | 112 | 110 | 110 |

[Table 18]

| | Comparative Example 4-1 | Comparative Example 4-2 | Comparative Example 4-3 | Comparative Example 4-4 | Comparative Example 4-5 | Comparative Example 4-6 | Comparative Example 4-7 | Comparative Example 4-8 | Comparative Example 4-9 | Comparative Example 4-10 | Comparative Example 4-11 | Comparative Example 4-12 |
|---|---|---|---|---|---|---|---|---|---|---|---|---|
| First Layer | B1 | B1 | B1 | B1 | B3 | B4 | B1 | B1 | B1 | B1 | A1 | B1 |
| 2a Layer | D5 | D5 | | D5 | D5 | D5 | D7 | D8 | D9 | D10 | C16 | C24 |
| 2a Layer | - | - | D6 | D6 | - | - | - | - | - | - | - | - |
| Strip — Shape | Rectangle | Rectangle | Rectangle | Rectangle | Fig.4(a) | Fig.4(a) | Fig.4(a) | Fig.4(a) | Rectangle | Rectangle | Rectangle | Rectangle |
| Strip — Width (W0) (mm) | 20 | 20 | 20 | 20 | 40 | 40 | 40 | 40 | 20 | 20 | 20 | 20 |
| Strip — Thickness (T1) (mm) | 0.3 | 0.3 | 0.3 | 0.3 | 0.6 | 0.6 | 0.6 | 0.6 | 0.3 | 0.3 | 0.3 | 0.3 |
| Strip — Width of Ear Portions (W2) (mm) | - | - | - | - | 5.0 | 5.0 | 5.0 | 5.0 | - | - | - | - |
| Strip — Thickness of Ear Portions (T2) (mm) | - | - | - | - | 0.3 | 0.3 | 0.3 | 0.3 | - | - | - | - |
| Vulcanization Adhesion | 100 | 100 | 101 | 100 | 100 | 100 | 97 | 100 | 100 | 100 | 102 | 112 |
| Flection Crack Growth | 100 | 100 | 102 | 101 | 99 | 101 | 101 | 99 | 98 | 100 | 101 | 102 |
| Rolling Resistance Changing Ratio | 100 | 100 | 101 | 99 | 101 | 100 | 100 | 100 | 100 | 99 | 102 | 101 |
| Static Air Pressure Decreasing Ratio (%/month) | 3.8 | 3.2 | 2.6 | 2.7 | 2.7 | 2.8 | 2.8 | 2.8 | 2.9 | 3.0 | 3.2 | 2.7 |

| | Compara-tive Exam-ple 4-1 | Compara-tive Exam-ple 4-2 | Compara-tive Exam-ple 4-3 | Compara-tive Exam-ple 4-4 | Compara-tive Exam-ple 4-5 | Compara-tive Exam-ple 4-6 | Compara-tive Exam-ple 4-7 | Compara-tive Exam-ple 4-8 | Compara-tive Exam-ple 4-9 | Compara-tive Exam-ple 4-10 | Compara-tive Exam-ple 4-11 | Compara-tive Exam-ple 4-12 |
|---|---|---|---|---|---|---|---|---|---|---|---|---|
| Overall Judgment | B | B | B | B | B | B | B | B | B | B | B | B |
| Uniformity | 100 | 98 | 99 | 96 | 97 | 98 | 99 | 99 | 96 | 98 | 96 | 98 |

<Method for Evaluating Tire Performance>

For the pneumatic tires of the Examples and Comparative Example shown in Tables 15 to 18, performance evaluation was conducted by the following methods.

<Vulcanization Adhesion Strength>

Unvulcanized sheets of the first and second layers are bonded together, and vulcanized at 170°C for 20 minutes. A sample for measuring vulcanization adhesion strength is thereby produced. Vulcanization adhesion strength was measured by measuring detachment force using a tension tester. According to the following equation, vulcanization adhesion strength of each blend was indicated by an index using Comparative Example 4-1 as a reference. It should be noted that as the index of the vulcanization adhesion strength is larger, the vulcanization adhesion strength is higher.

$$\text{Index of the Vulcanization Adhesion Strength} = (\text{Vulcanization Adhesion Strength of Each Blend})/(\text{Vulcanization Adhesion Strength of Comparative Example 4-1}) \times 100$$

<Flection Crack Growth Test>

In endurance traveling test, evaluation was made depending on whether the inner liner was cracked or detached. Each trial tire was assembled to a JIS specification rim 15 × 6JJ. The tire internal pressure was set at 150 KPa, which was lower internal pressure than normal internal pressure. The load was set at 600 kg. The speed was set at 100 km/h. The travel distance was set at 20,000 km. Inside of the tire was observed to measure the number of cracks and detachments. Using Comparative Example 4-1 as a reference, crack growth in each blend was indicated by an index. It shows that as the value of the index is larger, the flection crack growth is smaller.

$$\text{Index of Flection Crack Growth} = (\text{Number of Cracks in Comparative Example 4-1})/(\text{Number of Cracks in Each Blend}) \times 100$$

<Index of Rolling Resistance>

Each trial tire was assembled to a JIS specification rim 15 × 6JJ, and a rolling resistance tester provided by Kobe Steel Ltd was used to measure rolling resistance thereof while performing traveling at a room temperature (30°C) under conditions of a load of 3.4 kN, an air pressure of 230 kPa, and a speed of 80 km/h. Based on the following equation, the rolling resistance changing ratio (%) of each Example was indicated by an index using Comparative Example 4-1 as a reference 100. It shows that as the rolling resistance changing ratio is larger, the rolling resistance is further reduced.

$$\text{Index of Rolling Resistance} = (\text{Rolling Resistance of Comparative Example 4-1})/(\text{Rolling Resistance of Example}) \times 100$$

<Static Air Pressure Decreasing Ratio Test>

Each trial tire was assembled to a JIS specification rim 15 × 6JJ, and air was introduced thereinto at an initial air pressure of 300 kPa. Then, the trial tire was left for 90 days at a room temperature. Then, decreasing ratio of air pressure is calculated. As the numerical value thereof is smaller, the air pressure is less decreased, which is preferable.

<Index of Uniformity>

The radial force variation (RFV) was measured using a tire uniformity tester in conformity with JASO C607: 2000 "Test Procedures for Automobile Tire Uniformity." A relative value assuming Comparative Example 4-1 as 100 was indicated by an index. As the index is larger, the uniformity is more excellent. Measurement conditions were a rim of 8.0×17, a tire revolving speed of 60 rpm, an air pressure of 200 kPa, and a longitudinal load of 4000 kN.

<Overall Judgment>

For judgment A, items (a) to (d) satisfy all the following conditions.

(a) The vulcanization adhesion strength is more than or equal to 100.
(b) The flection crack growth is more than or equal to 100.
(c) The rolling resistance changing ratio is more than or equal to 100.
(d) The static air pressure decreasing ratio (%/month) is less than or equal to 2.6.

For judgment B, any of items (a) to (d) satisfy one of the following conditions. When several judgments apply, a lower evaluation was adopted.

(a1) The vulcanization adhesion strength is less than 100.
(b1) The flection crack growth is less than 100.
(c1) The rolling resistance changing ratio is less than 100.
(d1) The static air pressure decreasing ratio (%/month) is more than or equal to 2.7.

<Tire Evaluation Result>

In Table 15, Examples 4-1 to 4-4 are instances where each layer stack of the first and second layers is made of the same blend, and the strips had different sectional shapes as shown in Fig. 4(a) to Fig. 4(d). Vulcanization adhesion strength, index of flection crack growth, rolling resistance, and static air pressure decreasing ratio are excellent as a whole.
In Table 16, Examples 4-5 to 4-15 are instances where each strip had the sectional shape shown in Fig. 4(a) and was implemented by layer stacks having different blends of the first layer. Vulcanization adhesion strength, index of flection crack growth, rolling resistance, and static air pressure decreasing ratio are excellent as a whole.
In Table 17, Examples 4-16 to 4-26 are instances where each strip had the sectional shape shown in Fig. 4(c) and was implemented by layer stacks with the second layer (Blend C16). Examples 4-27 to 4-29 are instances where each strip had the sectional shape shown in Fig. 4(a) and was implemented by layer stacks with the second layer. These examples are excellent as a whole in vulcanization adhesion strength, index of flection crack growth, rolling resistance, static air pressure decreasing ratio, and uniformity.
In Table 18, Comparative Examples 4-1 and 4-12 are instances where each strip had a rectangular sectional shape, and Comparative Examples 4-2 to 4-11 are instances where each strip had the sectional shape shown in Fig. 4(a) and had different blends of the first and second layers.

INDUSTRIAL APPLICABILITY

The pneumatic tire of the present invention can be used as a pneumatic tire for track/bus, a pneumatic tire for heavy vehicle, or the like, besides a pneumatic tire for passenger car.

REFERENCE SIGNS LIST

1 pneumatic tire; 2 tread portion; 3 sidewall portion; 4 bead portion; 5 bead core; 6, C carcass ply; 7 belt layer; 8 bead apex; 9 inner liner; 10 strip; 11 strip manufacturing device; 12 sheet; 13 extruder; 14A, 14B die roller; 15 screw shaft; 16 extrusion port; 17 nozzle; 18 free roller; PL layer stack; PL1 first layer; PL2, PL3 second layer.

**Claims**

1. A strip (10) of a thermoplastic elastomer composition to be wound spirally on a cylindrical drum to form an inner liner (9) for a tire (1) having a shape close to a finished sectional shape,
   the strip (10) being composed of a layer stack (PL) of a first layer (PL1) made of a thermoplastic elastomer composition containing 0.1 part by mass to 50 parts by mass of an organic derivative of clay mineral relative to 100 parts by mass of an elastomer component made of a styrene-isobutylene-styrene triblock copolymer, and a second layer (PL2, PL3) made of a thermoplastic elastomer composition containing at least one of a styrene-isoprene-styrene triblock copolymer and a styrene-isobutylene diblock copolymer,
   said strip (10) having a strip main body and ear portions disposed on opposite sides thereof, said strip main body having a thickness (T1) of 0.05 mm to 1.0 mm, and said ear portions having a thickness (T2) thinner than the thickness (T1) of said strip main body and a width (W2) of 0.5 mm to 5.0 mm.

**2.** The strip (10) according to claim 1, wherein said styrene-isoprene-styrene triblock copolymer contains a styrene component at a content of 10 percent by mass to 30 percent by mass.

**3.** The strip (10) according to claim 1 or 2, wherein said styrene-isobutylene diblock copolymer contains a styrene component at a content of 10 percent by mass to 35 percent by mass.

**4.** A strip (10) of a thermoplastic elastomer composition to be wound spirally on a cylindrical drum to form an inner liner (9) for a tire (1) having a shape close to a finished sectional shape,
the strip (10) being composed of a layer stack (PL) of a first layer (PL1) made of a thermoplastic elastomer composition containing 60 percent by mass to 99.9 percent by mass of a styrene-isobutylene-styrene triblock copolymer and 0.5 percent by mass to 40 percent by mass of a styrene-maleic anhydride copolymer, and a second layer (PL2) made of a thermoplastic elastomer composition containing a styrene-isoprene-styrene triblock copolymer,
said strip having a strip main body and ear portions disposed on both sides thereof, said strip main body having a thickness (T1) of 0.05 mm to 1.0 mm, and said ear portions having a thickness (T2) thinner than the thickness (T1) of said strip main body and a width (W2) of 0.5 mm to 5.0 mm.

**5.** The strip (10) according to claim 4, wherein said styrene-maleic anhydride copolymer contains a styrene-maleic anhydride copolymer base resin in which a styrene component and a maleic anhydride component have a molar ratio of 50/50 to 90/10 and the maleic anhydride component has an acid value of 50 to 600.

**6.** The strip (10) according to claim 4 or 5, wherein said styrene-maleic anhydride copolymer contains an ester resin of a styrene-maleic anhydride copolymer having a monoester group and a monocarboxylic acid group, said ester resin being obtained by esterification of said styrene-maleic anhydride copolymer base resin.

**7.** The strip (10) according to any one of claims 4, 5 and 6, wherein said styrene-maleic anhydride copolymer contains a styrene-maleic anhydride copolymer ammonium salt aqueous solution, which is a solution of an ammonium salt of said styrene-maleic anhydride copolymer base resin.

**8.** A method for manufacturing the strip (10) made of a thermoplastic elastomer composition as defined in claim 1 or 4, comprising the steps of:

(a) extruding a thermoplastic elastomer by an extruder (13) having an extruder main body and an extrusion head to form a sheet (12) having a horizontally long rectangular cross sectional shape;
(b) passing the sheet (12) between a pair of die rollers (14A, 14B) and transferring a shape of the die rollers (14A, 14B) on said sheet (12) to form the strip (10) having the ear portions on ends thereof; and
(c) detaching said strip (10) from the die rollers (14A, 14B).

**9.** A strip (10) of a polymer composition to be wound spirally on a cylindrical drum to form an inner liner (9) for a tire (1) having a shape close to a finished sectional shape,
said strip (10) being composed of a layer stack (PL) of a first layer (PL1) of a polymer sheet (12) of a polymer composition containing more than or equal to 0.1 part by mass and less than or equal to 5 parts by mass of sulfur relative to 100 parts by mass of a polymer component containing more than or equal to 5 percent by mass and less than or equal to 40 percent by mass of a styrene-isobutylene-styrene triblock copolymer and more than or equal to 60 percent by mass and less than or equal to 95 percent by mass of at least one kind of rubber component selected from the group consisting of a natural rubber, an isoprene rubber and a butyl rubber, and a second layer (PL2, PL3) made of a thermoplastic elastomer composition,
said strip (10) having a strip main body and ear portions disposed on both sides thereof, said strip main body having a thickness (T1) of 0.05 mm to 1.0 mm, and said ear portions having a thickness (T2) thinner than the thickness (T1) of said strip main body and a width (W2) of 0.5 mm to 5.0 mm.

**10.** The strip (10) according to claim 9, wherein said second layer (PL2, PL3) contains a thermoplastic elastomer containing at least one kind selected from the group consisting of a styrene-isoprene-styrene triblock copolymer, a styrene-isobutylene diblock copolymer and an epoxidized styrene-butadiene-styrene triblock copolymer, and at least one kind of rubber component selected from the group consisting of a natural rubber, an isoprene rubber and a butyl rubber, and
more than or equal to 20 percent by mass and less than or equal to 90 percent by mass of said rubber component is contained relative to the total of said thermoplastic elastomer and said rubber component.

11. A strip (10) of a thermoplastic elastomer composition to be wound spirally on a cylindrical drum to form an inner liner (9) for a tire (1) having a shape close to a finished sectional shape,

the strip (10) being composed of a first layer (PL1) disposed on the tire inside and a second layer (PL2, PL3) disposed adjacent to a carcass (6),

at least one of said first layer (PL1) and said second layer (PL2, PL3) being made of an elastomer composition containing, in an elastomer component, more than or equal to 10 percent by mass and less than or equal to 100 percent by mass of an isobutylene-based modified copolymer which is an isobutylene-based block copolymer formed of a polymeric block (A) mainly containing isobutylene and a polymeric block (B) mainly containing an aromatic vinyl-based compound and which contains β-pinene copolymerized in at least one block,

said second layer (PL2, PL3) being made of an elastomer composition containing more than or equal to 5 percent by mass and less than or equal to 80 percent by mass of said isobutylene-based modified copolymer and at least one of a styrene-isoprene-styrene block copolymer and a styrene-isobutylene block copolymer,

said strip (10) having a strip main body and ear portions disposed on both sides thereof, said strip main body having a thickness (T1) of 0.05 mm to 1.0 mm, and said ear portions having a thickness (T2) thinner than the thickness (T1) of said strip main body and a width (W2) of 0.5 mm to 5.0 mm.

12. The strip (10) according to claim 11, **characterized in that** said isobutylene-based modified copolymer contains β-pinene at a content of 0.5 percent by weight to 25 percent by weight.

13. The strip (10) according to claim 11, wherein said isobutylene-based modified copolymer contains β-pinene in a styrene block of one of a styrene-isobutylene-styrene block copolymer, a styrene-isoprene-styrene block copolymer and a styrene-isobutylene block copolymer.

14. A method for manufacturing a pneumatic tire (1), **characterized in that** the strip (10) as defined in claim 9 or 11 is wound spirally on a cylindrical drum to mold an inner liner (9) having a shape close to a finished sectional shape to be disposed on an inner surface of a raw tire, and the raw tire is vulcanized, wherein said strip is manufactured by the steps including

(a) extruding a thermoplastic elastomer composition by an extruder (13) having an extruder main body and an extrusion head to form a sheet (12) having a horizontally long rectangular cross sectional shape,
(b) passing the sheet (12) between a pair of die rollers (14A, 14B) and transferring a shape of the die rollers (14A, 14B) on said sheet (12) to form the strip (10) having the ear portions on ends thereof, and
(c) detaching said strip (10) from the die rollers (14A, 14B).

**Patentansprüche**

1. Streifen (10) aus einer thermoplastischen Elastomerzusammensetzung zum spiralförmigen Wickeln auf eine zylindrische Trommel, um einen Innerliner (9) für einen Reifen (1) mit einer Form nahe bei der Endquerschnittsform zu bilden,

wobei der Streifen (10) zusammengesetzt ist aus einem Schichtstapel (PL) aus einer ersten Schicht (PL1), die aus einer thermoplastischen Elastomerzusammensetzung hergestellt ist, die 0,1 Masseteile bis 50 Masseteile eines organischen Derivats eines Tonminerals bezogen auf 100 Masseteile einer Elastomerkomponente, die aus einem Styrol-Isobutylen-Styrol-Triblockcopolymer hergestellt ist, enthält, und einer zweiten Schicht (PL2, PL3), die aus einer thermoplastischen Elastomerzusammensetzung hergestellt ist, die Styrol-Isopren-Styrol-Triblockcopolymer und/oder Styrol-Isobutylen-Diblockcopolymer enthält,

wobei der Streifen (10) einen Streifenhauptkörper und an seinen entgegengesetzten Seiten angeordnete Zipfelabschnitte umfasst, wobei der Streifenhauptkörper eine Dicke (T1) von 0,05 mm bis 1,0 mm aufweist, und die Zipfelabschnitte eine Dicke (T2), die dünner ist als die Dicke (T1) des Streifenhauptkörpers, und eine Breite (W2) von 0,5 mm bis 5,0 mm aufweisen.

2. Streifen (10) nach Anspruch 1, wobei das Styrol-Isopren-Styrol-Triblockcopolymer eine Styrolkomponente mit einem Gehalt von 10 Masseprozent bis 30 Masseprozent enthält.

3. Streifen (10) nach Anspruch 1 oder 2, wobei das Styrol-Isobutylen-Diblockcopolymer eine Styrolkomponente mit einem Gehalt von 10 Masseprozent bis 35 Masseprozent enthält.

4. Streifen (10) aus einer thermoplastischen Elastomerzusammensetzung zum spiralförmigen Wickeln auf eine zylindrische Trommel, um einen Innerliner (9) für einen Reifen (1) mit einer Form nahe bei einer Endquerschnittsform zu bilden,

wobei der Streifen (10) zusammengesetzt ist aus einem Schichtstapel (PL) aus einer ersten Schicht (PL1), die aus einer thermoplastischen Elastomerzusammensetzung hergestellt ist, die 60 Masseprozent bis 99,9 Masseprozent eines Styrol-Isobutylen-Styrol-Triblockcopolymers und 0,5 Masseprozent bis 40 Masseprozent eines Styrol-Maleinanhydrid-Copolymers enthält, und einer zweiten Schicht (PL2), die aus einer thermoplastischen Elastomerzusammensetzung hergestellt ist, die ein Styrol-Isopren-Styrol-Triblockcopolymer enthält,
wobei der Streifen einen Hauptstreifenkörper und an seinen beiden Seiten angeordnete Zipfelabschnitte aufweist, wobei der Streifenhauptkörper eine Dicke (T1) von 0,05 mm bis 1,0 mm aufweist, und die Zipfelabschnitte eine Dicke (T2), die dünner ist als die Dicke (T1) des Streifenhauptkörpers, und eine Breite (W2) von 0,5 mm bis 5,0 mm aufweisen.

5. Streifen (10) nach Anspruch 4, wobei das Styrol-Maleinanhydrid-Copolymer ein Styrol-Maleinanhydrid-Copolymer-Basisharz enthält, in welchem eine Styrolkomponente und eine Maleinanhydridkomponente ein Molverhältnis von 50/50 bis 90/10 aufweisen und die Maleinanhydridkomponente einen Säurewert von 50 bis 600 aufweist.

6. Streifen (10) nach Anspruch 4 oder 5, wobei das Styrol-Maleinanhydrid-Copolymer ein Esterharz eines Styrol-Maleinanhydrid-Copolymers enthält, das eine Monoestergruppe und eine Monocarbonsäuregruppe aufweist, wobei das Esterharz durch Verestern des Styrol-Maleinanhydrid-Copolymer-Basisharzes erhalten ist.

7. Streifen (10) nach einem der Ansprüche 4, 5 und 6, wobei das Styrol-Maleinanhydrid-Copolymer eine wässrige Lösung eines Styrol-Maleinanhydrid-Copolymer-Ammoniumsalzes enthält, welche eine Lösung eines Ammoniumsalzes des Styrol-Maleinanhydrid-Copolymer-Basisharzes ist.

8. Verfahren zum Herstellen des Streifens (10), der aus einer thermoplastischen Elastomerzusammensetzung, wie sie in den Ansprüchen 1 oder 4 definiert ist, hergestellt ist, umfassend die Schritte:

(a) Extrudieren eines thermoplastischen Elastomers mit einem Extruder (13), der einen Extruderhauptkörper und einen Extrusionskopf aufweist, um eine Bahn (12) mit einer horizontal langen, rechteckigen Querschnittsform zu bilden;
(b) Durchleiten der Bahn (12) zwischen einem Paar Formwalzen (14A, 14B) und Übertragen einer Form der Formwalzen (14A, 14B) auf die Bahn (12), um den Streifen (10) mit den Zipfelabschnitten an seinen Enden zu bilden; und
(c) Abnehmen des Streifens (10) von den Formwalzen (14A, 14B).

9. Streifen (10) aus einer Polymerzusammensetzung zum spiralförmigen Wickeln auf eine zylindrische Trommel, um einen Innerliner (9) für einen Reifen (1) mit einer Form nahe bei der Endquerschnittsform zu bilden,

wobei der Streifen (10) zusammengesetzt ist aus einem Schichtstapel (PL) aus einer ersten Schicht (PL1) aus einer Polymerbahn (12) aus einer Polymerzusammensetzung, die mehr als oder gleich 0,1 Masseteile und weniger als oder gleich 5 Masseteile Schwefel bezogen auf 100 Masseteile einer Polymerkomponente, die mehr als oder gleich 5 Masseprozent und weniger als oder gleich 40 Masseprozent eines Styrol-Isobutylen-Styrol-Triblockcopolymers und mehr als oder gleich 60 Masseprozent und weniger als oder gleich 95 Masseprozent von zumindest einer Sorte einer Kautschukkomponente, die aus der Gruppe ausgewählt ist, die aus Naturkautschuk, Isoprenkautschuk und Butylkautschuk besteht, enthält, und einer zweiten Schicht (PL2, PL3), die aus einer thermoplastischen Elastomerzusammensetzung hergestellt ist,
wobei der Streifen (10) einen Streifenhauptkörper und an seinen beiden Seiten angeordnete Zipfelabschnitte aufweist, wobei der Streifenhauptkörper eine Dicke (T1) von 0,05 mm bis 1,0 mm aufweist, und die Zipfelabschnitte eine Dicke (T2), die dünner ist als die Dicke (T1) des Streifenhauptkörpers, und eine Breite (W2) von 0,5 mm bis 5,0 mm aufweisen.

10. Streifen (10) nach Anspruch 9, wobei die zweite Schicht (PL2, PL3) ein thermoplastisches Elastomer enthält, das zumindest eine Sorte enthält, die aus der Gruppe ausgewählt ist, die aus Styrol-Isopren-Styrol-Triblockcopolymer, Styrol-Isobutylen-Diblockcopolymer und epoxidiertem Styrol-Butadien-Styrol-Triblockcopolymer besteht, und zumindest eine Sorte einer Kautschukkomponente, die aus der Gruppe ausgewählt ist, die aus Naturkautschuk, Isoprenkautschuk und Butylkautschuk besteht, und

mehr als oder gleich 20 Masseprozent und weniger als oder gleich 90 Masseprozent der Kautschukkomponente bezogen auf die Gesamtheit des thermoplastischen Elastomers und der Kautschukkomponente enthalten ist.

11. Streifen (10) aus einer thermoplastischen Elastomerzusammensetzung zum spiralförmigen Wickeln auf zylindrische Trommel, um einen Innerliner (9) für einen Reifen (1) mit einer Form nahe bei einer Endquerschnittsform zu bilden,

wobei der Streifen (10) zusammengesetzt ist aus einer ersten Schicht (PL1), die auf der Reifeninnenseite angeordnet ist, und einer zweiten Schicht (PL2, PL3), die benachbart zu einer Karkasse (6) angeordnet ist, wobei die erste Schicht (PL1) und/oder die zweite Schicht (PL2, PL3) aus einer Elastomerzusammensetzung hergestellt ist/sind, die in einer Elastomerkomponente mehr als oder gleich 10 Masseprozent und weniger als oder gleich 100 Masseprozent eines auf Isobutylen basierenden modifizierten Copolymers enthält, welches ein auf Isobutylen basierendes Blockcopolymer ist, das aus einem Polymerblock (A), der hauptsächlich Isobutylen enthält, und einem Polymerblock (B), der hauptsächlich eine auf aromatischem Vinyl basierende Verbindung enthält, gebildet ist, und welches β-Pinen enthält, das in zumindest einem Block copolymerisiert ist, die zweite Schicht (PL2, PL3) aus einer Elastomerzusammensetzung hergestellt ist, die mehr als oder gleich 5 Masseprozent und weniger als oder gleich 80 Masseprozent des auf Isobutylen basierenden modifizierten Copolymers und Styrol-Isopren-Styrol-Blockpolymer und/oder Styrol-Isobutylen-Blockcopolymer enthält, wobei der Streifen (10) einen Streifenhauptkörper und an seinen beiden Seiten angeordnete Zipfelabschnitte aufweist, wobei der Streifenhauptkörper eine Dicke (T1) von 0,05 mm bis 1,0 mm aufweist, und die Zipfelabschnitte eine Dicke (T2), die dünner ist als die Dicke (T1) des Streifenhauptkörpers, und eine Breite (W2) von 0,5 mm bis 5,0 mm aufweisen.

12. Streifen (10) nach Anspruch 11, **dadurch gekennzeichnet, dass** das auf Isobutylen basierende modifizierte Copolymer β-Pinen mit einem Gehalt von 0,5 Gewichtsprozent bis 25 Gewichtsprozent enthält.

13. Streifen (10) nach Anspruch 11, wobei das auf Isobutylen basierende modifizierte Copolymer β-Pinen in einem Styrolblock von Styrol-Isobutylen-Styrol-Blockcopolymer oder Styrol-Isopren-Styrol-Blockcopolymer oder Styrol-Isobutylen-Blockcopolymer enthält.

14. Verfahren zum Herstellen eines Luftreifens (1), **dadurch gekennzeichnet, dass** der Streifen (10), wie er in Anspruch 9 oder 11 definiert ist, spiralförmig auf eine zylindrische Trommel gewickelt wird, um einen Innerliner (9) mit einer Form nahe bei der Endquerschnittsform zur Anordnung auf einer Innenfläche eines Rohreifens zu formen, und der Rohreifen vulkanisiert wird, wobei der Streifen durch die Schritte hergestellt wird, die umfassen

(a) Extrudieren einer thermoplastischen Elastomerzusammensetzung mit einem Extruder (13), der einen Extruderhauptkörper und einen Extrusionskopf aufweist, um eine Bahn (12) mit einer horizontal langen, rechteckigen Querschnittsform zu bilden,
(b) Durchleiten der Bahn (12) zwischen ein Paar Formwalzen (14A, 14B) und Übertragen einer Form der Formwalzen (14A, 14B) auf die Bahn (12), um den Streifen (10) mit den Zipfelabschnitten an seinen Enden zu bilden, und
(c) Abnehmen des Streifens (10) von den Formwalzen (14A, 14B).

## Revendications

1. Bande (10) d'une composition élastomère thermoplastique destinée à être enroulée en spirale sur un tambour cylindrique pour former un doublage intérieur (9) pour un pneumatique (1) ayant une forme proche d'une forme de section finie,
la bande (10) étant composée d'un empilement de couches (PL) d'une première couche (PL1) faite d'une composition élastomère thermoplastique contenant 0,1 parties en masse à 50 parties en masse d'un dérivé organique d'argile minérale par rapport à 100 parties en masse d'un composant élastomère fait de copolymère tribloc styrène-isobutylène-styrène, et d'une seconde couche (PL2, PL3) faite d'une composition élastomère thermoplastique contenant au moins un copolymère parmi un copolymère tribloc styrène-isoprène-styrène et un copolymère dibloc styrène-isobutylène,
ladite bande (10) ayant un corps principal de bande et des portions en forme d'oreilles disposées sur ses côtés opposés, ledit corps principal de bande ayant une épaisseur (T1) de 0,05 mm à 1,0 mm, et lesdites portions en forme d'oreilles ayant une épaisseur (T2) plus mince que l'épaisseur (T1) dudit corps principal de bande et une largeur (W2) de 0,5 mm à 5,0 mm.

**2.** Bande (10) selon la revendication 1, dans laquelle ledit copolymère tribloc styrène-isoprène-styrène contient un composant styrène à raison de 10 % en masse à 30 % en masse.

**3.** Bande (10) selon la revendication 1 ou 2, dans laquelle ledit copolymère dibloc styrène-isobutylène contient un composant styrène à raison de 10 % en masse à 35 % en masse.

**4.** Bande (10) d'une composition élastomère thermoplastique destinée à être enroulée en spirale sur un tambour cylindrique pour former un doublage intérieur (9) pour un pneumatique (1) ayant une forme proche d'une forme de section finie,

la bande (10) étant composée d'un empilement de couches (PL) d'une première couche (PL1) faite d'une composition élastomère thermoplastique contenant 60 % en masse à 99,9 % en masse d'un copolymère tribloc styrène-isobutylène-styrène et 0,5 % en masse à 40 % en masse d'un copolymère styrène-anhydride maléique, et d'une seconde couche (PL2) faite d'une composition élastomère thermoplastique contenant un copolymère tribloc styrène-isoprène-styrène,

ladite bande ayant un corps principal de bande et des portions en forme d'oreilles disposées sur ses deux côtés, ledit corps principal de bande ayant une épaisseur (T1) de 0,05 mm à 1,0 mm, et lesdites portions en forme d'oreilles ayant une épaisseur (T2) plus mince que l'épaisseur (T1) dudit corps principal de bande et une largeur (W2) de 0,5 mm à 5,0 mm.

**5.** Bande (10) selon la revendication 4, dans laquelle ledit copolymère styrène-anhydride maléique contient une résine de base de copolymère styrène-anhydride maléique dans laquelle un composant styrène et un composant anhydride maléique ont un rapport molaire de 50/50 à 90/10 et le composant anhydride maléique a une valeur acide de 50 à 600.

**6.** Bande (10) selon la revendication 4 ou 5, dans laquelle ledit copolymère styrène-anhydride maléique contient une résine ester d'un copolymère styrène-anhydride maléique ayant un groupe monoester et un groupe acide monocarboxylique, ladite résine ester étant obtenue par estérification de ladite résine de base de copolymère styrène-anhydride maléique.

**7.** Bande (10) selon l'une quelconque des revendications 4, 5 et 6, dans laquelle ledit copolymère styrène-anhydride maléique contient une solution aqueuse de sel ammonium de copolymère styrène-anhydride maléique, qui est une solution d'un sel ammonium de ladite résine de base de copolymère styrène-anhydride maléique.

**8.** Procédé pour fabriquer la bande (10) faite d'une composition élastomère thermoplastique telle que définie dans la revendication 1 ou 4, comprenant les étapes consistant à :

(b) extruder un élastomère thermoplastique par une extrudeuse (13) ayant un corps principal d'extrudeuse et une tête d'extrusion pour former une feuille (12) ayant une forme de section transversale rectangulaire allongée en sens horizontal ;
(b) faire passer la feuille (12) entre une paire de rouleaux-matrices (14A, 14B) et transférer une forme des rouleaux-matrices (14A-14B) sur ladite feuille (12) pour former la bande (10) ayant les portions en forme d'oreilles sur ses extrémités ; et
(c) détacher ladite bande (10) depuis les rouleaux-matrices (14A, 14B).

**9.** Bande (10) d'une composition polymère destinée à être enroulée en spirale sur un tambour cylindrique pour former un doublage intérieur (9) pour un pneumatique (1) ayant une forme proche d'une forme de section finie,

ladite bande (10) étant composée d'un empilement de couches (PL) d'une première couche (PL1) d'une feuille polymère (12) d'une composition polymère contenant une quantité supérieure ou égale à 0,1 parties en masse et inférieure ou égale à 5 parties en masse de soufre par rapport à 100 parties en masse d'un composant polymère contenant une quantité supérieure ou égale à 5 % en masse et inférieure ou égale à 40 % en masse d'un copolymère tribloc styrène-isobutylène-styrène et une quantité supérieure ou égale à 60 % en masse et inférieure ou égale à 95 % en masse d'au moins une sorte de composant caoutchouc sélectionné parmi le groupe comprenant caoutchouc naturel, caoutchouc isoprène et caoutchouc butyle, et d'une seconde couche (PL2, PL3) faite d'une composition élastomère thermoplastique,

ladite bande (10) ayant un corps principal de bande et des portions en forme d'oreilles disposées sur ses deux côtés, ledit corps principal de bande ayant une épaisseur (T1) de 0,05 mm à 1,0 mm, et lesdites portions en forme d'oreilles ayant une épaisseur (T2) plus mince que l'épaisseur (T1) dudit corps principal de bande et une largeur (W2) de 0,5 mm à 5,0 mm.

**10.** Bande (10) selon la revendication 9, dans laquelle ladite seconde couche (PL2, PL3) contient un élastomère thermoplastique contenant au moins une sorte sélectionnée parmi le groupe comprenant copolymère tribloc styrène-isoprène-styrène, copolymère dibloc styrène-isobutylène et copolymère tribloc styrène-butadiène-styrène époxydé, et au moins une sorte de composant caoutchouc sélectionné parmi le groupe comprenant caoutchouc naturel, caoutchouc isoprène et caoutchouc au butyle, et
une quantité supérieure ou égale à 20 % en masse et inférieure ou égale à 90 % en masse dudit composant caoutchouc est contenue par rapport à la quantité totale dudit élastomère thermoplastique et dudit composant caoutchouc.

**11.** Bande (10) d'une composition élastomère thermoplastique destinée à être enroulée en spirale sur un tambour cylindrique pour former un doublage intérieur (9) pour un pneumatique (1) ayant une forme proche d'une forme de section finie,
la bande (10) étant composée d'une première couche (PL1) disposée sur l'intérieur du pneumatique et d'une seconde couche (PL2, PL3) disposée adjacente à une carcasse (6),
l'une au moins de ladite première couche (PL1) et de ladite seconde couche (PL2, PL3) étant faite d'une composition élastomère contenant, dans un composant élastomère, une quantité supérieure ou égale à 10 % en masse et inférieure ou égale à 100 % en masse d'un copolymère modifié à base d'isobutylène qui est un copolymère bloc à base d'isobutylène formé d'un bloc polymérique (A) contenant principalement de l'isobutylène et d'un bloc polymérique (B) contenant principalement un composé aromatique à base de vinyle qui contient du $\beta$-pinène copolymérisé dans au moins un bloc,
ladite seconde couche (PL2, PL3) étant faite d'une composition élastomère contenant une quantité supérieure ou égale à 5 % en masse et inférieure ou égale à 80 % en masse dudit copolymère modifié à base d'isobutylène et au moins un copolymère parmi un copolymère bloc styrène-isoprène-styrène et un copolymère bloc styrène-isobutylène,
ladite bande (10) ayant un corps principal de bande et des portions en forme d'oreilles disposées sur ses deux côtés, ledit corps principal de bande ayant une épaisseur (T1) de 0,05 mm à 1,0 mm, et lesdites portions en forme d'oreilles ayant une épaisseur (T2) plus mince que l'épaisseur (T1) dudit corps principal de bande et une largeur (W2) de 0,5 mm à 5,0 mm.

**12.** Bande (10) selon la revendication 11, **caractérisée en ce que** ledit copolymère modifié à base d'isobutylène contient du $\beta$-pinène à raison de 0,5 % en poids à 25 % en poids.

**13.** Bande (10) selon la revendication 11, dans laquelle ledit copolymère modifié à base d'isobutylène contient du $\beta$-pinène dans un bloc styrène d'un copolymère parmi un copolymère bloc styrène-isobutylène-styrène, un copolymère bloc styrène-isoprène-styrène et un copolymère bloc styrène-isobutylène.

**14.** Procédé pour fabriquer un bandage pneumatique (1), **caractérisé en ce que** la bande (10) telle que définie dans la revendication 9 ou 11 est enroulée en spirale sur un tambour cylindrique pour mouler un doublage intérieur (9) ayant une forme proche d'une forme de section finie destinée à être disposée sur une surface intérieure d'un pneumatique brut, et le pneumatique brut est vulcanisé, dans lequel ladite bande est fabriquée par les étapes consistant à :

(a) extruder une composition élastomère thermoplastique par une extrudeuse (13) ayant un corps principal d'extrudeuse et une tête d'extrusion pour former une feuille (12) ayant une forme de section transversale rectangulaire allongée en sens horizontal,
(b) faire passer la feuille (12) entre une paire de rouleaux-matrices (14A, 14B) et transférer une forme des rouleaux-matrices (14A, 14B) sur ladite feuille (12) pour former la bande (10) ayant les portions en forme d'oreilles sur ses extrémités, et
(c) détacher ladite bande (10) depuis lesdits rouleaux-matrices (14A, 14B).

FIG.1

FIG.2

FIG.3

# FIG.4

(a)

(b)

(c)

(d)

FIG.5

(a)

(b)

# FIG.6

FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007291256 A
- JP 9165469 A
- JP 2010013646 A
- JP 2010100675 A
- WO 2008029781 A
- JP 2009220460 A
- JP 2000254980 A
- JP 2010058437 A
- JP 9019987 A
- JP 2011051320 A
- JP 2011057788 A
- JP 2008127443 A
- JP 62048704 A
- JP 6462308 B
- WO 2005033035 A
- JP 2010195969 A